# EUROPEAN PATENT APPLICATION

(11) **EP 4 557 205 A1**
(43) Date of publication of application: **21.05.2025**
(21) Application number: 23839467.0
(22) Date of filing: 28.06.2023
(51) Int. Cl.: G06Q 30/06, G06T 7/254

(54) **TRANSMISSION DEVICE, RECEPTION DEVICE, AND INFORMATION PROCESSING METHOD**

(30) Priority: 14.07.2022 JP 2022113225
(71) Applicant: Sony Semiconductor Solutions Corporation, Atsugi-shi, Kanagawa 243-0014 (JP); Sony Group Corporation, Tokyo 108-0075 (JP)
(72) Inventor: OKA, Mihori, Atsugi-shi, Kanagawa 243-0014 (JP); EKI, Ryoji, Atsugi-shi, Kanagawa 243-0014 (JP); WATANABE, Shota, Atsugi-shi, Kanagawa 243-0014 (JP); OURA, Miki, Atsugi-shi, Kanagawa 243-0014 (JP); ENDO, Kazuo, Atsugi-shi, Kanagawa 243-0014 (JP); MIYAZAWA, Katsuji, Tokyo 108-0075 (JP); ITO, Keisuke, Tokyo 108-0075 (JP)
(74) Representative: MFG Patentanwälte Meyer-Wildhagen Meggle-Freund Gerhard PartG mbB
(86) International application number: PCT/JP2023/023972
(87) International publication number: WO 2024/014293

(57) **Abstract**

A transmission device according to the present technology includes an image acquisition unit that acquires a first shelf image captured at a first time for a product shelf on which a product is displayed, and a second shelf image captured for the product shelf at a second time after the first time, a region specification unit that specifies a difference region between the first shelf image and the second shelf image, a cut-out processing unit that cuts out a partial image from the second shelf image so that the difference region is included, and a transmission processing unit that transmits the first shelf image and the partial image to a reception device.

## Description

### [Technical Field]

The present technology relates to a technical field of a transmission device that transmits captured images of products and a reception device that receives the images.

### [Background Art]

Retail stores are increasingly introducing systems to manage products in order to simplify work of employees and appropriately perform an operation.

For example, in PTL 1 below, images of display shelves are captured to identify items displayed on the shelves and grasp the status of out-of-stock items.

Such a function may be provided by a server device such as a cloud server, and when the method disclosed in PTL 1 is used, image recognition processing for detecting the status of out-of-stock items in the server device by transmitting captured images to the server device is executed.

### [Citation List]

### [Patent Literature]

[PTL 1]
JP 2020-126679A

### [Summary]

### [Technical Problem]

However, when considering that the server device provides the same functions to a plurality of stores, a problem arises that the amount of communication between a store terminal (or a camera) and the server device increases when captured images are transmitted to the server device. There is also a problem that a processing load on the server device increases, resulting in higher power consumption.

This technology is contrived in view of such problems, and an object thereof is to appropriately perform processing for recognizing the state of products while reducing a load on the server device.

### [Solution to Problem]

A transmission device according to the present technology includes an image acquisition unit that acquires a first shelf image captured at a first time for a product shelf on which a product is displayed, and a second shelf image captured for the product shelf at a second time after the first time, a region specification unit that specifies a difference region between the first shelf image and the second shelf image, a cut-out processing unit that cuts out a partial image from the second shelf image so that the difference region is included, and a transmission processing unit that transmits the first shelf image and the partial image to a reception device.

Thereby, the transmission device transmits the image of the product shelf to the reception device in order to issue various alerts in accordance with the state of the product displayed on the product shelf. The reception device then performs image recognition processing using the received images to recognize an out-of-stock state, an inappropriate display position state, or the like of products. At this time, transmitted data is reduced by transmitting only the difference region between the first and second shelf images.

### [Brief Description of Drawings]

[Fig. 1]

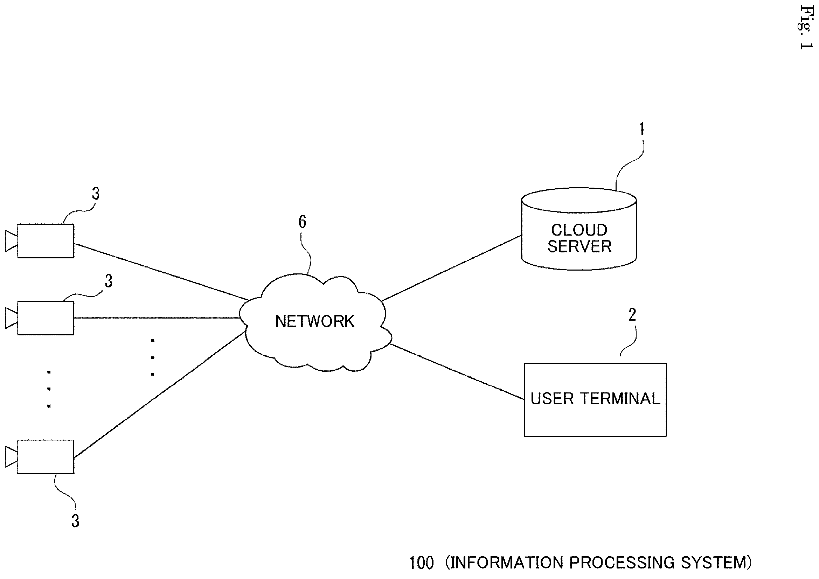

   Fig. 1 is a diagram showing an example of a configuration of an information processing system in a first embodiment.
[Fig. 2]

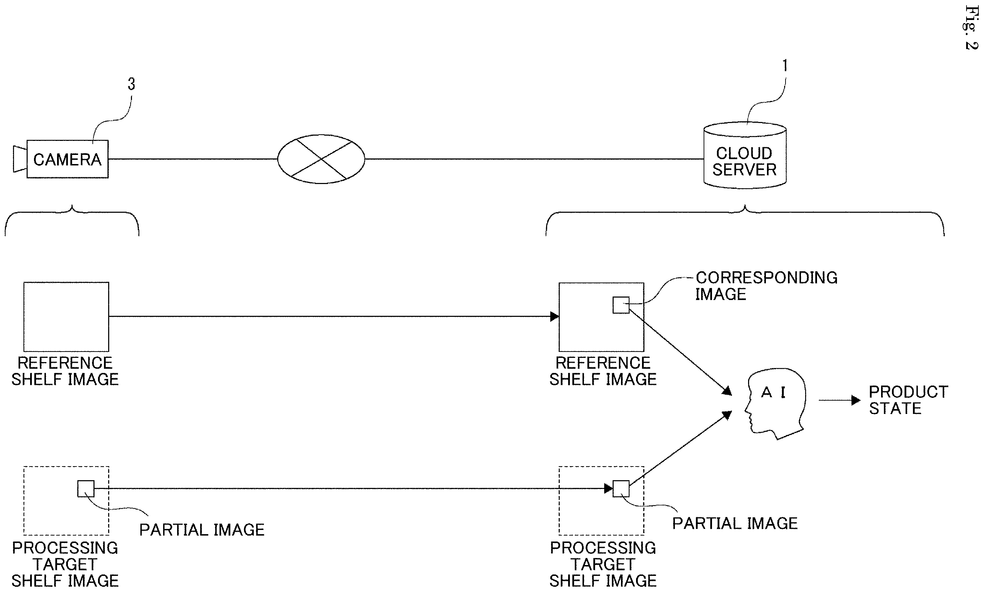

   Fig. 2 is a schematic diagram showing data transmitted from a camera to a cloud server.
[Fig. 3]

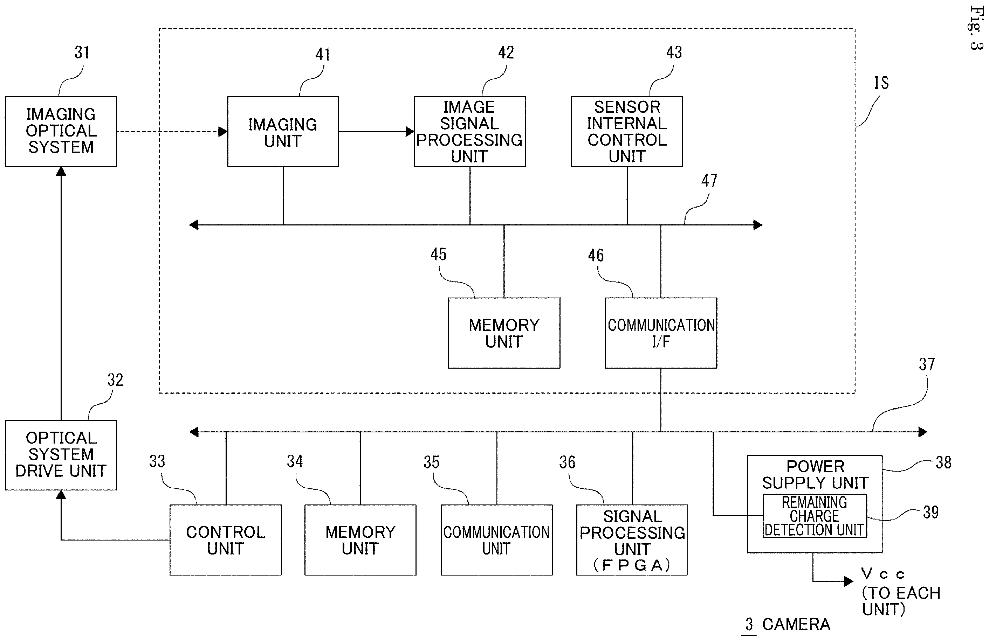

   Fig. 3 is a block diagram showing an example of an internal configuration of the camera in the first embodiment.
[Fig. 4]

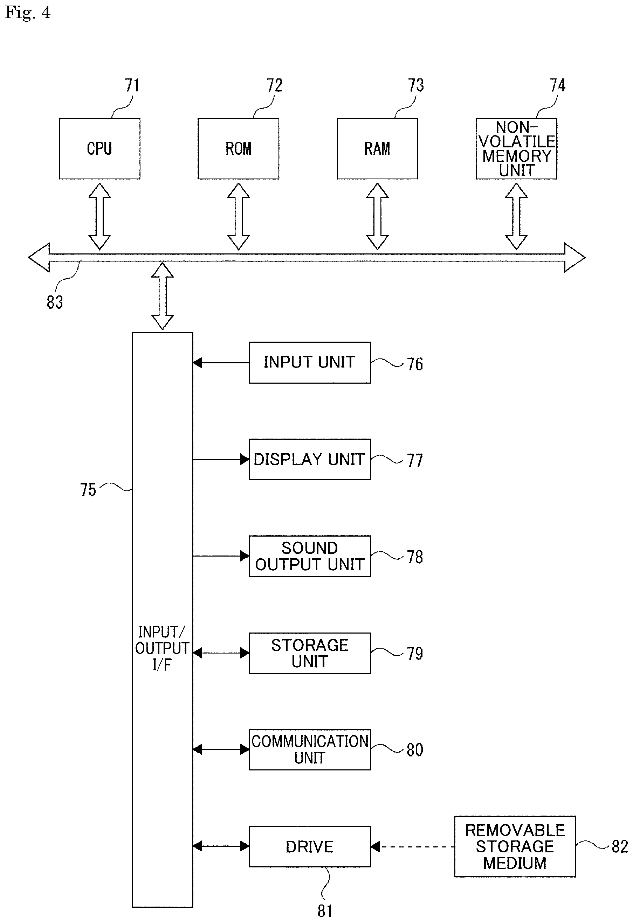

   Fig. 4 is a block diagram showing an example of a hardware configuration of an information processing device.
[Fig. 5]

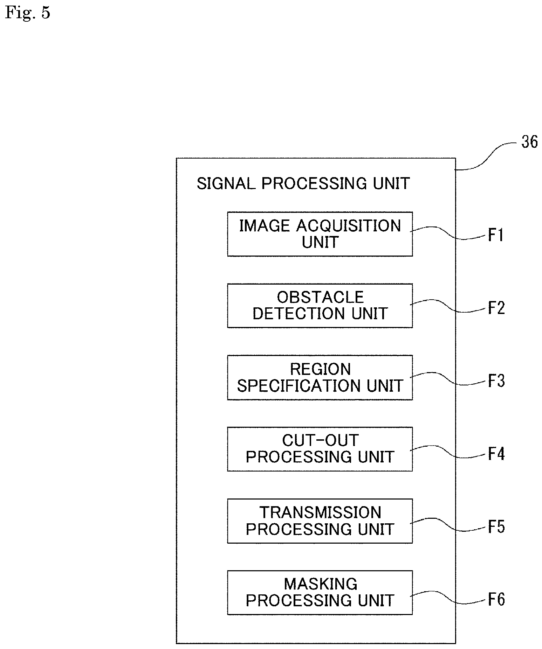

   Fig. 5 is a block diagram showing a functional configuration of a signal processing unit of the camera in the first embodiment.
[Fig. 6]

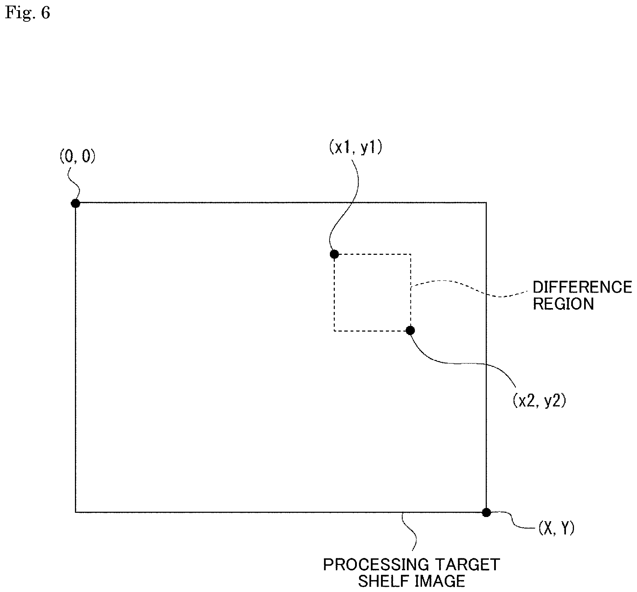

   Fig. 6 is a diagram showing a difference region in a processing target shelf image.
[Fig. 7]

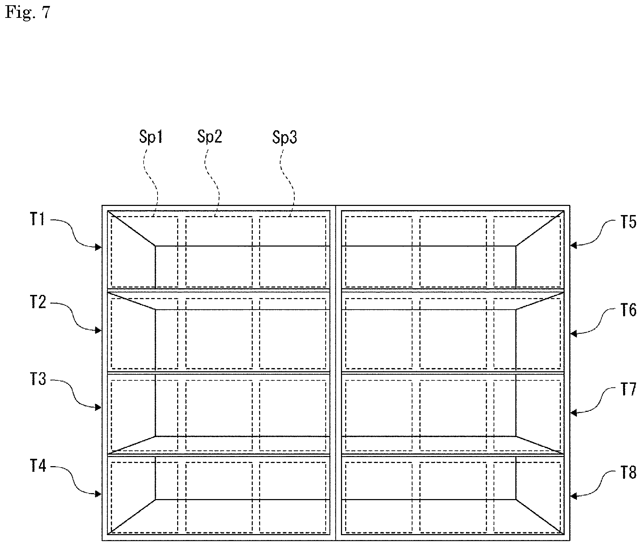

   Fig. 7 is a diagram showing a display space on a product shelf.
[Fig. 8]

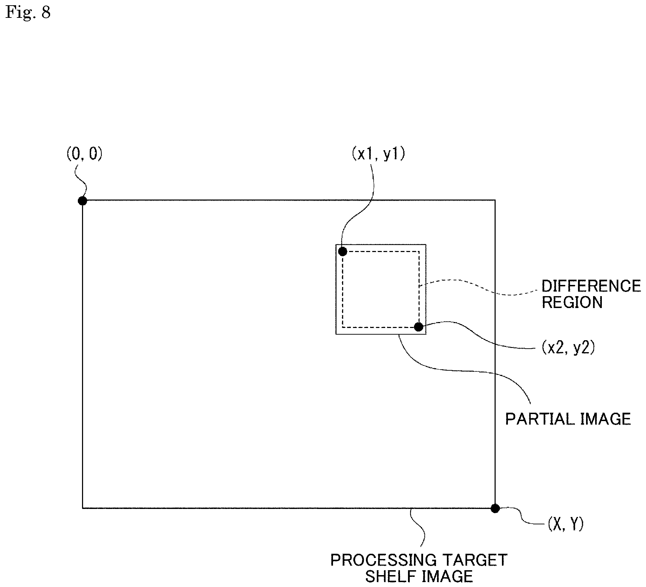

   Fig. 8 is a diagram showing a partial image that is cut out to include the difference region.
[Fig. 9]

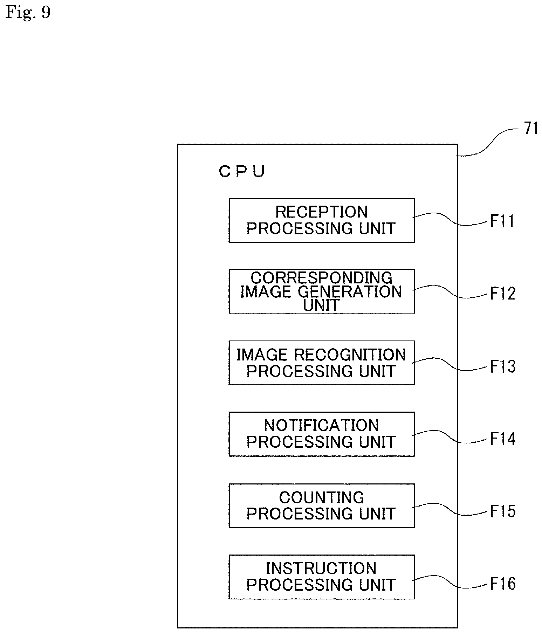

   Fig. 9 is a block diagram showing a functional configuration of a CPU of a cloud server in the first embodiment.
[Fig. 10]

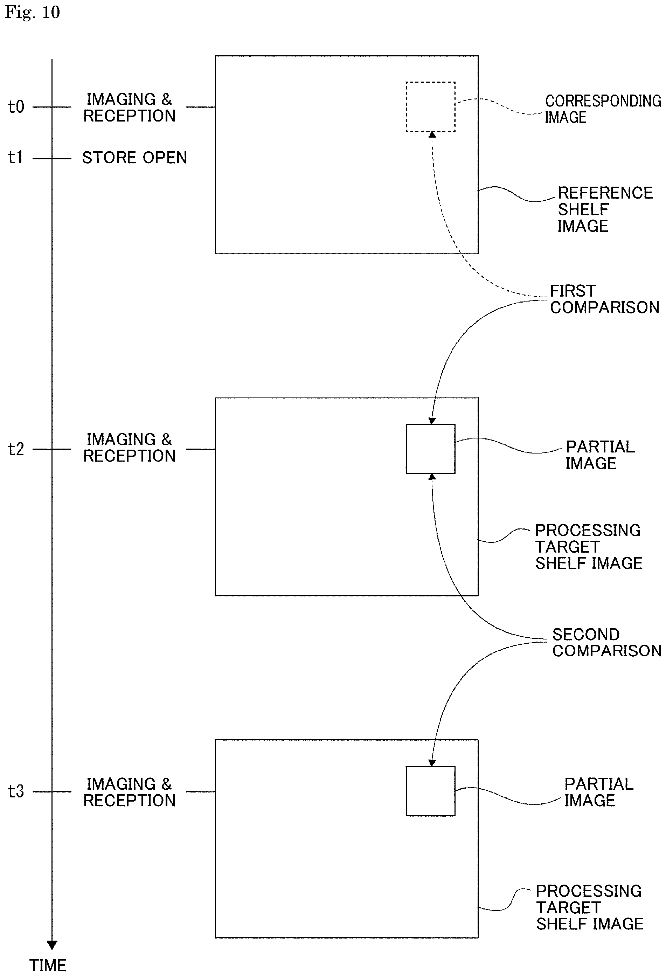

   Fig. 10 is a diagram showing the timing of capturing and receiving a reference shelf image and a processing target shelf image in time series.
[Fig. 11]

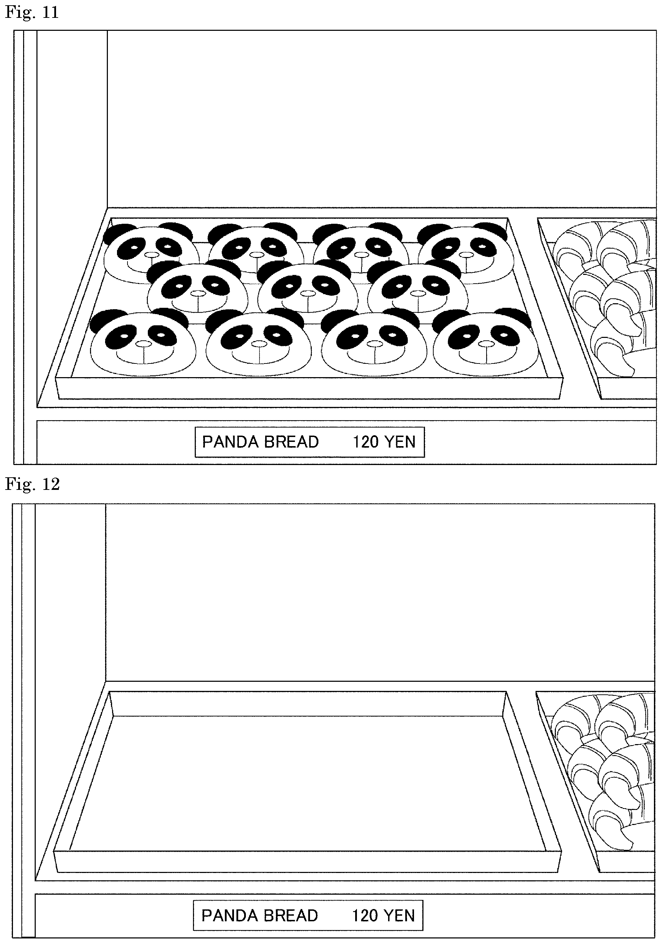

   Fig. 11 is a diagram showing a state where products have been replenished.
[Fig. 12]
   Fig. 12 is a diagram showing an out-of-stock state of products.
[Fig. 13]

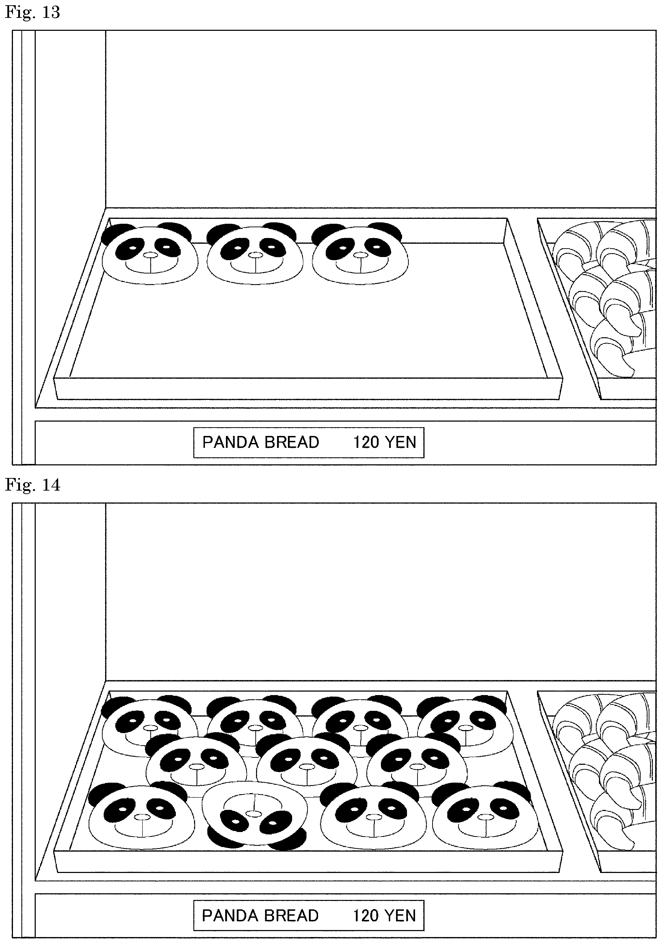

   Fig. 13 is a diagram showing a short supply state of products.
[Fig. 14]
   Fig. 14 is a diagram showing an inappropriate posture state of products.
[Fig. 15]

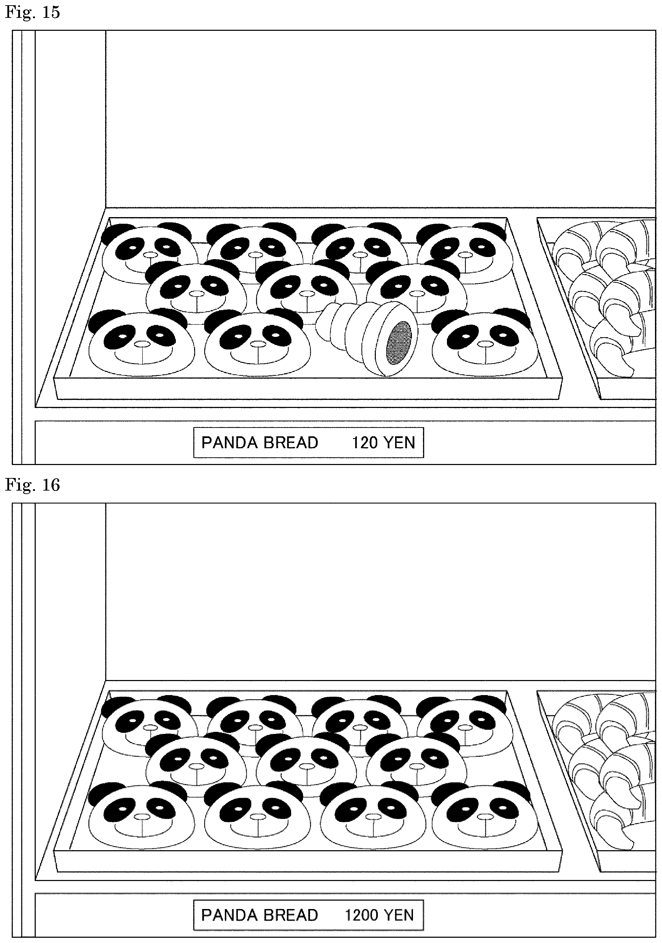

   Fig. 15 is a diagram showing an inappropriate display position state of products.
[Fig. 16]
   Fig. 16 is a diagram showing an inappropriate price tag state of products.
[Fig. 17]

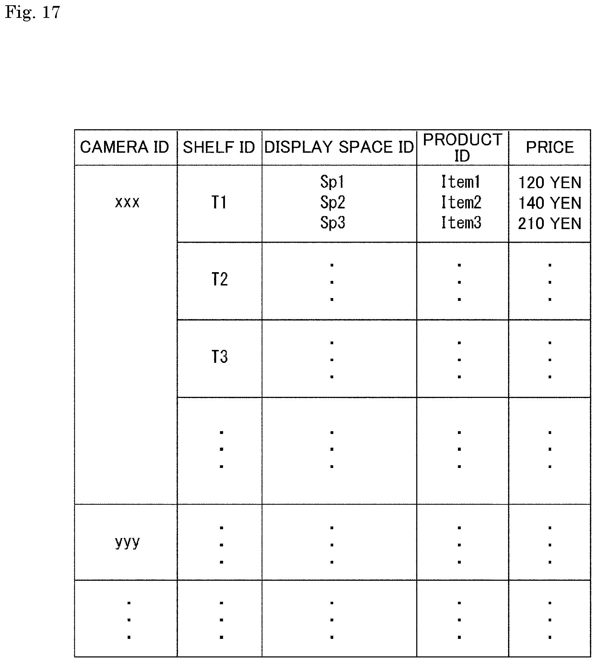

   Fig. 17 is a diagram showing an example of data on products stored in a database.
[Fig. 18]

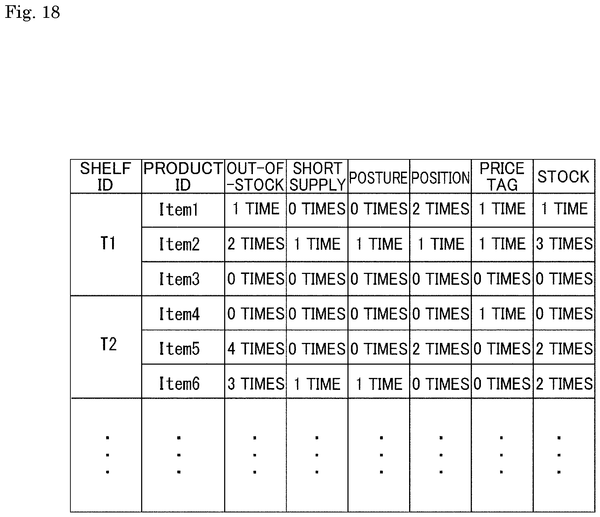

   Fig. 18 is a diagram showing an example of counting results of notification processing.
[Fig. 19]

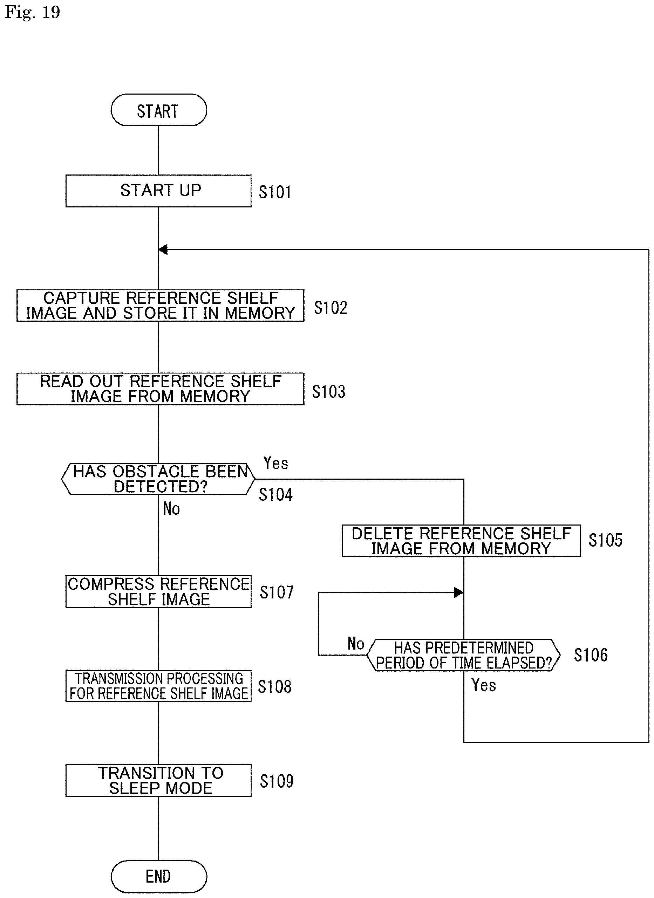

   Fig. 19 is a flowchart showing an example of processing executed by the camera before a store opens in the first embodiment.
[Fig. 20]

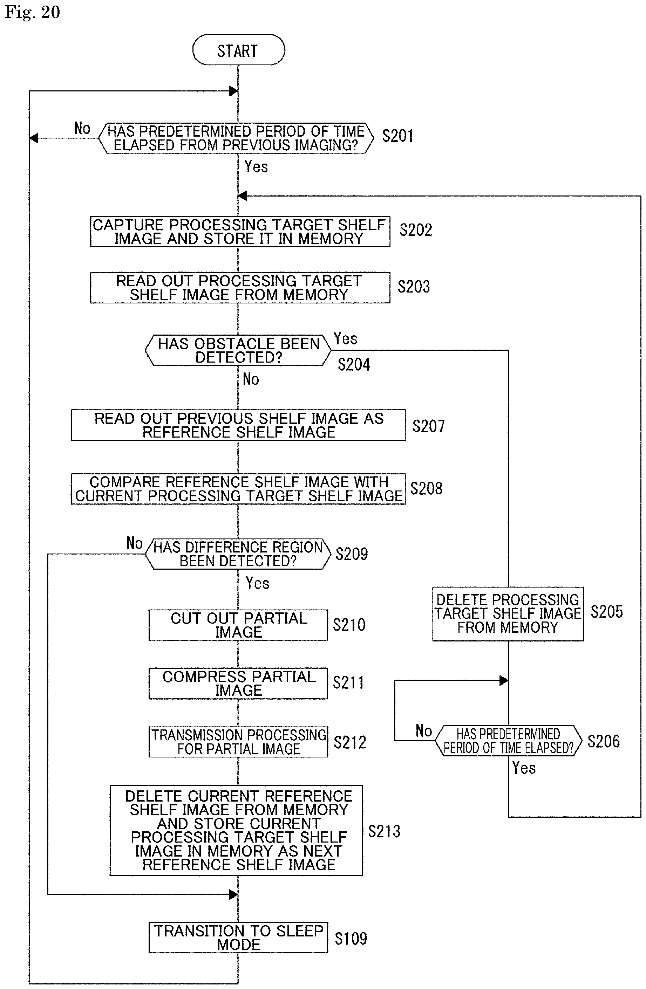

   Fig. 20 is a flowchart showing an example of processing executed by the camera after the store opens in the first embodiment.
[Fig. 21]

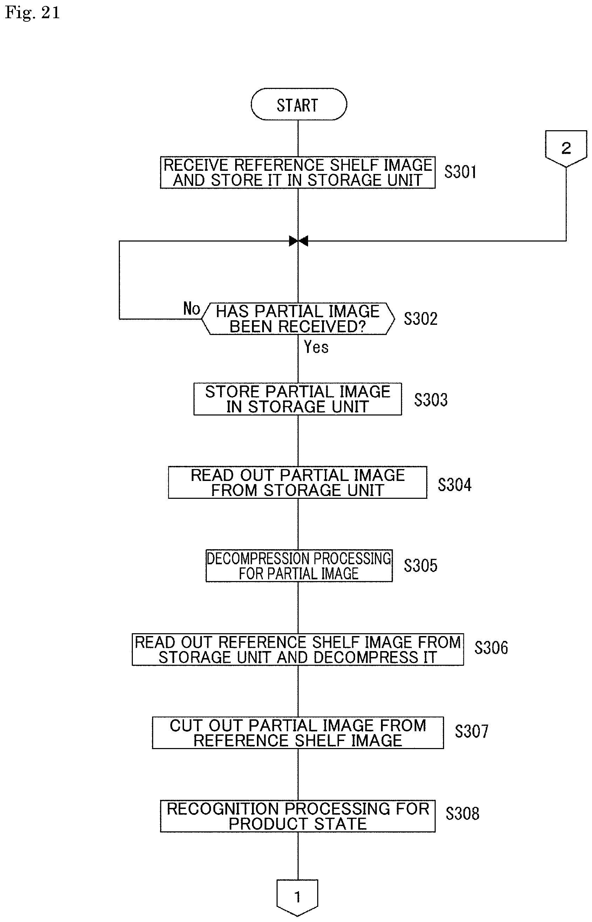

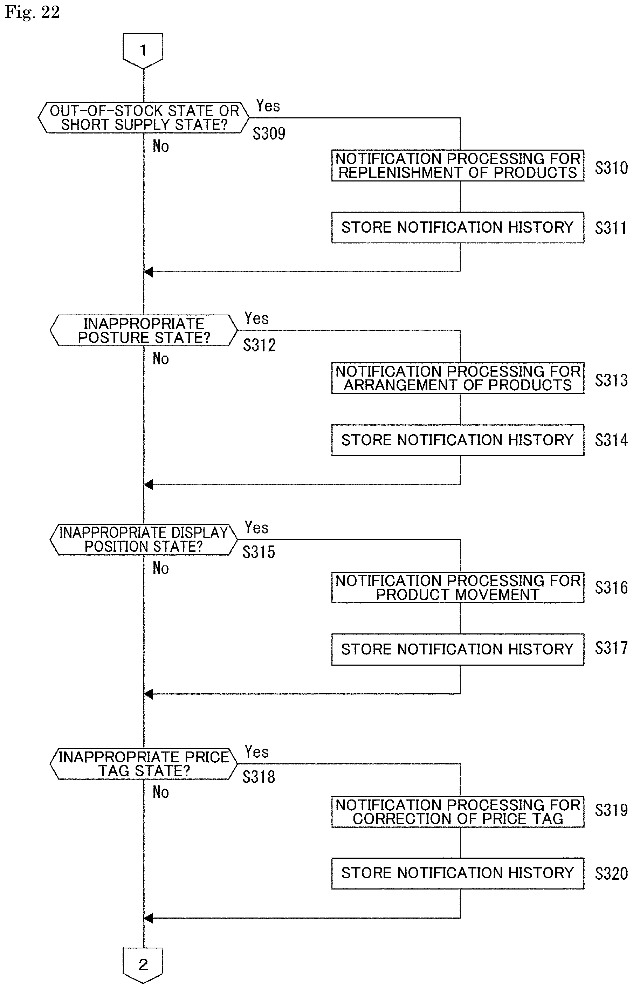

   Fig. 21 is a flowchart showing an example of processing executed by a cloud server in the first embodiment together with Fig. 22.
[Fig. 22]
   Fig. 22 is a flowchart showing an example of processing executed by the cloud server in the first embodiment together with Fig. 21, and is a flowchart showing processing executed following Fig. 21.
[Fig. 23]

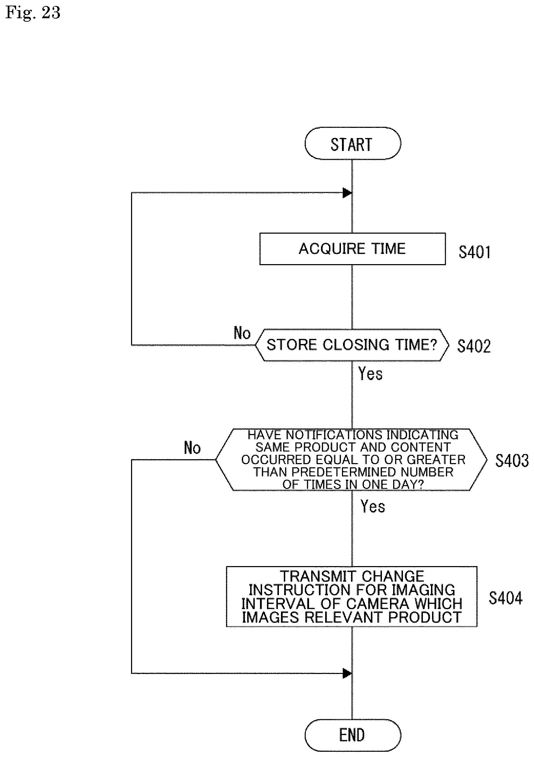

   Fig. 23 is a flowchart showing an example of processing executed by the cloud server to optimize an imaging interval in accordance with the number of notifications.
[Fig. 24]

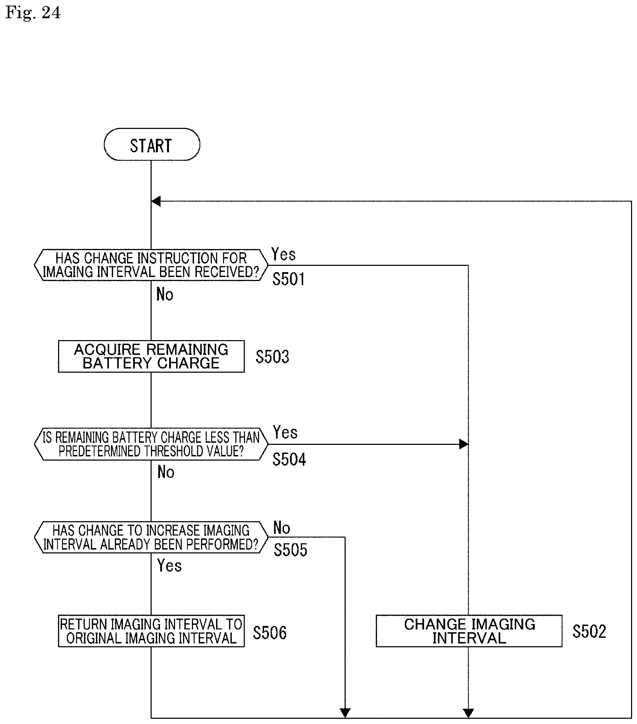

   Fig. 24 is a flowchart showing an example of processing executed by the camera to optimize an imaging interval.
[Fig. 25]

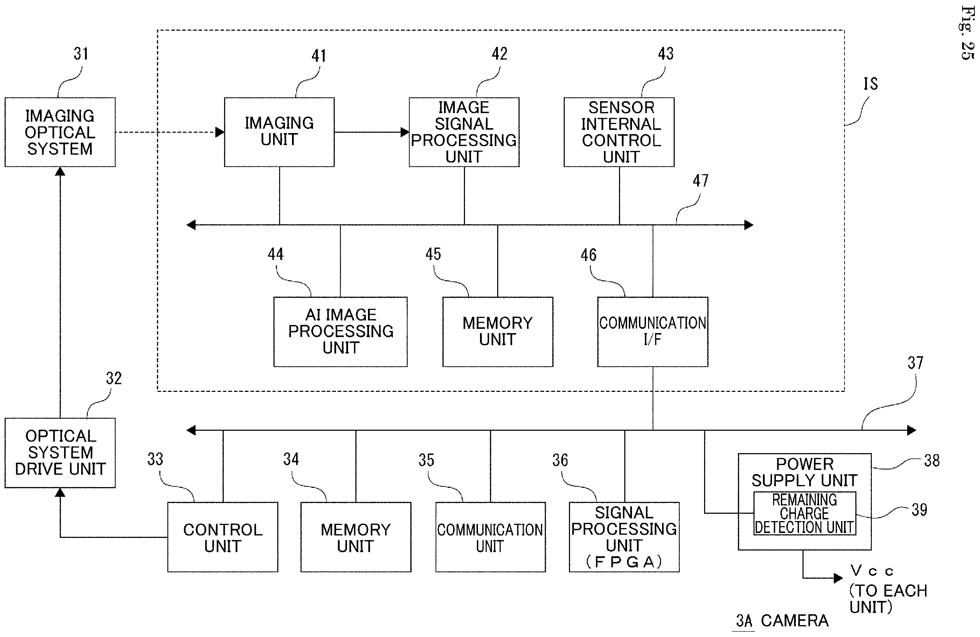

   Fig. 25 is a block diagram showing an example of an internal configuration of a camera in a second embodiment.
[Fig. 26]

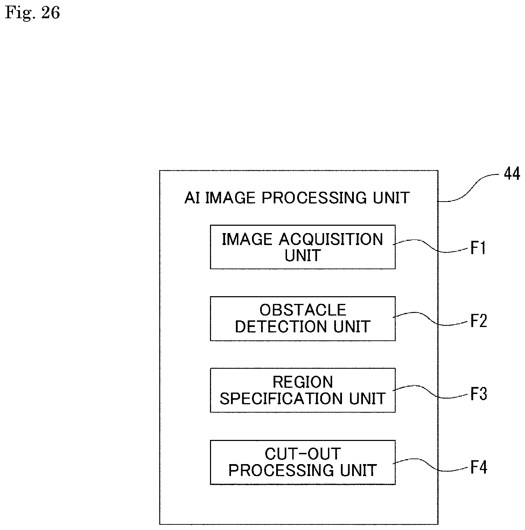

   Fig. 26 is a block diagram showing a functional configuration of an AI image processing unit of the camera in the second embodiment.
[Fig. 27]

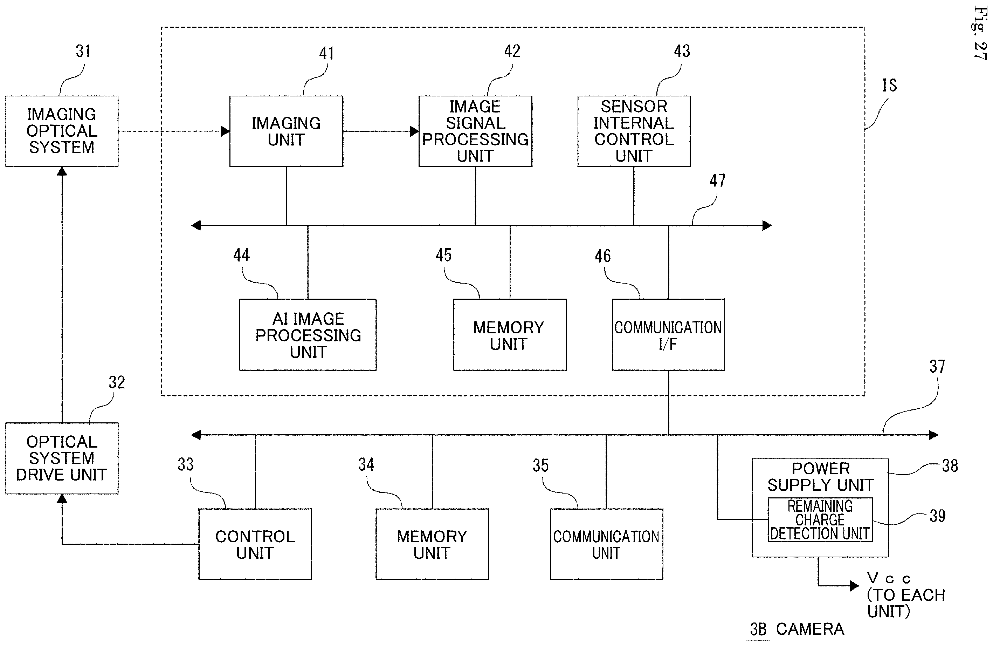

   Fig. 27 is a block diagram showing an example of an internal configuration of a camera in a third embodiment.
[Fig. 28]

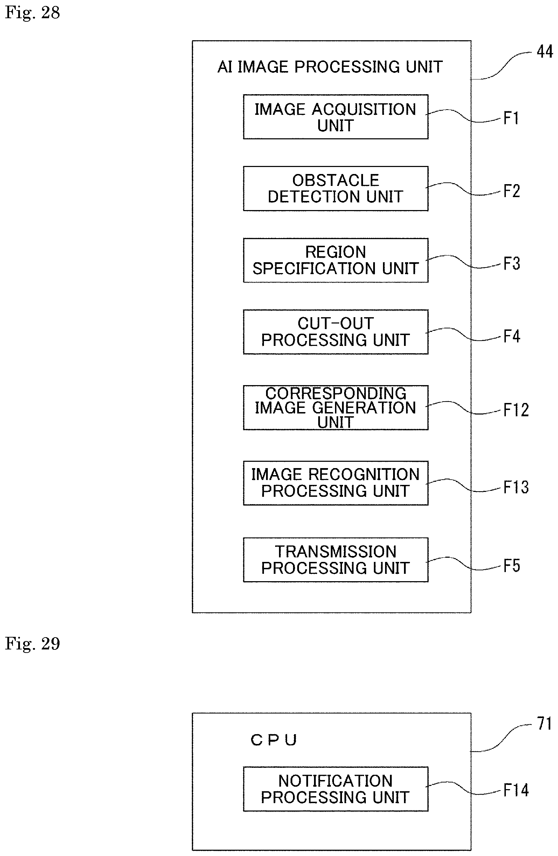

   Fig. 28 is a block diagram showing a functional configuration of an AI image processing unit of the camera in the third embodiment.
[Fig. 29]
   Fig. 29 is a block diagram showing a functional configuration of a CPU of a cloud server in the third embodiment.
[Fig. 30]

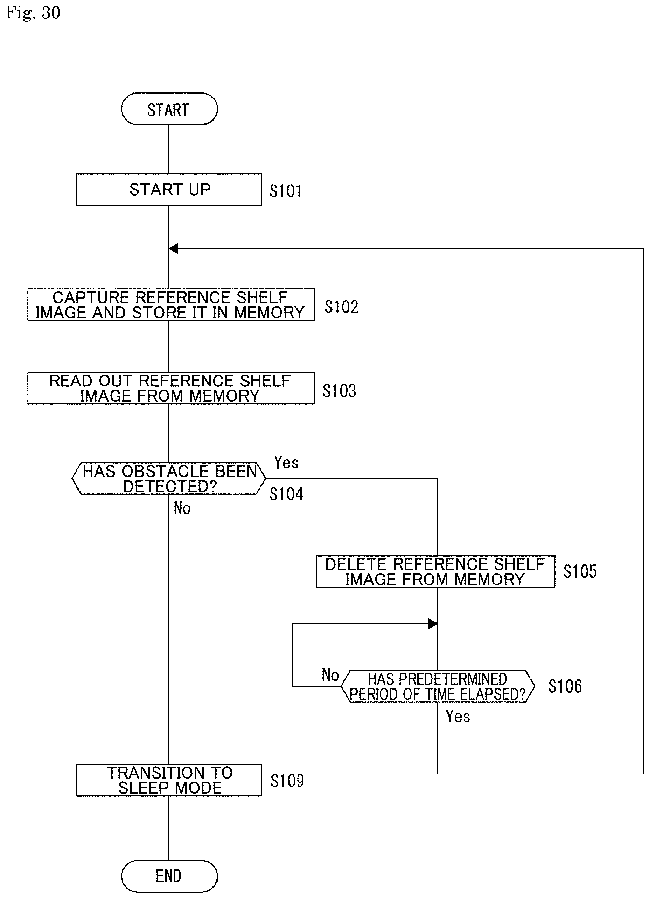

   Fig. 30 is a flowchart showing an example of the processing executed by the camera before a store opens in the third embodiment.
[Fig. 31]

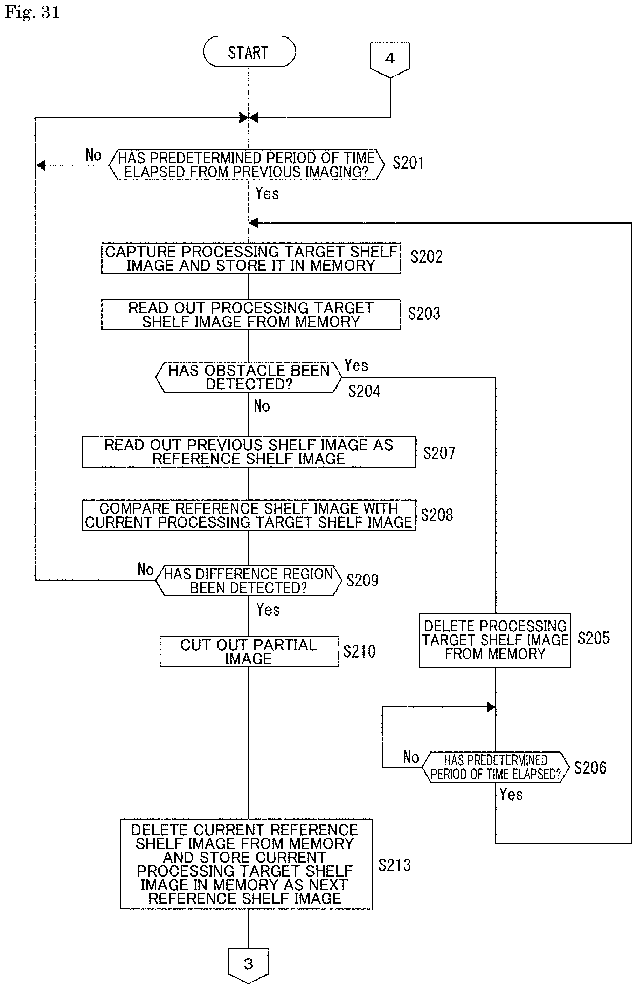

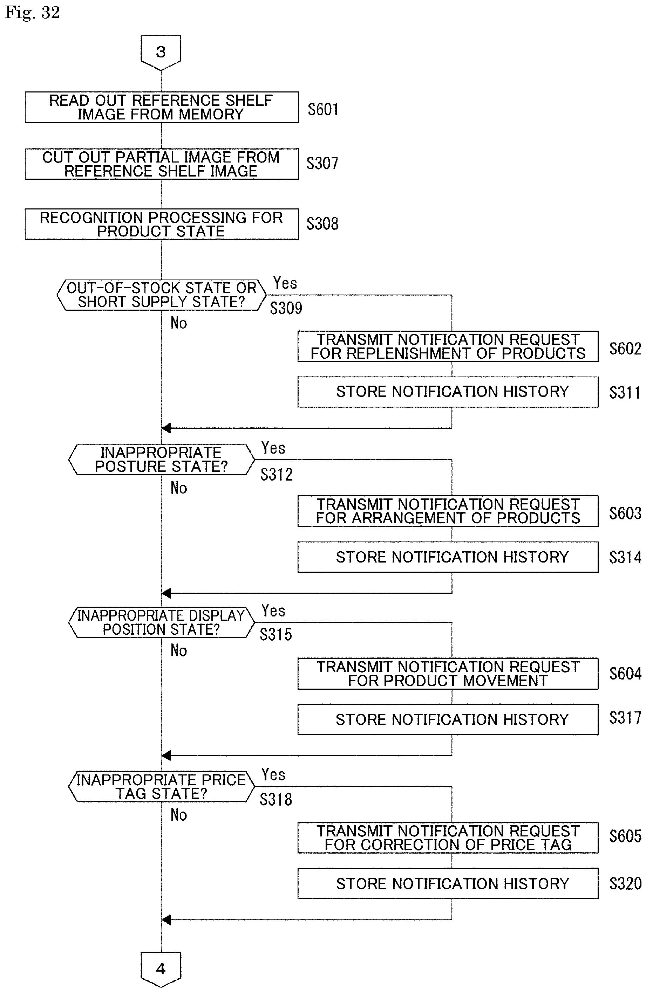

   Fig. 31 is a flowchart showing an example of processing executed by the camera after the store opens in the second embodiment together with Fig. 32.
[Fig. 32]
   Fig. 32 is a flowchart showing an example of processing executed by the camera after the store opens in the third embodiment together with Fig. 31, and is a flowchart of processing executed following Fig. 31.
[Fig. 33]

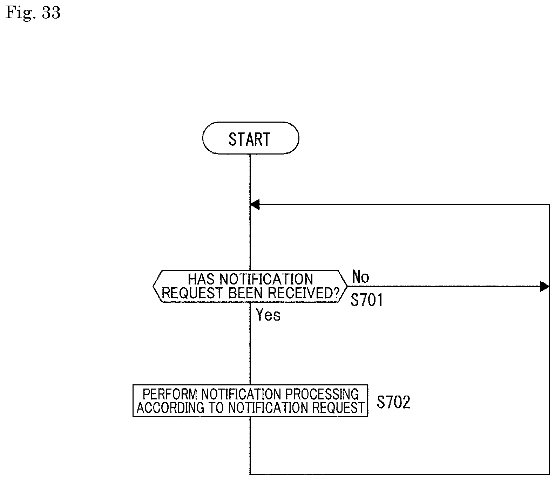

   Fig. 33 is a flowchart showing an example of processing executed by a CPU of a cloud server in the third embodiment.
[Fig. 34]

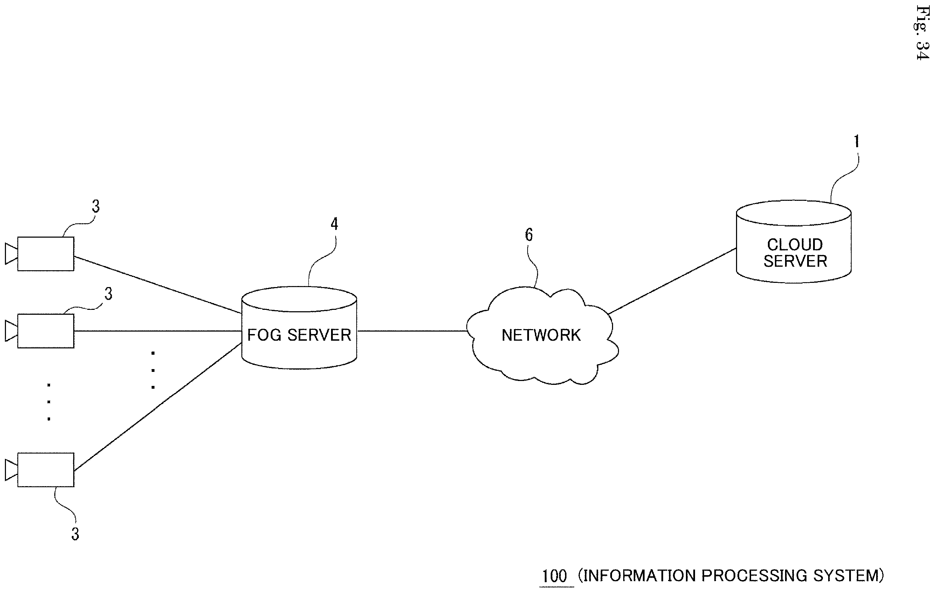

   Fig. 34 is a diagram showing an example of a configuration of an information processing system in a fourth embodiment.
[Fig. 35]

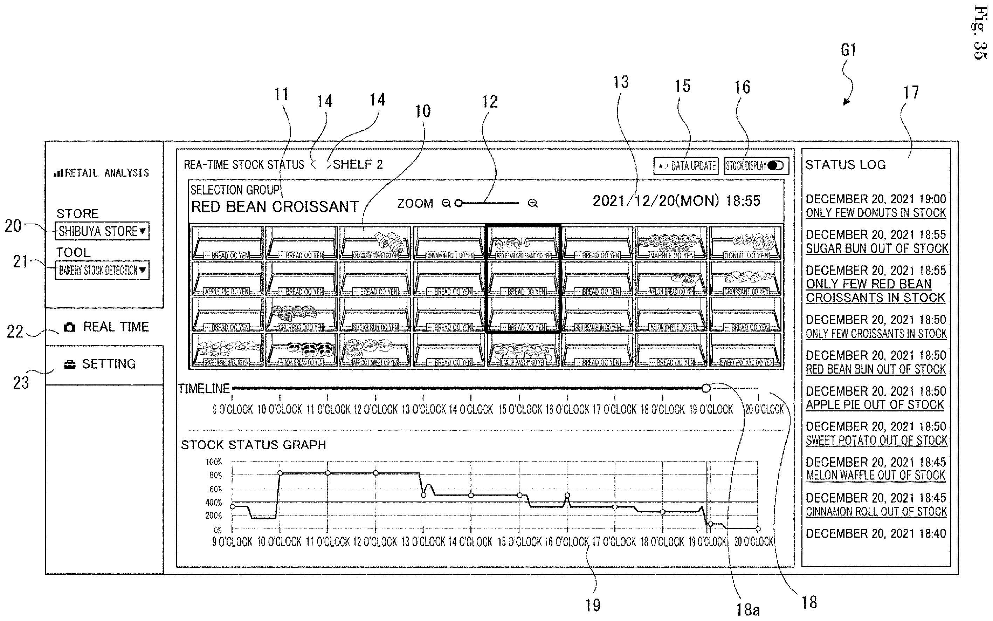

   Fig. 35 is a diagram showing an example of a real-time stock status screen in a management tool provided by a cloud server.
[Fig. 36]

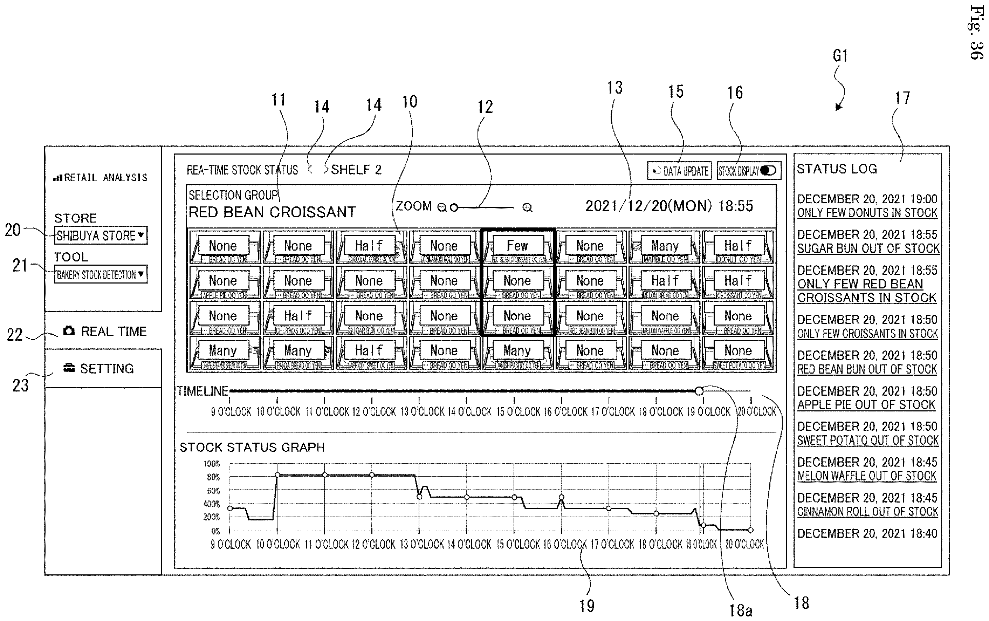

   Fig. 36 is a diagram showing an example of the real-time stock status screen in the management tool provided by the cloud server, and is a diagram showing a state where labels indicating stock status are displayed.
[Fig. 37]

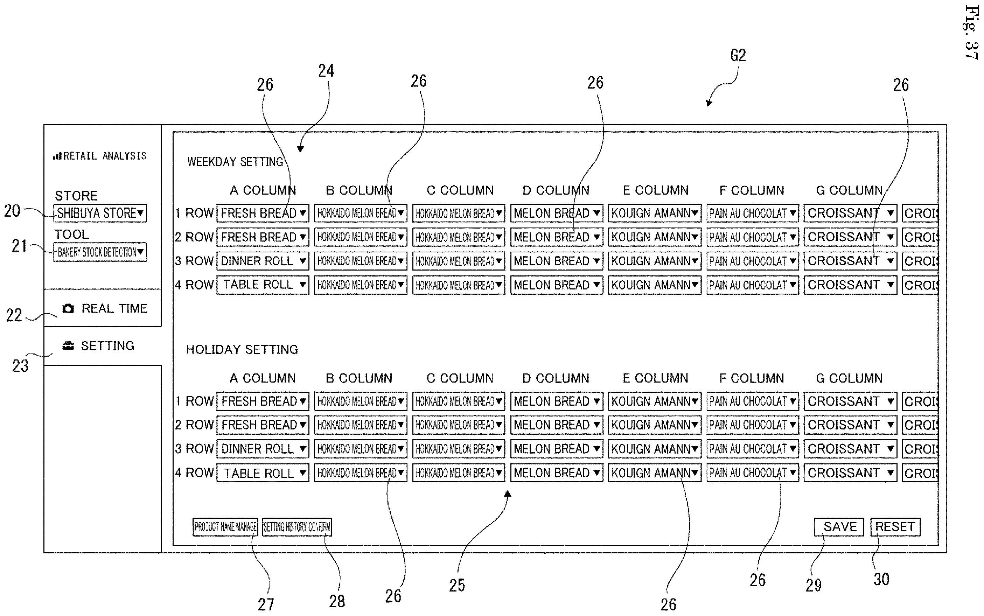

   Fig. 37 is a diagram showing an example of a setting screen in the management tool provided by the cloud server.
[Fig. 38]

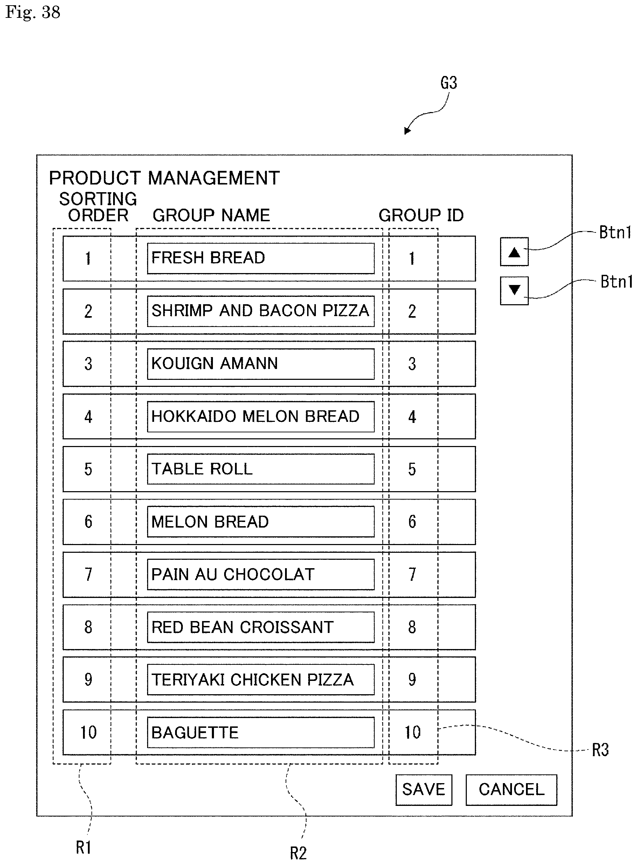

   Fig. 38 is a diagram showing an example of a product name management screen in the management tool provided by the cloud server.
[Fig. 39]

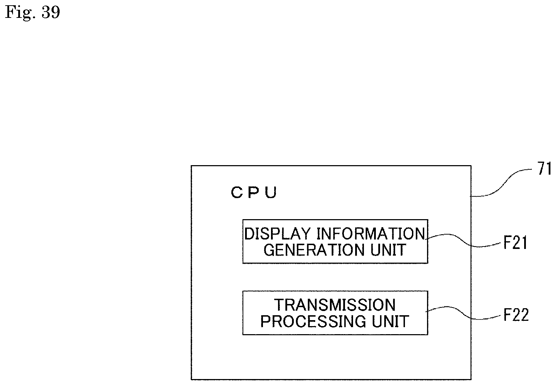

   Fig. 39 is a diagram showing a functional configuration of a CPU of a cloud server that provides a management tool.
[Fig. 40]

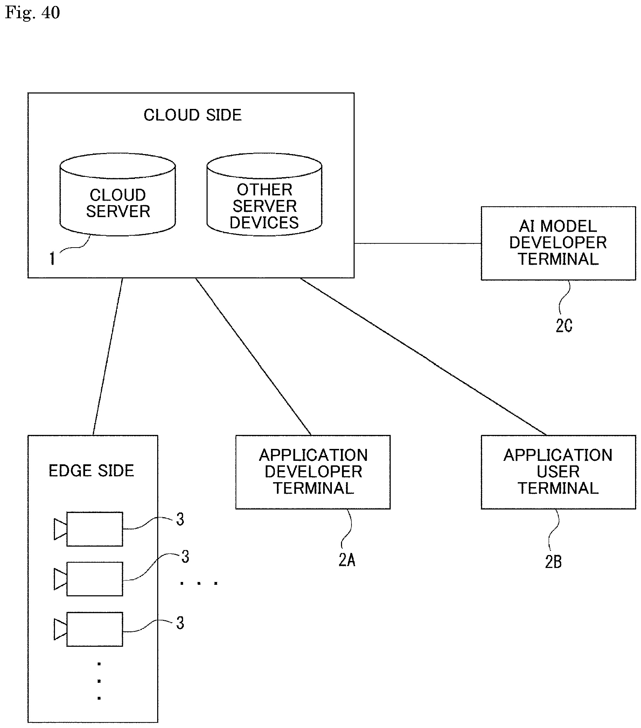

   Fig. 40 is a diagram showing each device that registers and downloads an AI model and an AI application via a marketplace function provided by a cloud-side information processing device.
[Fig. 41]

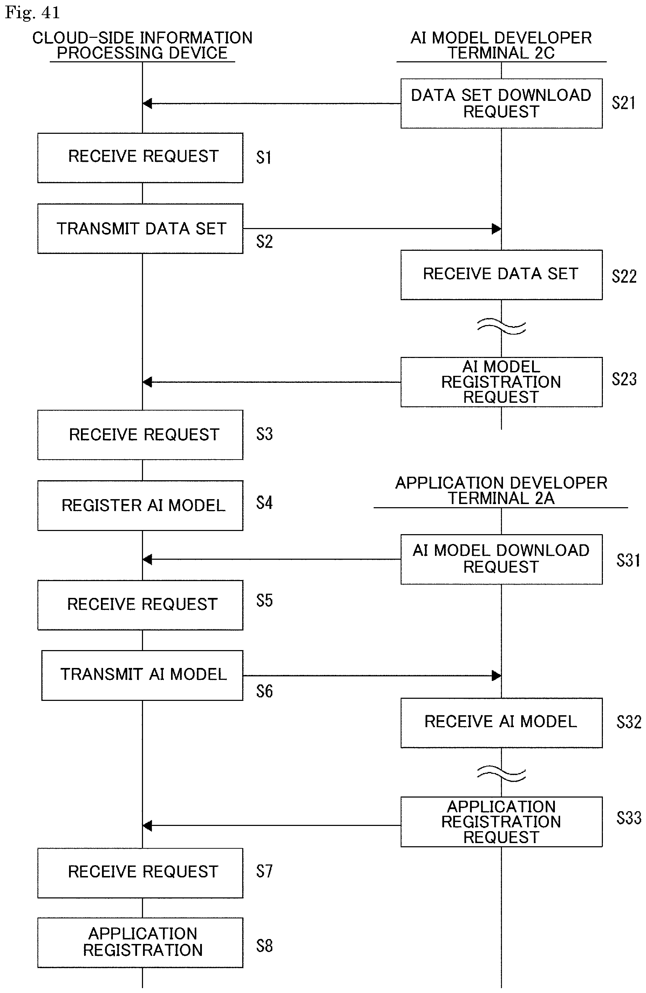

   Fig. 41 is a diagram showing an example of a flow of processing executed by each device when registering and downloading an AI model or an AI application via a marketplace function.
[Fig. 42]

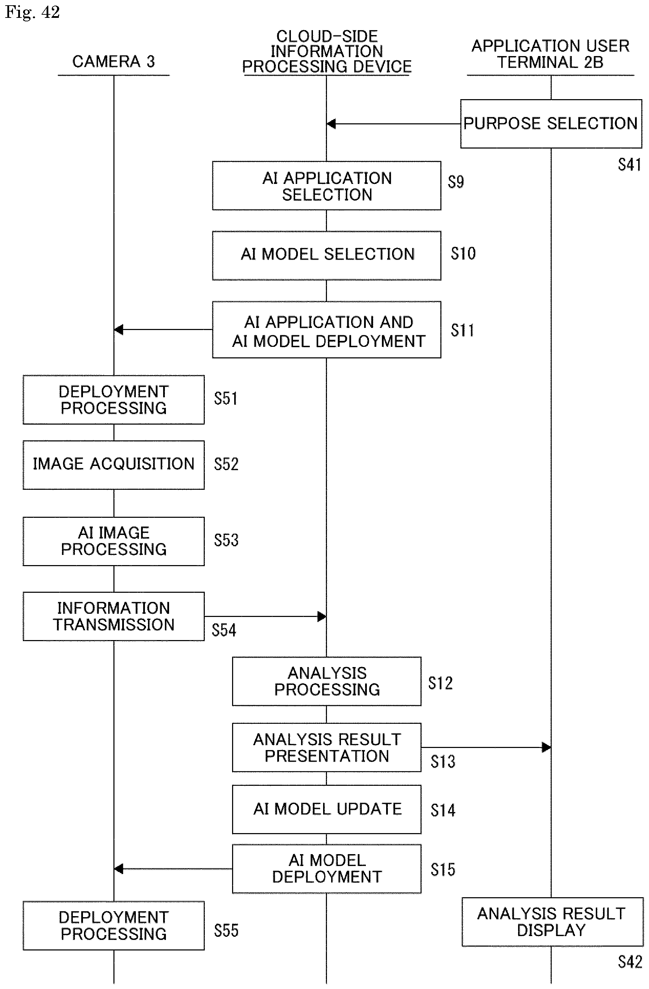

   Fig. 42 is a diagram showing an example of a flow of processing executed by each device when deploying an AI application or an AI model.
[Fig. 43]

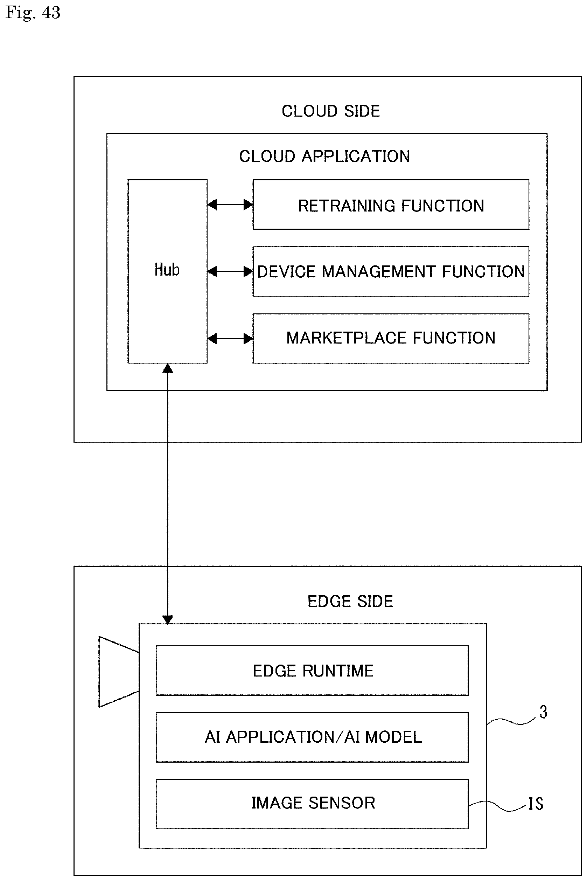

   Fig. 43 is a diagram showing a connection mode between a cloud-side information processing device and an edge-side information processing device.
[Fig. 44]

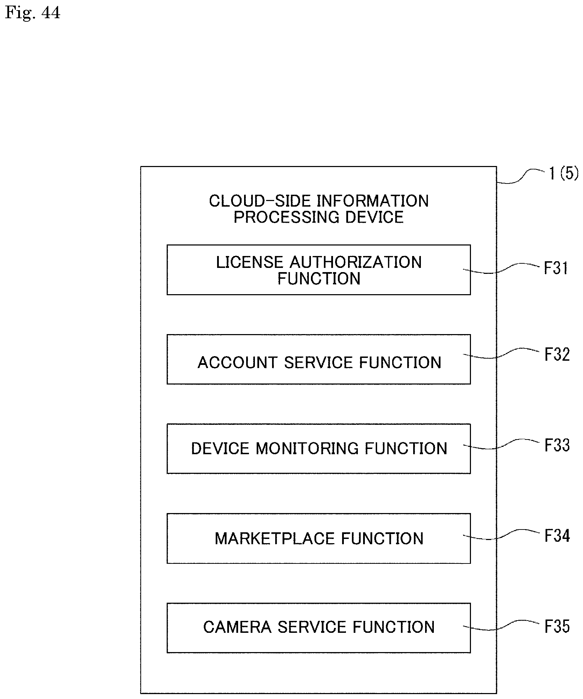

   Fig. 44 is a functional block diagram of the cloud-side information processing device.
[Fig. 45]

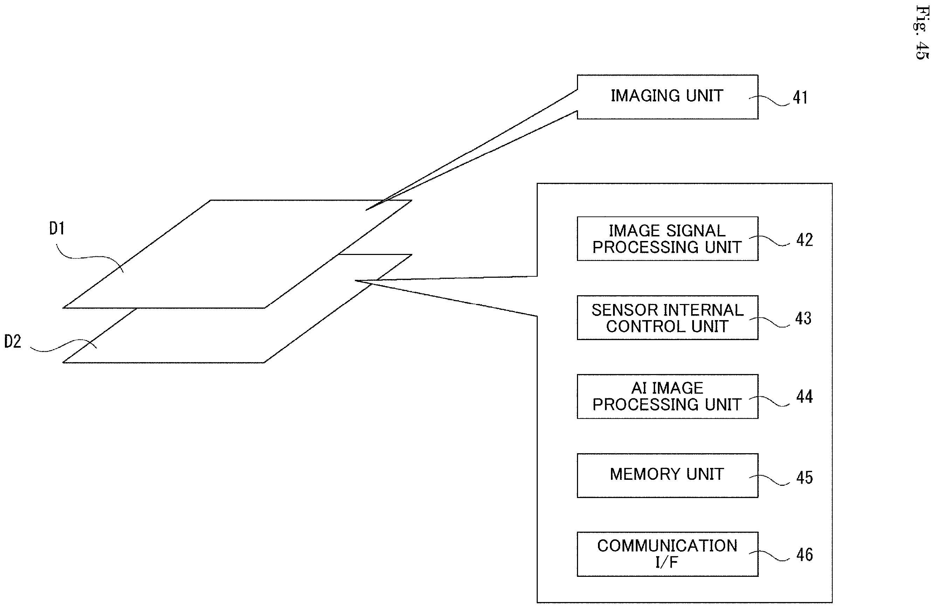

   Fig. 45 is a diagram showing an example of a configuration of an image sensor.
[Fig. 46]

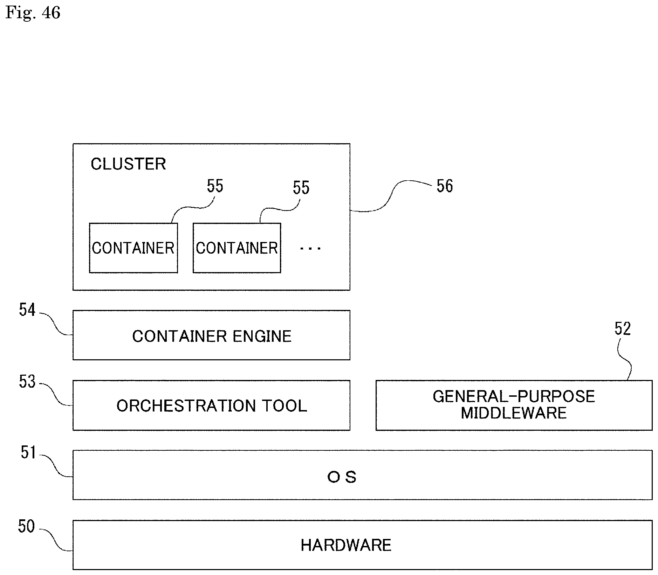

   Fig. 46 is a block diagram showing a software configuration of a camera.
[Fig. 47]

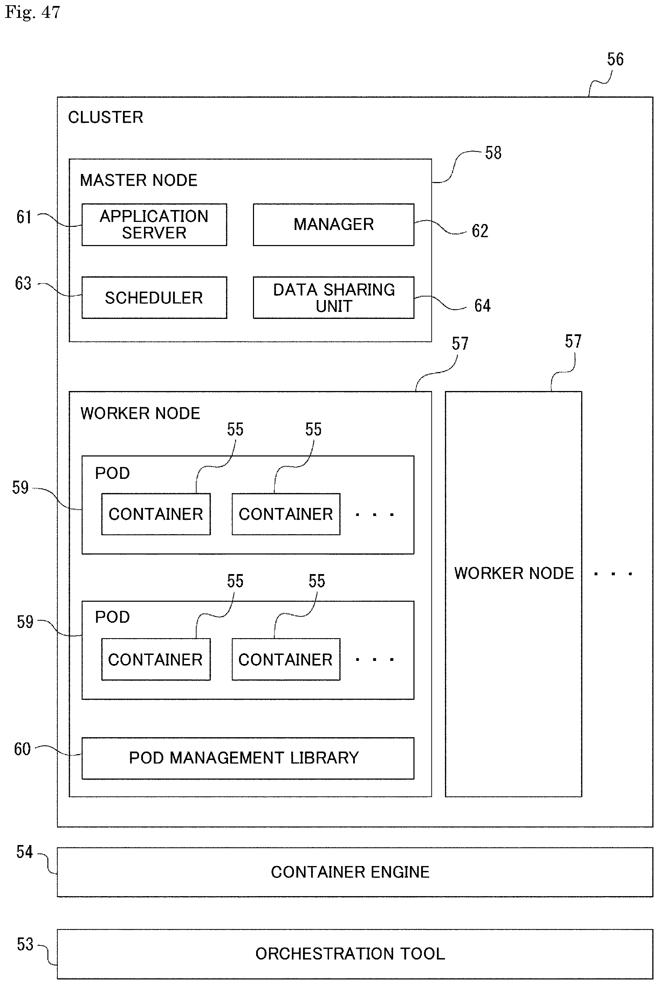

   Fig. 47 is a block diagram showing an operating environment of a container when container technology is used.
[Fig. 48]

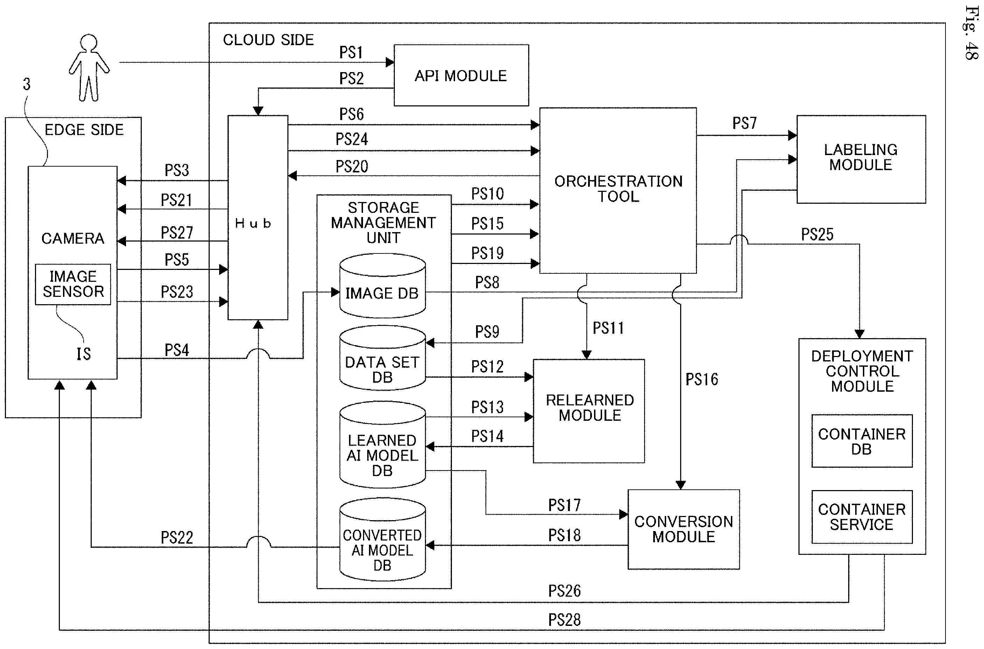

   Fig. 48 is a diagram showing a flow of processing in other descriptions.
[Fig. 49]

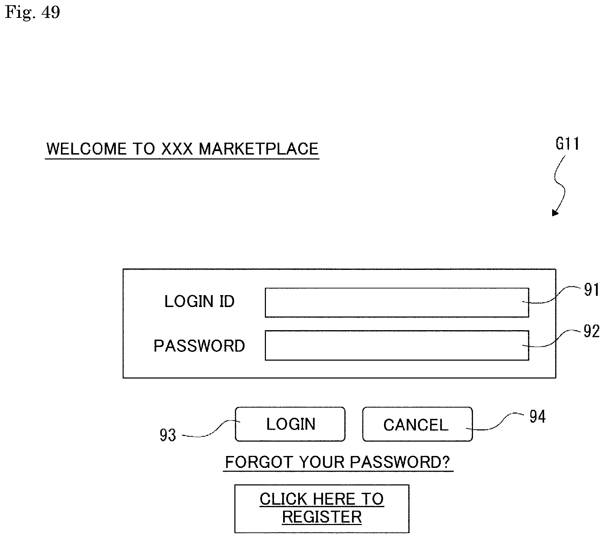

   Fig. 49 is a diagram showing an example of a login screen for logging in to a marketplace.
[Fig. 50]

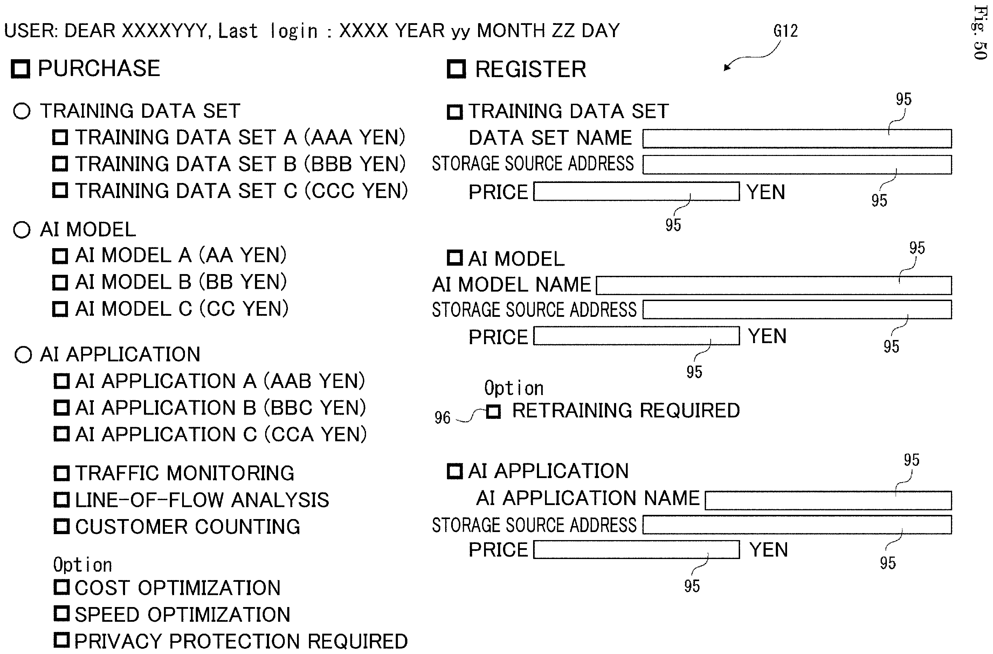

   Fig. 50 is a diagram showing an example of a developer screen presented to each developer who uses a marketplace.
[Fig. 51]

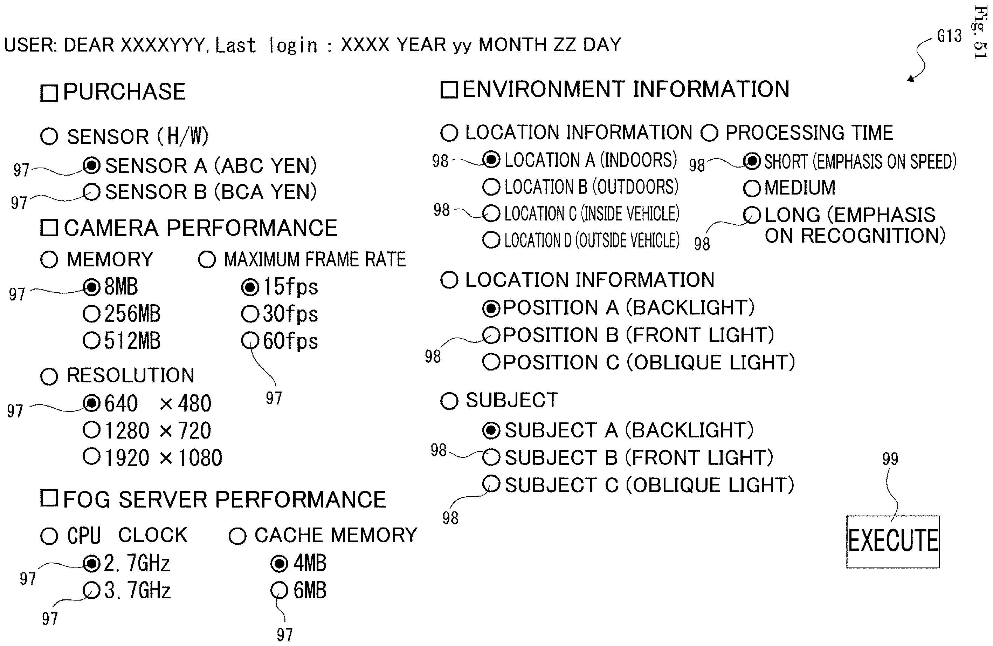

   Fig. 51 is a diagram showing an example of a user screen presented to an application user who uses a marketplace.

### [Description of Embodiments]

Hereinafter, embodiments of information processing devices according to the present technology will be described in the following order with reference to the accompanying drawings.
<1. Overall configuration of information processing system>
<2. Configuration of camera>
<3. Hardware configuration of information processing device>
<4. Functional configuration>
<5. Processing flow>
<5-1. Processing related to acquisition of reference shelf image>
<5-2. Processing related to acquisition of processing target shelf image>
<5-3. Processing for giving notifications>
<5-4. Processing for optimizing imaging interval in accordance with number of notifications>
<5-5. Processing for optimizing imaging interval>
<6. Second embodiment>
<7. Third embodiment>
<8. Fourth embodiment>
<9. User interface>
<10. Registration of AI model and AI application>
<11. Overview of function of system>
<12. Deployment of AI model and AI application>
<13. Others>
<14. Example of screen for marketplace>
<15. Conclusion>
<16. This technology>

### <1. Overall configuration of information processing system>

In this embodiment, an information processing system 100 is a system that recognizes the state of products displayed on shelves and gives various notifications such as alerts. A product manager performs appropriate work on the basis of the notification to maintain an appropriate display status of the products and curb loss of product sales opportunities.

A first embodiment of the information processing system 100 will be described below with reference to Fig. 1 and other drawings.

As shown in Fig. 1, the information processing system 100 includes a cloud server 1, a user terminal 2, and a plurality of cameras 3. In this example, the cloud server 1, the user terminal 2, and the cameras 3 are configured to be able to communicate with each other via a network 6 such as the Internet.

The user terminal 2 is an information processing device that is assumed to be used by a user who receives a service using the information processing system 100. That is, in this example, the user terminal 2 is an information processing device used by a manager of products displayed on product shelves.

Each of the cameras 3 includes an image sensor, such as a charge coupled device (CCD) type image sensor or a complementary metal oxide semiconductor (CMOS) type image sensor, and captures an image of a subject to obtain image data (captured image data) as digital data.

The sensor included in the camera 3 is, for example, an RGB sensor that captures RGB images, or a distance measuring sensor that outputs a distance image.

The cameras 3 obtain, by imaging, a plurality of pieces of image data of the product shelves on which the products are displayed. These pieces of image data are referred to as "shelf images".

The shelf images captured by the cameras 3 include a reference shelf image and shelf images to be compared. Here, the reference shelf image is, for example, a shelf image captured at a point in time when the display of products is completed before the store opens, and is a shelf image obtained by imaging a state before the state of the product changes. This shelf image is referred to as a "reference shelf image".

The shelf image used for comparison with the reference shelf image is a shelf image captured during business hours of the store, for example, a shelf image obtained by imaging a state where some products have been sold and the number of items displayed has been reduced. This shelf image is referred to as a "processing target shelf image".

The camera 3 compares the reference shelf image with the processing target shelf image and detects a difference therebetween. Then, a partial image is cut out from the shelf image so that the partial image includes a difference region which is a region where the difference between the processing target shelf image and the reference shelf image is detected. That is, the partial image is an image that is a partial region of the processing target shelf image and includes the difference region.

The camera 3 transmits the reference shelf image and the partial image to the cloud server 1 (see Fig. 2). The camera 3 transmits location information specifying the location of the partial image in the processing target shelf image to cloud server 1 together with the partial image.

When a first shelf image is acquired during business hours, and then a second shelf image is acquired after a certain period of time has elapsed, the first shelf image is set as a reference shelf image, and the second shelf image is set as a processing target shelf image. Thereby, it is possible to detect changes in the state of products for the certain period of time. Thus, an image region that has changed for the certain period of time can be cut out as a partial image, and only the minimum amount of image data required can be transmitted to the cloud server 1.

When the image transmitted to the cloud server 1 includes a customer's face and the like, the camera 3 performs privacy masking processing and then transmits the image.

In this example, this processing in the camera 3 is realized as rule-based signal processing.

The cloud server 1 receives a reference shelf image and a partial image from the camera 3. The cloud server 1 cuts out a region in the reference shelf image which corresponds to the partial image as a corresponding image, and compares the partial image with the corresponding image to specify the state of a product (hereinafter referred to as a "target product") captured in the partial image.

The state of the target product specified in the cloud server 1 is, for example, an out-of-stock state, a short supply state, a state where a display position is inappropriate, a state where a posture is inappropriate, or the like.

When the cloud server 1 specifies such a product state, a product manager is notified of an information notification (including alerts) corresponding to the product state.

Product state specification processing in the cloud server 1 is performed using, for example, artificial intelligence (AI). Specifically, a partial image and a corresponding image are input to an AI model to obtain information on a product state. The product state is output from the AI model as label information and the like. In this manner, image processing performed using an AI model and its associated program is referred to as "AI image processing".

The cloud server 1 and the user terminal 2 are each configured as an information processing device equipped with a microcomputer including a central processing unit (CPU), a read only memory (ROM), and a random access memory (RAM).

### <2. Configuration of camera>

Fig. 3 is a block diagram showing an example of an internal configuration of the camera 3. As shown in the drawing, the camera 3 includes an imaging optical system 31, an optical system drive unit 32, an image sensor IS, a control unit 33, a memory unit 34, a communication unit 35, and a signal processing unit 36. The image sensor IS, the control unit 33, the memory unit 34, the communication unit 35, and the signal processing unit 36 are connected to each other via a bus 37, and are capable of mutually performing data communication.

The imaging optical system 31 includes lenses such as a cover lens, a zoom lens, and a focus lens, and an iris mechanism. Light (incident light) from a subject is guided by this imaging optical system 31 and is focused on a light receiving surface of the image sensor IS.

The optical system drive unit 32 collectively refers to drive units of the zoom lens, the focus lens, and the iris mechanism of the imaging optical system 31. Specifically, the optical system drive unit 32 includes an actuator for driving the zoom lens, the focus lens, and the iris mechanism, respectively, and a drive circuit of the actuator.

The control unit 33 is configured to include a microcomputer including, for example, a CPU, a ROM, and a RAM, and the CPU performs the overall control of the cameras 3 by executing various processes in accordance with programs stored in the ROM or programs loaded into the RAM.

In addition, the control unit 33 gives instructions to drive the zoom lens, the focus lens, the iris mechanism, and the like to the optical system drive unit 32. In response to these drive instructions, the optical system drive unit 32 executes the movement of the focus lens and the zoom lens, the opening and closing of an iris diaphragm of the iris mechanism, and the like.

The control unit 33 also controls the writing and reading of various data to and from the memory unit 34.

The memory unit 34 is a non-volatile storage device such as a hard disk drive (HDD) or a flash memory device, and is used as a storage destination (recording destination) for image data output from the image sensor IS.

Further, the control unit 33 performs various data communication with an external device via the communication unit 35. The communication unit 35 in this example is configured to be able to communicate data with at least the cloud server 1 shown in Fig. 1.

The signal processing unit 36 is constituted by, for example, a field programmable gate array (FPGA), and performs the above-described processing for comparing the reference shelf image with the processing target shelf image, processing for cutting out a partial image, processing for specifying location information on the partial image in the processing target shelf image, privacy masking processing, and the like.

In addition, the camera 3 includes a power supply unit 38. The power supply unit 38 is configured to include secondary batteries such as NiCd batteries, NiMH batteries, and Li batteries.

The power supply unit 38 includes a remaining charge detection unit 39 that detects a remaining battery charge of these secondary batteries.

The remaining charge detection unit 39 manages the remaining battery charge using a state of charge (SOC) and the like.

The power supply unit 38 can be configured to be able to receive power supplied from a commercial AC power source via an AC adapter or the like.

The image sensor IS is configured as, for example, a CCD type image sensor or a CMOS type image sensor.

The image sensor IS includes an imaging unit 41, an image signal processing unit 42, a sensor internal control unit 43, a memory unit 45, and a communication I/F 46, which can mutually perform data communication via a bus 47.

The imaging unit 41 includes a pixel array unit in which pixels including photoelectric conversion elements such as photodiodes are arranged two-dimensionally, and a readout circuit that reads out electrical signals obtained by photoelectric conversion from the pixels included in the pixel array unit, and can output the electrical signals as captured image signals.

The readout circuit performs, for example, correlated double sampling (CDS) processing and automatic gain control (AGC) processing on the electrical signals obtained by photoelectric conversion, and further performs analog/digital (A/D) conversion processing.

In this embodiment, the imaging unit 41 captures a reference shelf image and a processing target shelf image. The processing target shelf image is obtained by imaging of the imaging unit 41 for each predetermined period of time, for example, every 5 minutes or every hour.

An imaging interval (predetermined period of time) of the shelf images to be processed can be changed as appropriate depending on various factors. Details thereof will be described later.

The image signal processing unit 42 performs pre-processing, synchronization processing, YC generation processing, resolution conversion processing, codec processing, and the like on a captured image signal as digital data after A/D conversion processing.

In the pre-processing, clamping processing for clamping R, G, and B black levels of the captured image signal to a predetermined level, correction processing between R, G, and B color channels, and the like are performed. In the synchronization processing, color separation processing for imparting all of R, G, and B color components to image data for each pixel is performed. For example, in the case of an imaging element that uses a Bayer array color filter, demosaic processing is performed as color separation processing. In the YC generation processing, a luminance (Y) signal and a color (C) signal are generated (separated) from the R, G, and B image data. In the resolution conversion processing, resolution conversion processing is executed on image data that has been subjected to various signal processing.

In the codec processing, for example, encoding processing for recording and communication, and file generation are performed on the image data that has been subjected to the above-described various processes. In the codec processing, it is possible to generate moving image files in formats such as MPEG-2 (MPEG: moving picture experts group) and H.264. It is also conceivable to generate still image files in formats such as JPEG (joint photographic experts group), TIFF (tagged image file format), and GIF (graphics interchange format). When the image sensor IS is a distance measuring sensor, the image signal processing unit 42 calculates distance information on a subject on the basis of two signals output from the image sensor IS as, for example, iToF (indirect time of flight), and outputs a distance measuring image.

The sensor internal control unit 43 gives instructions to the imaging unit 41 and controls the execution of imaging operations. Similarly, the sensor internal control unit 43 also controls the execution of processing for the image signal processing unit 42.

The memory unit 45 can be used as a so-called frame memory in which captured image data (RAW image data) obtained by the image signal processing unit 42 and image data after synchronization processing are stored.

The communication I/F 46 is an interface that communicates with the control unit 33, the memory unit 34, and the like which are located outside of the image sensor IS. The communication I/F 46 performs communication for acquiring programs to be executed by the image signal processing unit 42, and the like from the outside, and stores them in the memory unit 45 provided in the image sensor IS.

Image data output from the image signal processing unit 42, and the like are output from the communication I/F 46 of the image sensor IS.

### <3. Hardware configuration of information processing device>

Hardware configurations of the information processing devices such as the cloud server 1 and the user terminal 2 of the information processing system 100 will be described with reference to Fig. 4.

The information processing device is equipped with a CPU 71. The CPU 71 functions as an arithmetic processing unit that performs the above-described various processes and executes various processes in accordance with programs stored in a ROM 72 or a non-volatile memory unit 74 such as an electrically erasable programmable read-only memory (EEP-ROM), or programs loaded from a storage unit 79 to a RAM 73. The RAM 73 also stores data necessary for the CPU 71 to execute various processes as appropriate.

The CPU 71 of the information processing device as the cloud server 1 performs processing for cutting out a corresponding image from a reference shelf image, AI image processing for specifying the state of a target product in the corresponding image using an AI model, notification processing, and the like as described above.

The storage units such as the ROM and the RAM store information on the AI application and the AI model used in the image processing performed by the CPU 71 using the AI model. The AI application indicates an application for performing processing using the AI model.

The CPU 71, the ROM 72, the RAM 73, and the non-volatile memory unit 74 are connected to each other via a bus 83. An input/output interface (I/F) 75 is also connected to the bus 83.

An input unit 76 constituted by an operator or an operating device is connected to the input/output interface 75.

For example, as the input unit 76, various operators or operating devices such as a keyboard, a mouse, a key, a dial, a touch panel, a touch pad, and a remote controller are assumed.

The input unit 76 detects a user's operation, and the CPU 71 analyzes a signal corresponding to an input operation.

A display unit 77 constituted by a liquid crystal display (LCD), an organic electro luminescence (EL) panel, or the like, and a sound output unit 78 constituted by a speaker or the like are integrally or separately connected the input/output interface 75.

The display unit 77 is a display unit that performs various displays, and is constituted by, for example, a display device provided in a housing of a computer device, or a separate display device connected to the computer device.

The display unit 77 displays images for various image processing and moving images to be processed on a display screen on the basis of instructions from the CPU 71. The display unit 77 also displays various operation menus, icons, and messages, that is, a graphical user interface (GUI), on the basis of instructions from the CPU 71.

A storage unit 79 that is constituted by a hard disk or a solid-state memory, or a communication unit 80 that is constituted by a modem may be connected to the input/output interface 75.

The communication unit 80 performs communication processing via a transmission line such as the Internet, and communication with various devices in a wired or wireless manner or via a bus.

A drive 81 is connected to the input/output interface 75 as necessary, or a removable storage medium 82 such as a magnetic disk, an optical disk, a magneto-optical disk, or a semiconductor memory is appropriately installed in the input/output interface 75.
data files such as programs used for each processing can be read from the removable storage medium 82 by the drive 81. The read data files are stored in the storage unit 79, or images and sounds included in the data files are output from the display unit 77 and the sound output unit 78. In addition, computer programs and the like read from the removable storage medium 82 are installed in the storage unit 79 as necessary.

In this computer device, for example, software for the processing in this embodiment can be installed via network communication by the communication unit 80 or installed via the removable storage medium 82. Alternatively, the software may be stored in advance in the ROM 72, the storage unit 79, or the like.

In addition, images captured by the camera 3 and various processing results may be received and stored in the removable storage medium 82 via the storage unit 79 or the drive 81.

The CPU 71 performs processing operations on the basis of various programs, thereby executing information processing and communication processing required for the cloud server 1 and the user terminal 2 which are information processing devices equipped with the above-described arithmetic processing unit.

Each of the cloud server 1 and the user terminal 2 is not limited to being constituted by a single computer device as shown in Fig. 4, but may be constituted by a plurality of computer devices that are systemized. The plurality of computer devices may be systemized by a local area network (LAN) or the like, or may be disposed at a remote location using a virtual private network (VPN) that uses the Internet or the like. The plurality of computer devices may include computer devices that serve as a server group (cloud) that can be used by a cloud computing service.

### <4. Functional configuration>

Functional configurations of the camera 3 and the cloud server 1 will be described.

Fig. 5 shows a functional configuration of the signal processing unit 36 of the camera 3. Some of the functions shown below may be realized by the control unit 33 of the camera 3.

As shown in the drawing, the signal processing unit 36 functions as an image acquisition unit F1, an obstacle detection unit F2, a region specification unit F3, a cut-out processing unit F4, a transmission processing unit F5, and a masking processing unit F6.

The image acquisition unit F1 acquires a reference shelf image and a processing target shelf image which are captured by the imaging unit 41.

In addition, the image acquisition unit F1 optimizes an imaging interval by performing processing for changing the imaging interval of the processing target shelf image on the imaging unit 41.

For example, when a remaining battery charge detected by the remaining charge detection unit 39 of the power supply unit 38 falls below a predetermined threshold value, the image acquisition unit F1 increases an imaging interval. In addition, when the remaining battery charge returns to equal to or greater than the predetermined threshold value, the image acquisition unit F1 reduces an imaging interval.

The obstacle detection unit F2 detects whether products displayed in a display space of each shelf are appropriately shown in each shelf image acquired by the image acquisition unit F1, in other words, whether an obstacle such as a person is shown in front of a product.

When it is determined that an obstacle is shown and products in the display space are not appropriately shown (occlusion has occurred), the shelf image is discarded and the imaging unit 41 is instructed to capture a shelf image again.

The region specification unit F3 performs processing for specifying a difference region where there are differences between the reference shelf image and the processing target shelf image. The difference region that includes a difference from the reference shelf image indicates that a display state of products is different from when the store was opened. Thus, some work may be required for the products shown in the difference region. For example, the work includes tidy-up such as replenishment of products or adjustment of their orientations, or movement of products to correct display positions.

When a difference region is detected, the region specification unit F3 acquires information for specifying the position of the difference region in the processing target shelf image.

The information for specifying the position of the difference region is, for example, information on the x coordinate and the y coordinate in the image.

For example, as shown in Fig. 6, description is given of a case where a rectangular difference region is detected in a processing target shelf image in which the number of pixels in the horizontal direction is X and the number of pixels in the vertical direction is Y. In this case, as the coordinates of the difference region, the region specification unit F3 acquires the coordinates (x1, y1) of an upper left pixel in the difference region as information for specifying the position of the difference region.

The region specification unit F3 may also acquire the coordinates (x2, y2) of a lower right pixel in the difference region as information for specifying the position of the difference region, thereby making it possible to specify the size of the difference region.

Another example of information for specifying the position of the difference region may be identification (ID) assigned to each display space on a product shelf.

For example, as shown in Fig. 7, a unique shelf ID such as a shelf T1, T2, ... is assigned to each stage of a product shelf. Three types of products can be displayed on the shelf T1, and a unique display space ID such as a display space Sp1, Sp2, or Sp3 is assigned to each display space.

On the basis of this premise, the region specification unit F3 acquires the ID of a display space shown in a difference region where a difference has been detected. By using a correspondence table in which coordinates in a shelf image and a display space ID are associated with each other, the display space ID can be specified from coordinate information.

The cut-out processing unit F4 cuts out a part of a processing target shelf image as a partial image so that the difference region specified by the region specification unit F3 is included. The partial image is, for example, an image that is cut out as a region slightly larger than the difference region (see Fig. 8).

The transmission processing unit F5 (see Fig. 5) performs processing for transmitting a reference shelf image and a partial image to the cloud server 1. It is assumed that the transmission of the reference shelf image is performed, for example, only for the reference shelf image captured before the store opens. Although it has been described that a first processing target shelf image is set as a reference shelf image when a second processing target shelf image is acquired, the reference shelf image as the first processing target shelf image is not transmitted to the cloud server 1 in this case.

That is, for example, the transmission processing unit F5 transmits the reference shelf image only once a day. However, in cases where the store is extensively renovated and the display positions of products are significantly changed between the morning and afternoon, the reference shelf image may be transmitted in both the morning and afternoon.

As described above, the transmission processing unit F5 transmits information for specifying the position of the difference region together with the partial image. In addition, instead of the information for specifying the position of the difference region, the coordinates of the partial image may be transmitted.

The transmission processing unit F5 also transmits compressed data regarding the reference shelf image and partial image to be transmitted.

The masking processing unit F6 performs privacy masking processing when an obstacle such as a person is shown in a shelf image or a partial image. For example, when a person is shown in the shelf image to hide a product, the shelf image is discarded and a new shelf image is captured. However, when the person is shown to the extent that the product is not hidden, the state of the product can be appropriately recognized, and there is no need to discard the shelf image. However, when the shelf image with a person shown therein is transmitted to the cloud server 1, a privacy problem occurs. For this reason, the masking processing unit F6 performs privacy masking processing on the region of the shelf image in which the person is shown, such as filling in the region with a black image or mosaic processing.

Next, a functional configuration of the cloud server 1 will be described with reference to Fig. 9.

The CPU 71 of the cloud server 1 functions as a reception processing unit F11, a corresponding image generation unit F12, an image recognition processing unit F13, a notification processing unit F14, a counting processing unit F15, and an instruction processing unit F16.

The reception processing unit F11 performs processing for receiving a reference shelf image and a partial image that is a part of a processing target shelf image. These images are received in a compressed state. The reception processing unit F11 also receives location information on the partial image together with the partial image.

The corresponding image generation unit F12 performs processing for cutting out a region in the reference shelf image which corresponds to the partial image as a corresponding image.

The generation of the corresponding image is processing for cutting out an image region from the reference shelf image as a comparison target in order to correctly recognize the state of a product shown in the partial image of the processing target shelf image. Thus, when a partial image received previously is considered to be (a part of) the reference shelf image to be compared, cut-out processing does not need to be performed by the corresponding image generation unit F12.

Specifically, for example, as shown in Fig. 10, a reference shelf image is captured at time t0 before the store opens, and the cloud server 1 receives the reference shelf image. Then, when the store opens at time t1, and the cloud server 1 receives a partial image (assumed to be a partial image A) cut out from a processing target shelf image captured for the first time on that day at time t2 thereafter, there is a possibility that the state of a product Item1 shown in the partial image A has changed. To confirm this, the cloud server 1 recognizes the state of the product Item1 by cutting out a corresponding region from the reference shelf image as a corresponding image and comparing it (first comparison in Fig. 10).

Thereafter, at time t3, when a partial image (assumed to be a partial image B) cut out from a processing target shelf image captured for the second time on that day is cut out from the same image region as the previous partial image, that is, when the coordinates of the partial image B and the coordinates of the partial image A are the same, an image to be compared with the partial image B may be the partial image A considered to be the reference shelf image. In this case, a comparison is made (second comparison in Fig. 10) between the previous state (the state specified by the partial image A) and the current state (the state specified by the partial image B) for the product Item1.

Thereby, it is possible to prevent a notification similar to the notification made on the basis of a result of the first comparison from being made on the basis of a result of the second comparison.

The reference shelf image captured at time t0 before the store opens is an optimal display state for products and can be considered to be a target display state. In this case, even when the partial image B with the same coordinates as those of the partial image A is received as described above, a difference from the target display state for the product Item1 may be grasped and notified by comparing the corresponding image cut out from the reference shelf image captured at time t0 before the store opens with the partial image B. In this case, an appropriate notification can be given each time on the basis of the results of comparison with the target display state. In addition, when a notification is given on the basis of the first comparison in Fig. 10 but no work is performed to optimize the display state, a similar notification is given again on the basis of the second comparison. Thus, a notification can be given to deal with a case where a notification has been overlooked.

The image recognition processing unit F13 (see Fig. 9) performs AI image processing for recognizing the state of products by inputting the corresponding image and the partial images into the AI model. The image recognition processing unit F13 obtains a recognition result of the state of a target product as an output of the AI model.

There are several conceivable states of a target product.

First, an example of a corresponding image of a reference shelf image is shown in Fig. 11. The corresponding image shows a state where pieces of bread with a panda's face are displayed on a tray.

Next, an example of the state of a target product will be given. One is a state regarding the number of target products. Fig. 12 shows a partial image showing a state where all of the target products have been sold out and the number of products on display is set to "0". This state is referred to as an "out-of-stock state".

In addition, Fig. 13 shows a partial image showing a state where some of the target products have been sold and the number of products items on display is less than a predetermined number (or a predetermined percentage). This state is referred to as a "short supply state".

Another example of the state of a target product is shown in Fig. 14. This drawing shows a state regarding the postures of displayed target products, and shows a partial image showing a state where some of the target products are not appropriately oriented. This state is referred to as an "inappropriate posture state".

Still another example of the state of a target products is shown in Fig. 15. This drawing shows a state regarding the position of displayed target products, and shows a state where a type of bread that should be displayed in a different display space and should not be inherently shown in a partial image is shown in the partial image. This state is referred to as a "inappropriate display position state".

Another example of the state of a target product is shown in Fig. 16. This drawing shows a state where a price tag that should be placed on a target product on display is incorrect. Specifically, the price is "1200 yen" instead of "120 yen". This state is referred to as an "inappropriate price tag state".

For the above-described out-of-stock, short supply, inappropriate posture, and inappropriate display position states, the cloud server 1 does not need to know what target product should be shown in the partial image. That is, by inputting the corresponding image and the partial image to the AI model, it is possible to recognize an out-of-stock state or a short supply state when the number of products is reduced, to recognize an inappropriate posture state when the postures of products are not uniform, and to recognize an inappropriate display position state when different types of products are mixed.

However, there is a concern that a price tag may be inappropriate even when target products are arranged in an orderly manner, and the cloud server 1 needs to be able to acquire information on correspondence between products to be displayed in a display space and their prices.

A database shown in Fig. 17 is constructed in the storage unit 79 of the cloud server 1 or in a storage unit of another information processing device that can be accessed by the cloud server 1.

As shown in the drawing, the database stores data so that it is possible to identify correspondence between a camera ID for specifying the camera 3, a shelf ID, a display space ID, a product ID for specifying a product, and price information.

Fig. 17 shows an example of a case where there is a plurality of cameras 3. In addition, a single camera 3 may be configured to capture a plurality of shelf images by changing its angle of view. In this case, an image ID (or an angle of view ID) is used instead of the camera ID.

An AI model used by the image recognition processing unit F13 of the cloud server 1 to recognize the state of products has been trained in advance.

Here, the training of the AI model will be described. The AI model may be prepared for each state of products, or one AI model may be configured to recognize all states.

First, in order to grasp an "out-of-stock state" and a "short supply state" of products, an AI model that has been trained using training data including pairs each of which is constituted by an image showing one or a plurality of products and the number of products is used. In addition, the AI model is also trained using training data including pairs each of which is constituted by an image showing no products and only empty trays and the number of products (zero). In addition, an image of training data is prepared for each product to be recognized.

The AI model obtained by training in this manner is capable of recognizing the number of products shown in an input image. Thus, the AI model is capable of recognizing an "out-of-stock state" and a "short supply state". In the recognition of a short supply state, a threshold value determined for each product may be used to determine a "short supply state" when the number of products on display is less than the threshold value, and training may be performed in advance using training data including pairs each of which is constituted by a short supply state, an image to be recognized, and a "short supply state" label.

Next, an "inappropriate posture state" of a product is grasped using an AI model that has been trained using training data including pairs each of which is constituted by an image of a product captured from various angles and a label indicating whether the image shows the front.

The AI model obtained in this manner can recognize the correct orientation of the product, and thus it is possible to recognize an "inappropriate posture state" of the product.

Next, an "inappropriate display position state" of a product is grasped using an AI model that has been trained using training data including pairs each of which is constituted by an image of the product and its product name (or may be a product ID).

The AI model obtained in this manner can identify differences between products, and thus it is possible to recognize a state where a plurality of products is displayed in a certain display space. Thus, it can recognize an "inappropriate display position state" by recognizing a state where a plurality of types of products are displayed in one display space. Furthermore, by using a database that stores correspondence between display spaces and products that should be displayed in the display spaces, it is possible to appropriately recognize an "inappropriate display position state" even when only products other than the products that should be inherently displayed there are displayed in the display space. Instead of using a database that stores correspondence between a display space and products that should be displayed in the display space, an "inappropriate display position state" may be recognized by detecting a mismatch between characters on a price tag installed in correspondence with the display space and a recognized product name by performing optical character recognition (OCR) processing on the price tag.

Next, an "inappropriate price tag state" of a product is grasped using an AI model that has been trained using training data including pairs each of which is constituted by an image of numbers and their numerical values.

The AI model obtained in this manner can recognize a price written on a price tag. Thus, it is possible to determine whether a price that should be given to a product matches a price read from the image, and to recognize an "inappropriate price tag state".

The notification processing unit F14 (see Fig. 9) performs notification processing corresponding to each product and each product state. For example, in the case of an out-of-stock state or a short supply state, notification processing for prompting replenishment work to add products to a display space is performed. Further, in the case of an inappropriate posture state or an inappropriate display position state, notification processing for prompting work of displaying products again or rearrangement work is performed. Furthermore, in the case of an inappropriate price tag state, notification processing for prompting work of reattaching or rewriting a price tag is performed.

The notification processing of the notification processing unit F14 may include alert processing.

The notification processing performed by the notification processing unit F14 is performed on the user terminal 2. Thereby, a manager who uses the user terminal 2 can perform predetermined work by himself or by giving an instruction to an employee to normalize the display state of products.

The counting processing unit F15 counts the number of times notification processing is executed for each product and each product state. Counting results are stored in the storage unit 79 of the cloud server 1 or in a storage unit of another information processing device.

An example of the counting results is shown in Fig. 18.

As shown in Fig. 7, the shelf T1 has three display spaces, and different products are displayed in the display spaces. The three products are a product Item1, a product Item2, and a product Item3, respectively.

The shelf T2 also has three display spaces, and products Item4, Item5, and Item6 are displayed in the display spaces, respectively.

The example shown in Fig. 18 is an example in which a processing target shelf image is captured four times during business hours of the store. Thus, the maximum number of counts for each notification is four. For the product Item5 displayed on the shelf T2, a notification of an out-of-stock state is given four times. That is, it is indicated that the product Item5 is a popular product and is highly likely to be sold out rapidly even when it is displayed.

Count information on such notifications is important information that can be used for sales strategies for products through analysis.

For the product Item5, an out-of-stock notification has been given in all of the four notification opportunities, and thus it is highly likely that four opportunities to capture processing target shelf images during business hours is too little in terms of monitoring the sales of the product Item5.

The instruction processing unit F16 performs processing for giving an instruction of an imaging interval for the processing target shelf images to the camera 3 in accordance with the counting results of the counting processing unit F15. For example, in the example shown in Fig. 18, the instruction processing unit F16 determines that it is necessary to monitor the product Item5 more frequently and gives an instruction to increase the number of opportunities to capture processing target shelf images during business hours to eight times.

There are other conceivable situations in which the instruction processing unit F16 gives an instruction of an imaging interval for the processing target shelf images. For example, when battery information of the camera 3 is managed in the cloud server 1, the instruction processing unit F16 may instruct the camera 3 to change the imaging interval based on the remaining battery charge described above.

### <5. Flow of processing>

Various processing performed by the camera 3 and the cloud server 1 will be described with reference to the accompanying drawings. In the following description, processing performed by the signal processing unit 36 of the camera 3 may be executed by the control unit 33 of the camera 3.

### <5-1. Processing related to acquisition of reference shelf image>

First, an example of processing executed by the camera 3 before the store opens is shown in Fig. 19.

In step S101, the control unit 33 of the camera 3 executes various processes for starting up the camera 3.

Next, in step S102, the control unit 33 of the camera 3 performs imaging control to capture a reference shelf image. The reference shelf image obtained by the imaging operation of the imaging unit 41 is stored in the memory unit 34.

In step S103, the signal processing unit 36 of the camera 3 reads out the reference shelf image from the memory unit 34, and in step S104, the obstacle detection unit F2 performs obstacle detection processing to determine whether an obstacle has been detected.

When it is determined that an obstacle has been detected, the signal processing unit 36 of the camera 3 deletes the reference shelf image stored in the memory unit 34 in step S105, and waits until a predetermined period of time elapses in step S106.

When it is determined in step S106 that the predetermined period of time has elapsed, the signal processing unit 36 returns to the process of step S102 and captures a reference shelf image again.

On the other hand, when it is determined in step S104 that no obstacle has been detected, the signal processing unit 36 of the camera 3 performs compression processing on the reference shelf image in step S107.

Next, in step S108, the signal processing unit 36 of the camera 3 performs processing for transmitting the compressed reference shelf image to the cloud server 1. When the camera 3 is capable of switching between a mode for outputting images and a mode for outputting only metadata, processing for switching to a mode for outputting images may be performed before the transmission processing in step S108.

In step S109, the signal processing unit 36 of the camera 3 transitions to a sleep mode. Thereby, the camera 3 can reduce power consumption until the next shelf image is captured.

By executing the processes shown in Fig. 19, the camera 3 can transmit a reference shelf image in which a target display state is imaged to the cloud server 1.

When an obstacle has been detected in the reference shelf image but detected at a position that does not interfere with image recognition of a product, it is determined in the process of step S104 that no obstacle has been detected. When the detected obstacle is a person, privacy masking processing may be executed before the process of step S107.

### <5-2. Processing related to acquisition of processing target shelf image>

Next, an example of processing executed by the camera 3 to capture processing target shelf images during business hours of the store will be described with reference to Fig. 20.

In step S201, the control unit 33 of the camera 3 determines whether a predetermined period of time has elapsed since the previous capture of a shelf image. When the predetermined period of time has not elapsed, the control unit 33 of the camera 3 returns to the process of step S201.

On the other hand, when it is determined that the predetermined period of time (for example, two hours) has elapsed, the control unit 33 of the camera 3 performs imaging control for capturing a processing target shelf image in step S202. The reference shelf image obtained by the imaging operation of the imaging unit 41 is stored in the memory unit 34.

In step S203, the signal processing unit 36 of the camera 3 reads out the processing target shelf image from the memory unit 34, and in step S204, the signal processing unit 36 performs obstacle detection processing by the obstacle detection unit F2 to determine whether an obstacle has been detected in the processing target shelf image.

When it is determined that an obstacle has been detected, the signal processing unit 36 of the camera 3 deletes the processing target shelf image stored in the memory unit 34 in step S205, and waits until a predetermined period of time elapses in step S206.

When it is determined in step S206 that the predetermined period of time has elapsed, the signal processing unit 36 returns to the process of step S202 and captures a processing target shelf image again.

On the other hand, when it is determined that no obstacle has been detected, the signal processing unit 36 of the camera 3 reads out the previous shelf image from the memory unit 34 as a reference shelf image in step S207, and performs processing for comparing the reference shelf image and the current processing target shelf image as the region specification unit F3 to detect a difference in step S208.

In step S209, the signal processing unit 36 of the camera 3 determines whether a difference region has been detected. When it is determined that no difference region has been detected, the signal processing unit 36 proceeds to the process of step S109 and transitions to a sleep mode.

On the other hand, when it is determined that a difference region has been detected, the signal processing unit 36 of the camera 3 cuts out a partial region of the processing target shelf image as a partial image so that the difference region is included in step S210, and compresses the partial image in step S211.

In step S212, the signal processing unit 36 of the camera 3 performs processing for transmitting the compressed partial image to the cloud server 1.

In step S213, the signal processing unit 36 of the camera 3 deletes the current reference shelf image from the memory unit 34 and stores the current processing target shelf image in the memory unit 34 as the next reference shelf image.

After the signal processing unit 36 of the camera 3 transitions to a sleep mode in step S109, the signal processing unit 36 returns to the process of step S201.

The camera 3 executes the processes shown in Fig. 20, and thus it is possible to transmit an image region that has been changed in the processing target shelf image to the cloud server 1 as a partial image.

### <5-3. Processing for giving notification>

Next, an example of processing executed by the cloud server 1 to give various notifications is shown in Figs. 21 and 22. Processes in the following description are processes performed on one camera 3 by the cloud server 1. When the plurality of cameras 3 transmit images to the cloud server 1, the cloud server 1 performs the following processing for each camera 3.

First, in step S301 of Fig. 21, the CPU 71 of the cloud server 1 receives a reference shelf image captured before the store opens from the camera 3 and stores it in the storage unit 79.

Next, in step S302, the CPU 71 of the cloud server 1 waits until it receives a partial image from the camera 3. When it is determined that the partial image has been received from the camera 3, the CPU 71 of the cloud server 1 stores the received partial image in the storage unit 79 in step S303. The cloud server 1 receives location information on the partial image from the camera 3 together with the partial image.

Here, the reference shelf image and the partial image stored in the storage unit 79 are compressed image data. Thus, the CPU 71 of the cloud server 1 reads out the partial image from the storage unit 79 in step S304, and performs decompression processing for the partial image in the subsequent step S305.

In step S306, the CPU 71 of the cloud server 1 reads out the reference shelf image from the storage unit 79 and performs decompression processing.

In step S307, the CPU 71 of the cloud server 1 cuts out a corresponding image from the reference shelf image on the basis of the location information on the partial image.

In step S308, the CPU 71 of the cloud server 1 inputs the corresponding image and the partial image to the AI model to perform image recognition processing on the states of products shown in the partial image. The states of the products are output from the AI model as results of the image recognition processing. The states of the products include a "normal state" that is output when there is no problem, in addition to the above-described "out-of-stock state", "short supply state", "inappropriate posture state", "inappropriate display position state", and "inappropriate price tag state". The CPU 71 of the cloud server 1 executes each of the following processes in accordance with the recognition result regarding the state of the product which is output from the AI model.

Specifically, in step S309 of Fig. 22, the CPU 71 of the cloud server 1 determines whether the recognition result of the product state which is output from the AI model indicates an out-of-stock state or a short supply state.

When it is determined that the recognition result of the product state indicates an out-of-stock state or a short supply state, the CPU 71 of the cloud server 1 performs notification processing regarding product replenishment to the user terminal 2 in step S310. At this time, a notification method may be different for the out-of-stock state and the short supply state. For example, a notification in the out-of-stock state may be given as alert notification processing, and may be displayed in a more prominent manner on the user terminal 2 than in the short supply state.

When products are sold, the state will eventually transition to a short supply state, but the timing may be different for each product. For example, for products that require a time-consuming process such as baking bread for replenishment of products, it may be determined early that the product state is a short supply state. In addition, for products that can be replenished simply by bringing the products from a back yard and displaying them on a product shelf, it may be determined lately that the product state is a short supply state.

After the notification processing is executed, the CPU 71 of the cloud server 1 stores a notification history in step S311. This processing is required to adjust an imaging interval in accordance with the number of notifications as described above. The same applies to the following processing for storing a notification history.

After the history storage processing is performed, or after it is determined in step S309 that the product state is not an out-of-stock state or a short supply state, the CPU 71 of the cloud server 1 determines in step S312 whether the recognition result of the product state indicates an inappropriate posture state.

When it is determined that the recognition result of the product state indicates an inappropriate posture state, the CPU 71 of the cloud server 1 performs notification processing for prompting arrangement of the products in step S313, and performs processing for storing the history of the notification processing in step S314.

After the history storage processing is performed, or after it is determined in step S312 that the product state is not an inappropriate posture state, the CPU 71 of the cloud server 1 determines in step S315 whether the recognition result of the product state indicates an inappropriate display position state.

When it is determined that the recognition result of the product state indicates an inappropriate display position state, the CPU 71 of the cloud server 1 performs notification processing for moving the products in step S316, and performs processing for storing the history of the notification processing in step S317.

After the history storage processing is performed, or after it is determined in step S315 that the product state is not an inappropriate display position state, the CPU 71 of the cloud server 1 determines in step S318 whether the recognition result of the product state indicates an inappropriate price tag state.

When it is determined that the recognition result of the product state indicates an inappropriate price tag state, the CPU 71 of the cloud server 1 performs notification processing for correcting a price tag in step S319, and performs processing for storing the history of the notification processing in step S320.

After the history storage processing is performed, or after it is determined in step S318 that the product state is not an inappropriate price tag state, the CPU 71 of the cloud server 1 returns to step S302 and waits until a predetermined period of time elapses and a partial image is transmitted from the camera 3 again.

In this manner, the partial images transmitted from the camera 3 are received at predetermined time intervals, recognition processing for recognizing the state of products is performed, and appropriate notification processing is performed on the basis of the result. Thereby, a manager of the products in the store can appropriately maintain the display state of the product. In addition, the manager can view a notification content and perform appropriate work without performing work of confirming the display state of the product, and thus it is possible to achieve a reduction in workload and an improvement in work efficiency.

### <5-4. Processing for optimizing imaging interval in accordance with number of notifications>

Next, Fig. 23 shows an example of processing performed by the cloud server 1 to optimize an imaging interval in accordance with the number of notifications according to the state of a product.

In step S401, the CPU 71 of the cloud server 1 acquires the current time.

Next, in step S402, the CPU 71 of the cloud server 1 determines whether the current time is past a store closing time. When the current time is not past the store closing time, that is, when it is determined that the store is open, the CPU 71 of the cloud server 1 returns to the process of step S401.

On the other hand, when it is determined that the current time is past the store closing time, the following processing is performed as processing after the store is closed. Specifically, in step S403, the CPU 71 of the cloud server 1 determines whether notifications indicating the same product and content have occurred equal to or greater than a predetermined number of times in a day. For example, the notifications include a notification regarding an out-of-stock state of the product Item5 shown in Fig. 18, and the like.

When it is determined that notifications of the same type have occurred equal to or greater than a predetermined number of times, the CPU 71 of the cloud server 1 generates a change instruction for reducing an imaging interval of the camera 3, which images the relevant product, and transmits the change instruction to the camera 3 in step S404.

### <5-5. Processing for optimizing imaging interval>

Finally, an example of processing performed by the camera 3 to optimize an imaging interval is shown in Fig. 24.

In step S501, the signal processing unit 36 of the camera 3 determines whether an instruction to change an imaging interval has been received from the cloud server 1.

When it is determined that the change instruction has been received from the cloud server 1, the signal processing unit 36 of the camera 3 performs processing for changing the imaging interval as instructed in step S502 and returns to the process of step S501.

On the other hand, when it is determined that no change instruction has been received, the signal processing unit 36 of the camera 3 acquires information on the remaining battery charge in step S503, and determines in the subsequent step S504 whether the remaining battery charge is less than a predetermined threshold value.

When it is determined that the remaining battery charge is less than the predetermined value, the signal processing unit 36 of the camera 3 performs change processing for increasing an imaging interval in step S502, and returns to the process of step S501. When the imaging interval has already been reduced in accordance with the determination processing of step S501, the process of step S502 may be avoided without being executed, or the imaging interval may be further reduced in the process of step S502.

When it is determined in step S504 that the remaining battery charge is equal to or greater than the predetermined value, the signal processing unit 36 of the camera 3 determines in step S505 whether the change to increase the imaging interval has already been performed. When it is determined that the change has already been performed, that is, when it is determined that the processing for increasing the imaging interval has been performed due to a low remaining battery charge, the remaining battery charge has returned to equal to or greater than the predetermined threshold value, and thus the signal processing unit 36 of the camera 3 performs processing for returning (reducing) the imaging interval to the original imaging interval in step S506 and returns to the process of step S501.

The imaging interval is optimized in the camera 3 in this manner, and thus it is possible to appropriately acquire the state of a product and to avoid a state where imaging cannot be performed by the camera 3 due to battery exhaustion.

### <6. Second embodiment>

In a second embodiment, unlike the first embodiment, processing for comparing a reference shelf image and a processing target shelf image, processing for cutting out a partial image, processing for specifying location information on the partial image in the processing target shelf image, and the like are executed in an image sensor IS instead of a signal processing unit 36.

Hereinafter, differences from the first embodiment will be mainly described, and the description of parts similar to those in the first embodiment will be omitted as appropriate.

A block diagram showing an example of an internal configuration of a camera 3A is shown in Fig. 25.

The camera 3A includes an imaging optical system 31, an optical system drive unit 32, the image sensor IS, a control unit 33, a memory unit 34, a communication unit 35, a signal processing unit 36, and a power supply unit 38.

The image sensor IS, the control unit 33, the memory unit 34, the communication unit 35, and a remaining charge detection unit 39 of the power supply unit 38 are connected to each other via a bus 37, and can mutually perform data communication.

Configurations of the imaging optical system 31, the optical system drive unit 32, the control unit 33, the memory unit 34, the communication unit 35, and the power supply unit 38 are the same as those in the first embodiment, and thus the descriptions thereof are omitted.

The signal processing unit 36 performs privacy masking processing, image compression processing, and transmission processing. Repeated descriptions of the processing will be omitted.

The image sensor IS is configured as, for example, a CCD type image sensor or a CMOS type image sensor.

Further, in the image sensor IS in this embodiment, various AI image processing such as subject detection processing and image recognition processing using an AI model is performed.

The image sensor IS includes an imaging unit 41, an image signal processing unit 42, a sensor internal control unit 43, an AI image processing unit 44, a memory unit 45, and a communication I/F 46. The units can mutually perform data communication via a bus 47.

The imaging unit 41, the image signal processing unit 42, and the sensor internal control unit 43 are configured similarly to those in the first embodiment, and thus the descriptions thereof will be omitted.

The AI image processing unit 44 performs image recognition processing, which is AI image processing, on a captured image.

In this embodiment, the AI image processing unit 44 is realized by a digital signal processor (DSP).

As the AI image processing, the AI image processing unit 44 performs processing for comparing a reference shelf image with a processing target shelf image to detect a difference region, processing for cutting out a partial image, processing for specifying location information of the partial image in the processing target shelf image, and the like.

In order to realize these plurality of types of AI image processing by the AI image processing unit 44, the camera 3A is configured to be able to change an algorithm of the AI image processing executed by the AI image processing unit 44. In other words, the function of the AI image processing can be switched by switching an AI model used in the AI image processing.

The AI model is switched, for example, in response to an instruction from the control unit 33 of the camera 3A. In addition, when the AI model is switched, the AI model may be switched by selecting one from among a plurality of AI models stored in the memory unit 45, or by receiving and deploying the AI model from a server device such as a cloud server 1. By receiving an AI model from the cloud server 1 or the like each time the AI model is switched, the capacity of the memory unit 45 can be reduced, which leads to miniaturization, power saving, and cost reduction. In addition, when a plurality of AI models is stored in the memory unit 45, it is possible to suppress an increase in the amount of communication associated with the transmission and reception of an AI model.

The memory unit 45 can be used to temporarily store data used by the AI image processing unit 44 in the process of the AI image processing.

The memory unit 45 also stores information on an AI application and an AI model used by the AI image processing unit 44.

The information on the AI application and the AI model may be deployed in the memory unit 45 which is a container or the like by using container technology to be described below, or may be deployed using microservice technology. By deploying the AI models used for the AI image processing in the memory unit 45, it is possible to change the function type of the AI image processing or to change the AI model to an AI model whose performance has been improved by retraining.

As described above, in this embodiment, the description is given on the basis of examples of an AI model and an AI application used for image recognition processing, but is not limited thereto and may also apply to programs executed using AI technology.

Furthermore, when the capacity of the memory unit 45 is small, the information on the AI application and the AI model may be deployed as a container or the like in the memory unit 34 outside of the image sensor IS by using container technology, and then only the AI model may be stored in the memory unit 45 provided in the image sensor IS via the communication I/F 46.

The communication I/F 46 is an interface that communicates with the control unit 33, the memory unit 34, and the like that are provided outside of the image sensor IS. The communication I/F 46 performs communication for acquiring the programs executed by the image signal processing unit 42, the AI application and the AI model used by the AI image processing unit 44, and the like from the outside, and stores them in the memory unit 45 provided in the image sensor IS.

Thereby, the AI model is stored in the memory unit 45 provided in the image sensor IS, and can be used by the AI image processing unit 44.

The AI image processing unit 44 performs predetermined image recognition processing using the AI application or the AI model obtained in this manner to recognize a subject according to the purpose. Specifically, image recognition processing is performed on a person as a subject to determine whether an obstacle such as a person is captured.

Recognition result information on the AI image processing in the AI image processing unit 44 is output to the outside of the image sensor IS via the communication I/F 46.

That is, the communication I/F 46 of the image sensor IS outputs not only image data output from the image signal processing unit 42, but also the recognition result information on the AI image processing.

The communication I/F 46 of the image sensor IS can output only either the image data or the recognition result information.

For example, when a retraining function of the AI model is used, captured image data used in the retraining function is uploaded from the image sensor IS to the cloud server 1 and the like via the communication I/F 46 and the communication unit 35.

In addition, when inference using an AI model is performed, the recognition result information on the AI image processing is output from the image sensor IS to another information processing device outside of the camera 3A via the communication I/F 46 and the communication unit 35.

A functional configuration of the AI image processing unit 44 is shown in Fig. 26.

The AI image processing unit 44 functions as an image acquisition unit F1, an obstacle detection unit F2, a region specification unit F3, and a cut-out processing unit F4. A transmission processing unit F5 and a masking processing unit F6 are functions of the signal processing unit 36.

Repeated description of each function will be omitted.

Processing performed by the camera 3A in this embodiment will be described with reference to the drawings of Figs. 19 to 24. Differences from the first embodiment will be mainly described.

The processing shown in Fig. 19 is an example of the processing performed by the camera 3A before the store opens, as described above.

A reference shelf image obtained by the imaging control in step S102 is stored in the memory unit 45 in the image sensor IS.

Reading of the reference shelf image in step S103, obstacle detection processing in step S104, reference shelf image deletion processing in step S105, and standby processing in step S106 are executed by the AI image processing unit 44, instead of the signal processing unit 36.

Compression processing in step S107 and transmission processing in step S108 are executed by the signal processing unit 36, as in the first embodiment.

As described above, the processing shown in Fig. 20 is an example of processing executed by the camera 3A during business hours of the store.

A processing target shelf image obtained by the imaging control in step S202 is stored in the memory unit 45 in the image sensor IS.

Reading of the processing target shelf image in step S203, obstacle detection processing in step S204, processing target shelf image deletion processing in step S205, and standby processing in step S206 are executed by the AI image processing unit 44 instead of the signal processing unit 36.

Furthermore, reading of a reference shelf image in step S207, difference region detection processing in step S208, determination processing in step S209, processing for cutting out a partial image in step S210, and storage processing in step S213 are also executed by the AI image processing unit 44 instead of the signal processing unit 36. In the storage processing in step S213, the processing target shelf image is stored in the memory unit 45 as the next reference shelf image.

The processes shown in Figs. 21, 22, 23, and 24 are the same as those in the first embodiment, and thus the description thereof will be omitted.

As in this embodiment, various processes in the camera 3A may be executed by the AI image processing unit 44 in the image sensor IS. In particular, shelf images that are determined to be discarded by obstacle detection processing because the shelf images include a person are discarded without being output to the outside of the image sensor IS, and thus a certain degree of privacy protection can be achieved.

### <7. Third embodiment>

In a third embodiment, unlike the first and second embodiments, some of processes executed by a cloud server 1 are executed by a camera 3B.

Fig. 27 shows a block diagram showing an example of the internal configuration of the camera 3B.

The camera 3B includes an imaging optical system 31, an optical system drive unit 32, an image sensor IS, a control unit 33, a memory unit 34, a communication unit 35, and a power supply unit 38. That is, the camera 3B does not include a signal processing unit 36.

The image sensor IS is configured to include an imaging unit 41, an image signal processing unit 42, a sensor internal control unit 43, an AI image processing unit 44, a memory unit 45, and a communication I/F 46, similar to the second embodiment. The units can mutually perform data communication via a bus 47.

The AI image processing unit 44 performs image recognition processing, which is AI image processing, on a captured image.

As the AI image processing, the AI image processing unit 44 performs processing for comparing a reference shelf image with a processing target shelf image to detect a difference region, processing for cutting out a partial image, processing for specifying location information of the partial image in the processing target shelf image, processing for cutting out a corresponding image from the reference shelf image, processing for performing image recognition processing using the corresponding image and the partial image as input images and outputting a recognition result on the state of a product, and processing for determining a notification content in accordance with the recognized state of the product.

In order to realize these plurality of types of AI image processing by the AI image processing unit 44, the camera 3B is configured to be able to change an algorithm of the AI image processing executed by the AI image processing unit 44. The algorithm of the AI image processing is changed, for example, in response to an instruction from the control unit 33 of the camera 3B.

In addition, each AI model and AI application may be deployed in the memory unit 45 using container technology to be described below, or may be deployed using microservice technology.

A functional configuration of the AI image processing unit 44 is shown in Fig. 28.

As shown in the drawing, the AI image processing unit 44 functions as an image acquisition unit F1, an obstacle detection unit F2, a region specification unit F3, a cut-out processing unit F4, a corresponding image generation unit F12, an image recognition processing unit F13, and a transmission processing unit F5.

That is, the camera 3B captures images of products displayed on product shelves, detects changes in the display state of the product on the basis of the images, and determines whether a notification is necessary. When a notification is necessary, the camera 3B functions as a transmission processing unit F5 that transmits a notification content to the cloud server 1.

When privacy masking processing is performed, the AI image processing unit 44 may function as a masking processing unit F6.

When an imaging interval is optimized, the AI image processing unit 44 may function as a counting processing unit F15 or an instruction processing unit F16.

A functional configuration of the cloud server 1 in this embodiment is shown in Fig. 29.

A CPU 71 of the cloud server 1 functions as a notification processing unit F14.

That is, the cloud server 1 realizes only the notification processing function among the above-described functions.

Processing executed by the camera 3B and the cloud server 1 will be described with reference to the accompanying drawings. The same step numbers are used for the same processes as in the first embodiment, and the description thereof will be omitted as appropriate. Further, in each drawing, the same step numbers are used for processes that are executed by different processing entities, as long as the processing contents thereof are the same.

First, processing for acquiring a reference shelf image which is performed before the store opens is shown in Fig. 30.

In step S101, the control unit 33 of the camera 3B performs startup processing for the camera 3B.

Next, in step S102, the control unit 33 of the camera 3B performs imaging control for capturing a reference shelf image. The reference shelf image obtained by the imaging operation of the imaging unit 41 is stored in the memory unit 45.

The AI image processing unit 44 of the camera 3B reads out the reference shelf image from the memory unit 45 in step S103, and performs obstacle detection processing by the obstacle detection unit F2 in step S104 to determine whether an obstacle has been detected.

When it is determined that an obstacle has been detected, the AI image processing unit 44 of the camera 3B deletes the reference shelf image stored in the memory unit 45 in step S105, waits until a predetermined period of time elapses in step S106, and then returns to the process of step S102.

On the other hand, when it is determined in step S104 that no obstacle has been detected, the AI image processing unit 44 of the camera 3B transitions to a sleep mode in step S109.

That is, in the camera 3B, compression processing in step S107 and transmission processing in step S108 are omitted.

The compression process may be performed, and in this case, it is possible to reduce the data capacity of the shelf image stored in the memory unit 45 and effectively use the memory unit 45.

Next, an example of processing executed by the camera 3B to capture a processing target shelf image during business hours of the store and detect the state of products to determine a notification content will be described with reference to Figs. 31 and 32.

In step S201, the control unit 33 of the camera 3B determines whether a predetermined period of time has elapsed since the previous capture of a shelf image. When the predetermined period of time has not elapsed, the control unit 33 of the camera 3B returns to the process of step S201.

When it is determined that the predetermined period of time has elapsed, the control unit 33 of the camera 3B performs imaging control for capturing a processing target shelf image in step S202. The reference shelf image obtained by the imaging operation of the imaging unit 41 is stored in the memory unit 45.

In step S203, the AI image processing unit 44 of the camera 3B reads out the processing target shelf image from the memory unit 45, and in step S204, the AI image processing unit 44 performs obstacle detection processing by the obstacle detection unit F2 to determine whether an obstacle has been detected in the processing target shelf image.

When it is determined that an obstacle has been detected, the AI image processing unit 44 of camera 3B deletes the processing target shelf image stored in the memory unit 45 in step S205, waits until a predetermined period of time elapses in step S206, and then returns to the process of step S201.

On the other hand, when it is determined that no obstacle has been detected, the AI image processing unit 44 of the camera 3B reads out the previous shelf image from the memory unit 45 as a reference shelf image in step S207, performs processing for comparing the reference shelf image with the current processing target shelf image as the region specification unit F3 in step S208 to detect differences therebetween, and determines whether a difference region has been detected in step S209.

When it is determined that no difference region has been detected, the AI image processing unit 44 returns to the process of step S201. At this time, the control unit 33 of the camera 3B may cause the camera 3B to transition to a sleep mode.

On the other hand, when it is determined that a difference region has been detected, the AI image processing unit 44 of the camera 3B cuts out a partial region of the processing target shelf image as a partial image so that the difference region is included in step S210, deletes the current reference shelf image from the memory unit 45 in step S213, and stores the current processing target shelf image in the memory unit 45 as the next reference shelf image.

That is, the camera 3B does not execute compression processing for the partial image in step S211 and transmission processing in step S212.

Next, the camera 3B proceeds to the processing executed by the cloud server 1 in the first embodiment. Specifically, the AI image processing unit 44 of the camera 3B reads out the reference shelf image from the memory unit 45 in step S601 of Fig. 32, and cuts out the corresponding image from the reference shelf image on the basis of location information on the partial image in step S307.

In step S308, the AI image processing unit 44 of the camera 3B inputs the corresponding image and the partial image to the AI model to perform image recognition processing on the states of products shown in the partial image. The states of the products are output from the AI model as results of the image recognition processing. Similarly to the other embodiments, the states of the products include an "out-of-stock state", a "short supply state", an "inappropriate posture state", an "inappropriate display position state", an "inappropriate price tag state", and a "normal state".

In step S309, the AI image processing unit 44 of the camera 3B determines whether the recognition result of the product state which is output from the AI model indicates an out-of-stock state or a short supply state.

When it is determined that the recognition result of the product state indicates an out-of-stock state or a short supply state, the AI image processing unit 44 of the camera 3B transmits a notification request for product replenishment to the cloud server 1 in step S602. At this time, regarding the notification request transmitted to the cloud server 1, an out-of-stock state or a short supply state may be distinguishable from each other.

After the notification request is transmitted, the AI image processing unit 44 of the camera 3B stores a notification history in step S311.

After the history storage processing is performed, or after it is determined in step S309 that the product state is not an out-of-stock state or a short supply state, the AI image processing unit 44 of the camera 3B determines in step S312 whether the recognition result of the product state indicates an inappropriate posture state.

When it is determined that the recognition result of the product state indicates an inappropriate posture state, the AI image processing unit 44 of the camera 3B transmits a notification request for the arrangement of products to the cloud server 1 in step S603, and performs processing for storing the notification history in step S314.

After the history storage processing is performed, or after it is determined in step S312 that the product state is not an inappropriate posture state, the AI image processing unit 44 of the camera 3B determines in step S315 whether the recognition result of the product state indicates an inappropriate display position state.

When it is determined that the recognition result of the product state indicates an inappropriate display position state, the AI image processing unit 44 of the camera 3B transmits a notification request for product movement to the cloud server 1 in step S604, and performs processing for storing the notification history in step S317.

After the history storage processing is performed, or after it is determined in step S315 that the product state is not an inappropriate display position state, the AI image processing unit 44 of the camera 3B determines in step S318 whether the recognition result of the product state indicates an inappropriate price tag state.

When it is determined that the recognition result of the product state indicates an inappropriate price tag state, the AI image processing unit 44 of the camera 3B transmits a notification request for price tag correction to the cloud server 1 in step S605, and performs processing for storing the notification history in step S320.

After the history storage processing is performed, or after it is determined in step S318 that the product state is not an inappropriate price tag state, the AI image processing unit 44 of the camera 3B returns to the process of step S201 and waits until a predetermined period of time elapses.

Next, processing executed by the cloud server 1 will be described with reference to Fig. 33. In step S701, the CPU 71 of the cloud server 1 determines whether a notification request has been received from the camera 3B.

When it is determined that no notification request has been received, the CPU 71 of the cloud server 1 repeats the process of step S701.

On the other hand, when it is determined that a notification request has been received, the CPU 71 of the cloud server 1 performs notification processing according to the notification request for the user terminal 2 in step S702.

In this manner, in the third embodiment, the camera 3B executes each processing other than the notification processing for the user terminal 2. Then, the cloud server 1 only performs notification processing according to the request of the camera 3B.

Thereby, the captured shelf image is not output to the outside of the image sensor IS, and privacy protection can be strongly achieved.

In addition, many processes are executed in the camera 3B, and thus it is possible to reduce a processing load on the cloud server 1 on which processing tends to be concentrated, and also to reduce the amount of communication.

### <8. Fourth embodiment>

An information processing system 100 according to a fourth embodiment includes a fog server 4 as a store-side information processing device, unlike the above-described embodiments (see Fig. 34).

It is assumed that the fog server 4 is disposed in a target store together with cameras 3, for example, in the above-described application for monitoring products in the store. The fog server 4 is provided for each store in this manner, and thus a cloud server 1 does not need to directly receive transmission data from the plurality of cameras 3, and a processing load on the cloud server 1 is reduced.

In addition, when there are a plurality of target stores and all of the stores belong to the same chain, it is possible to provide one fog server 4 for a plurality of stores, rather than providing the fog server 4 for each store.

In the following description, the above-described various devices can be roughly divided into cloud-side information processing devices and edge-side information processing devices. Cloud-side information processing devices include cloud server 1 and other server devices, and are a group of devices that provide services that are expected to be used by plurality of users.

The edge-side information processing devices include the camera 3, the fog server 4, and a user terminal 2, and can be considered as a group of devices disposed in an environment prepared by a user who uses a cloud service.

However, both the cloud-side information processing devices and the edge-side information processing devices may be provided under an environment prepared by the same user.

The fog server 4 may be an on-premise server.

The fog server 4 has a hardware configuration as shown in Fig. 4, for example. A communication unit 35 (Fig. 3, Fig. 25, Fig. 27, and the like) of the camera 3 is configured to be able to perform data communication with the fog server 4 shown in Fig. 34.

The fog server 4 executes the processing performed by the signal processing unit 36 in the first embodiment and the signal processing unit 36 in the second embodiment instead.

The fog server 4 may also realize these processes as rule-based signal processing or as AI image processing.

The information processing system 100 includes the fog server 4, and thus it is possible to adopt a product with low computing power as the camera 3 and to reduce the introduction cost of the camera 3.

### <9. User Interface>

Results and the like of the above-described notification processing performed by the cloud server 1 can be viewed by a store manager via an application executed in a user terminal 2.

Specifically, the cloud server 1 manages various pieces of data on products in the store, performs analysis on the basis of the data, visualizes the results, and provides them to the manager. That is, the cloud server 1 has a report function and a dashboard function as a business intelligence (BI) tool.

In the user terminal 2 used by the manager, various pieces of information including the above-described notification information can be viewed by starting up an application for viewing the visualized analysis results. The application started up in the user terminal 2 may be a dedicated application or a web browser.

An example of a screen that can be viewed by the manager in the user terminal 2 is shown in Fig. 35. In the following description, an example of a case where the stock status of bread is managed is given. In this example, a processing target shelf image is captured every 5 minutes.

Fig. 35 shows a real-time stock status screen G1. The real-time stock status screen G1 is configured with an image display region 10 in which product shelves and shelf images of various types of bread displayed which are captured by the camera 3 are displayed, and other regions.

Here, an image displayed in the image display region 10 is a shelf image captured by the camera 3. The camera 3 may transmit shelf images to the cloud server 1 at certain time intervals, or may transmit only partial images to the cloud server 1 after capturing a reference shelf image and transmitting it to the cloud server 1 before the store opens as described above.

When only the partial image is transmitted from the camera 3 to the cloud server 1, the reference shelf image captured before the store opens is displayed in the image display region 10. When the partial image is received from the camera 3, the partial image may be superimposed on a corresponding region of the reference shelf image to reproduce a real-time product shelf display situation in the store.

The real-time stock status screen G1 is provided with a selected product information display region 11, a zoom operation region 12, and a time display region 13 above the image display region 10.

The selected product information display region 11 is a region in which the type of product (bread) selected on the image display region 10, group information, and the like are displayed.

Here, the group information is a collection of display spaces in which the same product is displayed. For example, in the state shown in Fig. 35, the same products are displayed in three display spaces that are adjacent to each other vertically and are linked together as one group (bold frame in the drawing).

Thus, the selected product information display region 11 displays that the selected product is a group product displayed in plurality of display spaces, and displays a product name.

The zoom operation region 12 is a region that is operated when the display state of products is desired to be viewed in detail, and makes it possible to enlarge or reduce a shelf image displayed in the image display region 10.

The time display region 13 is a region for displaying the time when the shelf image displayed in the image display region 10 is captured. The manager can compare the time with the current time to estimate the state of the product shelves at the current time.

At the uppermost part of the real-time stock status screen G1, an image switching operator 14, a data update operator 15, and a display switching operator 16 for switching shelf images to be displayed in the image display region 10 are disposed.

The image switching operator 14 is an operator that is used when there is a plurality of product shelves under management and shelf images of the product shelves are captured by the plurality of cameras 3. In the example shown in Fig. 35, two product shelves are captured by two cameras 3, and a shelf image of the second product shelf (shelf 2) is displayed in the image display region 10.

The data update operator 15 is an operator for reflecting, when there is a shelf image (or a partial image) or notification received after an application is started up, the information on the real-time stock status screen G1.

The display switching operator 16 is an operator for switching whether to display a label indicating a stock status so that the label is superimposed on each display space in the shelf image displayed in the image display region 10. Fig. 35 shows a state where no label is superimposed. In addition, Fig. 36 shows a state where a label is displayed to be superimposed on the shelf image displayed in the image display region 10.

A log information display region 17 is provided on the right side of the image display region 10.

In the log information display region 17, a history of notifications received from the cloud server 1 is displayed. The displayed notifications include various states such as an "out-of-stock state", a "short supply state", an "inappropriate posture state", an "inappropriate display position state", and an "inappropriate price tag state" as described above, but a filter function of selecting and displaying only some notifications may be provided.

A timeline display region 18 is provided below the image display region 10, and a graph display region 19 is provided below the timeline display region 18.

In the timeline display region 18, a time axis whose length corresponds to the opening hours of the store and a pointer 18a displayed on the time axis are displayed.

The pointer 18a is an operator that can be slid right and left along the time axis and is operated to determine the state of a shelf image to be displayed in the image display region 10.

The graph display region 19 is a region in which time-series data of the number of displayed products selected in the image display region 10 is displayed in the form of a graph.

A store selection field 20 and a function selection field 21 are disposed on the left side of the image display region 10.

The store selection field 20 is an operation field for selecting one from among options making it possible to uniquely specify a store, such as "Shibuya store" or "Harajuku store". A shelf image to be displayed in the image display region 10 is changed in accordance with a selection operation in the store selection field 20.

The function selection field 21 is an operation field for making it possible to select functions as a BI tool provided by the cloud server 1. The functions that can be selected through the function selection field 21 include, for example, "stock detection (grasp)" for detecting and visually displaying information on the stock of products, "line-of-flow analysis" for analyzing and displaying the movement of customers in the store, and "customer analysis" for analyzing customer demographics and gender of customers.

Two tabs are provided below the function selection field 21, one of which is a real-time tab 22 and the other is a setting tab 23.

The real-time tab 22 is an operator for displaying each of the above-described regions and operators, and is an operator for displaying the real-time stock status screen G1. Specifically, Figs. 35 and 36 show a state where the real-time tab 22 is selected.

The setting tab 23 is an operator for displaying a setting screen G2 for performing various settings.

Fig. 37 shows a state where the setting tab 23 is operated and the setting screen G2 is displayed.

The setting screen G2 is a screen for setting a product name (or product ID) of a product to be displayed on the product shelf.

A weekday setting region 24 for performing settings for the product shelf on weekdays and a holiday setting region 25 for performing settings for the product shelf on holidays are arranged vertically on the setting screen G2.

In the weekday setting region 24 and the holiday setting region 25, a plurality of product selection field 26 are arranged in a matrix.

The arrangement of the product selection field 26 is linked to the arrangement of display spaces on the product shelf. Therefore, in the example shown in Fig. 37, the product selection field 26 are arranged according to the arrangement of the display spaces on the product shelves shown in Figs. 35 and 36.

In the product selection field 26, one product name can be selected from among the set product names.

The product name can be set using a product name management button 27 disposed below the holiday setting region 25.

When the product name management button 27 is pressed, a product name management screen G3 shown in Fig. 38 is displayed. Details thereof will be described later.

A setting history confirmation button 28, a save button 29, and a reset button 30 are disposed on the right side of the product name management button 27 on the setting screen G2 in Fig. 37.

The setting history confirmation button 28 is an operator for restoring the previous setting state and making it possible to confirm the previous setting state.

The save button 29 is operated to save the current settings and apply it anew.

The reset button 30 is operated to end the settings without saving the current settings.

As shown in Fig. 38, the product name management screen G3 is provided with a region R1 for displaying the sorting order of product names, a region R2 for inputting a product name, and a region R3 for displaying a product ID for each product.

By inputting a product name in the region R2, the product name that can be selected in the product selection field 26 in Fig. 35 can be changed. In addition, the region R1 shows the order of display of options displayed in the product selection field 26. The order of display can be changed by operating a rearrangement operator Btn1 in a state where a product to be changed is selected.

A CPU 71 of the cloud server 1 functions as a display information generation unit F21 that generates display information for displaying the above-described various screens on the screen of the user terminal 2 (see Fig. 39).

The CPU 71 of the cloud server 1 also functions as a transmission processing unit F22 that performs transmission processing for displaying the generated display information on the user terminal 2.

The display information generated by the display information generation unit F21 is information for displaying a notification content of notification processing, a reference shelf image, and a processing target shelf image on the user terminal 2.

The display information can also be information in which information on the number of displayed products is superimposed on each display space of the products in a shelf image in accordance with display for the display switching operator 16 (see Fig. 36).

Furthermore, the display information includes information for displaying in an identifiable manner a state where the same products are grouped.

The display information also includes information making it possible to grasp the elapse of time (history) of the number of displayed products in the graph display region 19.

### <10. Registration of AI model and AI application>

As described above, in the information processing system 100, AI image processing is performed in the camera 3, which is an edge-side information processing device, and advanced application functions are realized in the cloud server 1, which is a cloud-side information processing device, using result information of the AI image processing on the edge side (for example, result information of image recognition processing using AI).

Specifically, in the second embodiment, AI image processing such as obstacle detection or difference region detection processing is performed by an AI image processing unit 44 provided in an image sensor IS.

In addition to this, in the third embodiment, AI image processing as recognition processing of the state of a product is also performed.

Furthermore, in the fourth embodiment, at least a part of the AI image processing may be executed in the fog server 4, which is an edge-side information processing device.

Here, various methods for registering application functions in the cloud server 1 (or fog server 4), which is a cloud-side information processing device, are conceivable.

One example will be described with reference to Fig. 40.

Although the fog server 4 is not shown in Fig. 40, the configuration may include the fog server 4. In this case, the fog server 4 may take on some of the edge-side functions.

The server devices such as the cloud server 1 described above are information processing devices that constitute a cloud-side environment.

Furthermore, the camera 3 is an information processing device that constitutes an edge-side environment. The image sensor IS provided in the camera 3 can also be considered as an information processing device that constitutes the edge-side environment. That is, the image sensor IS, which is another edge-side information processing device, can be considered to be mounted inside of the camera 3, which is an edge-side information processing device.

Further, in the above-described example, it has been described that the user terminal 2 is an information processing device used by a user who uses a product management function provided by the information processing system 100. When the information processing device used by a user who uses various services provided by the information processing system 100 is considered as the user terminal 2, there are other conceivable aspects of the user terminal 2.

For example, an information processing device used by a user who develops an application used in AI image processing is one aspect of the user terminal 2 (application developer terminal 2A), an information processing device used by a user who uses an application is also one aspect of the user terminal 2 (application user terminal 2B), and an information processing device used by a user who develops an AI model used in AI image processing is also one aspect of the user terminal 2 (AI model developer terminal 2C). The user terminal 2 used by a product manager to use an application for the product management described above can be said to be the application user terminal 2B.

The application developer terminal 2A may be used by users who develop applications that do not use AI image processing.

The cloud-side information processing device is provided with a training data set for performing AI training and an AI model that serves as the basis for development. A user who develops an AI model communicates with the cloud-side information processing device using the AI model developer terminal 2C and downloads these training data set and AI model. At this time, the training data set may be provided for a fee. For example, the AI model developer may purchase a training data set in a state where it is possible to purchase various functions and materials registered in a marketplace (electronic market) provided as a function on the cloud side by registering personal information in the marketplace.

After the AI model developer develops the AI model using the training data set, the AI model developer registers the developed AI model in the marketplace by using the AI model developer terminal 2C. Thereby, an incentive may be paid to the AI model developer when the AI model is downloaded.

In addition, a user who develops an application can download an AI model from a marketplace by using the application developer terminal 2A and develop an application using the AI model. At this time, as described above, an incentive may be paid to the AI model developer.

The application development user can register the developed AI application in the marketplace by using the application developer terminal 2A. Thereby, an incentive may be paid to the user who develops the AI application when the AI application is downloaded.

A user who uses an AI application performs an operation for deploying the AI application and the AI model from the marketplace to the camera 3, which is an edge-side information processing device managed by the user, by using the application user terminal 2B. At this time, an incentive may be paid to the AI model developer.

Thereby, it is possible to perform AI image processing using the AI application and the AI model on the camera 3, and it is possible to not only capture images but also perform AI image processing related to product management and attribute extraction of customers as described above.

Here, the deployment of the AI application and the AI model indicates installation of the AI application and the AI model in a target (device) as an execution subject so that the target as the execution subject can use the AI application and the AI model, in other words, so that at least a part of a program as the AI application can be executed.

Further, in the camera 3, attribute information of customers may be extracted from captured images captured by the camera 3 through AI image processing.

This attribute information is transmitted from the camera 3 to the cloud-side information processing device via a network 6.

Cloud applications are deployed in the cloud-side information processing device, and each user can use the cloud applications via the network 6. In addition to the above-described application for managing the number of products on display, the cloud applications are provided with an application for analyzing the line of flow of customers by using customer attribute information and captured images, and the like. Such cloud applications are uploaded by application development users, and the like.

The application users can analyze the number of products on display by using the application user terminal 2B to appropriately replenish products on display shelves.

In addition, the application user can perform line-of-flow analysis for customers in his or her own store by using the cloud application for line-of-flow analysis using the application user terminal 2B and can view analysis results. The analysis results can be viewed by presenting the line of flow of the customers graphically on a map of the store.

The results of the line-of-flow analysis can also be displayed in the form of a heat map, and the analysis results can be viewed by presenting the density of customers, and the like. This information can also be displayed in a categorized manner according to attribute information of the customers.

In a cloud-side marketplace, an AI model optimized for each user may be registered. For example, images captured by a camera 3 installed in a store managed by a certain user are uploaded and accumulated in the cloud-side information processing device as appropriate.

In the cloud-side information processing device, retraining processing is performed on the AI model every time a certain number of uploaded captured images are accumulated, and processing for updating the AI model and performing re-registration in the marketplace is executed.

For example, the retraining processing of the AI model may be selected as an option by a user on the marketplace.

For example, an AI model that has been relearned using a dark image from the camera 3 disposed inside of the store is deployed in the camera 3, and thus it is possible to improve the recognition rate of image processing for images captured in dark places. In addition, an AI model that has been relearned using a bright image from the camera 3 disposed outside of the store is deployed in the camera 3, and thus it is possible to improve the recognition rate of image processing for images captured in bright places.

That is, the application user deploys the updated AI model in the camera 3 again, and thus it is possible to obtain optimized processing result information at all times.

The retraining processing of the AI model will be described later.

Further, in the cloud-side marketplace, AI models optimized for the respective cameras 3 may be registered. For example, an AI model that is applied to a camera 3 that can acquire RGB images, an AI model that is applied to a camera 3 equipped with a distance measuring sensor that generates distance images, and the like are conceivable.

In addition, an AI model that has been trained using images of vehicles and images captured in a bright environment as an AI model to be used by the camera 3 during bright hours, and an AI model that has been trained using images captured in a dark environment as an AI model to be used by the camera 3 during dark hours may be registered in the marketplace.

These AI models are preferably updated as appropriate to AI models with improved recognition rates through retraining processing.

Furthermore, when information (such as captured images) uploaded from the camera 3 to the cloud-side information processing device includes personal information, data from which privacy information has been deleted may be uploaded from the viewpoint of privacy protection (the privacy masking processing described above), or data from which information on privacy has been deleted may be usable by AI model development users and application development users.

A flow of the above-described processing is shown in flowcharts of Figs. 41 and 42.

The cloud-side information processing device corresponds to the cloud server 1 in Fig. 1 and other server devices.

When an AI model developer views a list of data sets registered in a marketplace and selects a desired data set by using the AI model developer terminal 2C including a display unit such as an LCD or an organic EL panel, the AI model developer terminal 2C transmits a download request for the selected data set to the cloud-side information processing device in step S21.

In response to this, the cloud-side information processing device receives the request in step S1 and performs processing for transmitting the requested data set to the AI model developer terminal 2C in step S2.

In step S22, the AI model developer terminal 2C performs processing for receiving the data set. Thereby, the AI model developer can develop an AI model using the data set.

When the AI model developer ends the development of an AI model and then performs an operation for registering the developed AI model in a marketplace (for example, an operation of designating the name of an AI model, an address where the AI model is located, or the like), the AI model developer terminal 2C transmits a request to register the AI model in the marketplace to the cloud-side information processing device in step S23.

In response to this, the cloud-side information processing device receives the registration request in step S3 and performs AI model registration processing in step S4, and thus, for example, the cloud-side information processing device can display the AI model on the marketplace. Thereby, users other than the AI model developer can download the AI model from the marketplace.

For example, an application developer who is attempting to develop an AI application views a list of AI models registered in the marketplace by using the application developer terminal 2A. In response to an operation of the application developer (for example, an operation of selecting one of the AI models on the marketplace), the application developer terminal 2A transmits a download request for the selected AI model to the cloud-side information processing device in step S31.

The cloud-side information processing device receives the request in step S5 and transmits the AI model to the application developer terminal 2A in step S6.

In step S32, the application developer terminal 2A receives the AI model. Thereby, the application developer can develop an AI application that uses an AI model developed by another person.

When the application developer ends the development of an AI application and then performs an operation for registering the AI application in the marketplace (for example, an operation of designating the name of an AI application, an address where the AI model is located, or the like), the application developer terminal 2A transmits a request to register the AI application to the cloud-side information processing device in step S33.

The cloud-side information processing device receives the registration request in step S7 and registers the AI application in step S8, and thus, for example, the cloud-side information processing device can display the AI application on the marketplace. Thereby, users other than the application developer can select and download the AI application on the marketplace.

Fig. 42 shows an example in which a user other than an application developer selects and downloads an AI application on a marketplace. For example, in response to an operation of the user who is attempting to use the AI application, the application user terminal 2B selects a purpose in step S41. In the purpose selection, the selected purpose is transmitted to the cloud-side information processing device.

In response to this, the cloud-side information processing device selects an AI application according to the purpose in step S9 and selects an AI model in step S10. For example, table data in which AI applications according to purposes and AI models are associated with each other is stored in the cloud-side information processing device, making it possible to select an AI application according to a purpose and an AI model.

In step S11, the cloud-side information processing device performs processing for deploying the selected AI application and AI model. In this deployment processing, the AI application and the AI model are transmitted to the camera 3.

In response to this, deployment processing for the AI application and the AI model is performed in the camera 3 in step S51. Thereby, AI image processing can be performed on a captured image captured in the camera 3.

In step S52, the camera 3 captures an image by performing am imaging operation. Then, in step S53, the camera 3 performs AI image processing on the captured image to obtain, for example, an image recognition result.

In step S54, the camera 3 transmits the captured image and result information of the AI image processing. In the transmission of the information in step S54, both the captured image and the result information of the AI image processing may be transmitted, or only one of them may be transmitted.

The cloud-side information processing device that has received this information performs analysis processing in step S12. By this analysis processing, for example, line-of-flow analysis of customers, vehicle analysis processing for traffic monitoring, and the like are performed.

The cloud-side information processing device performs processing for presenting analysis results in step S13. This processing is realized, for example, by a user using the cloud application described above.

Following the analysis result presentation processing, the application user terminal 2B performs processing for displaying an analysis result on a monitor or the like in step S42.

With the processing up to this point, the user of the AI application can obtain analysis results according to the purpose selected in step S41.

The AI model may be updated to optimize the images captured by the camera 3 managed by the application user.

For example, the camera 3 repeatedly executes the processes of steps S52, S53, and S54, and thus the captured images received from the camera 3 and the result information of the AI image processing are accumulated in the cloud-side information processing device.

Then, when a certain amount of information has been accumulated, the cloud-side information processing device performs update processing for the AI model in step S14. This processing is processing for retraining the AI model by providing new data to the AI model.

In step S15, the cloud-side information processing device performs processing for deploying the new updated AI model.

Following this deployment processing, processing for deploying the new AI model is executed in the camera 3 in step S55.

When an AI application has also been updated, the updated AI application may be further deployed in the process of step S55.

### <11. Overview of function of system>

In this embodiment, as a service using the information processing system 100, a service in which a user, who is a customer, can select the type of function for AI image processing of each camera 3 is assumed. The selection of the type of function can be said to be setting of the above-described purpose. For example, an image recognition function, an image detection function, and the like may be selected, or a more detailed type may be selected to perform an image recognition function or an image detection function for a specific subject. For example, as a business model, a service provider sells a camera 3 and a fog server 4 with an AI image recognition function to a user, and installs the camera 3 and the fog server 4 in a place to be monitored. Then, the service provider deploys a service for providing the above-described analysis information to the user.

At this time, since the use (purpose) of the system differs for each customer, such as product monitoring, store monitoring, or traffic monitoring, an AI image processing function of the camera 3 can be selectively set such that analysis information corresponding to the purpose desired by the customer can be obtained.

In addition, it is also considered that, when a disaster such as an earthquake occurs, information desired to be acquired using the camera 3 will change. Specifically, in normal times, an AI image processing function for detecting customers and specifying their attributes is activated to realize a function as a store monitoring camera, and in the event of a disaster, the AI image processing function is switched to an AI image processing function for grasping products remaining on product shelves. At the time of this switching, it is conceivable to change an AI model so that appropriate recognition results can be obtained.

In this example, the cloud-side information processing device has a function of selectively setting the AI image processing function of the camera 3.

The fog server 4, which is an edge-side information processing device may have the functions of the cloud-side information processing device.

Here, connection between the cloud server 1, which is a cloud-side information processing device, and the camera 3, which is an edge-side information processing device, is described with reference to Fig. 43.

The cloud-side information processing device is equipped with a retraining function, a device management function, and a marketplace function, which are functions that can be used via a Hub.

The Hub performs highly reliable communication protected by security with the edge-side information processing device. Thereby, it is possible to provide various functions to the edge-side information processing device.

The retraining function is a function of performing retraining and providing a newly optimized AI model, which provides an appropriate AI model based on new training materials.

The device management function is a function of managing the camera 3 and the like which are edge-side information processing devices, and it is possible to provide functions such as management and monitoring of AI models deployed in the camera 3, problem detection, and troubleshooting.

In addition, the device management function is a function of managing information on the camera 3 and the fog server 4. The information on the camera 3 and the fog server 4 includes information on a chip used as an arithmetic processing unit, memory capacity, storage capacity, information such as usage rates of a CPU and a memory, and information on software such as an operating system (OS) installed in each device.

Furthermore, the device management function is used to protect secure access by authenticated users.

The marketplace function provides a function of registering the above-described AI model developed by the AI model developer and AI application developed by the application developer, a function of deploying these developments to authorized edge-side information processing devices, and the like. In addition, the marketplace function also provides a function related to payment of incentives according to the deployment of developments.

The camera 3, which is an edge-side information processing device, includes an edge runtime, an AI application, an AI model, and an image sensor IS.

The edge runtime functions as embedded software for managing applications deployed in the camera 3 and communicating with cloud-side information processing devices.

As described above, the AI model is a deployed AI model registered in the marketplace in the cloud-side information processing device, and thus the camera 3 can obtain result information of AI image processing according to the purpose by using a captured image.

An overview of the functions of the cloud-side information processing device will be described with reference to Fig. 44. The cloud-side information processing device is a collective name for various server devices such as the cloud server 1.

As shown in the drawing, the cloud-side information processing device has a license authorization function F31, an account service function F32, a device monitoring function F33, a marketplace function F34, and a camera service function F35.

The license authorization function F31 is a function of performing processing related to various authentications. Specifically, in the license authorization function F31, processing related to device authentication of each camera 3, and processing related to authentication of each of AI models, software, and firmware used in the camera 3 are performed.

Here, the above-mentioned software is software required to appropriately realize AI image processing in the camera 3.

In order for AI image processing based on captured images to be appropriately performed and for results of the AI image processing to be transmitted in an appropriate format to the fog server 4 and the cloud server 1, it is required to control data to be input to an AI model and appropriately process output data of the AI model. The above-mentioned software is software that includes peripheral processing required to appropriately realize AI image processing. Such software is software for realizing desired functions by using an AI model, and corresponds to the above-described AI application.

AI applications are not limited to those that use only one AI model, but AI applications using two or more AI models are conceivable. For example, there may be AI applications having a flow of processing in which image data as information on recognition results (such as image data, hereinafter referred to as "recognition result information") obtained by an AI model, which executes AI image processing using a captured image as an input tensor, is input as an input tensor to another AI model to execute second AI image processing. Alternatively, the AI application may be an AI application that performs predetermined image processing as second AI image processing on an input tensor for first AI image processing by using coordinate information as recognition result information of the first AI image processing. The input tensor for each AI image processing may be a RAW image, an RGB image obtained by performing synchronization processing on a RAW image, or the like. The same applies to the following descriptions.

In the license authorization function F31, when the camera 3 is connected to the network 6, processing for issuing a device ID for each camera 3 is performed to authenticate the camera 3.

In addition, when an AI model and software are authenticated, processing for issuing a unique ID (AI model ID, software ID) for each AI model and AI application that is applied for registration from the AI model developer terminal 2C and a software developer terminal 7.

Furthermore, in the license authorization function F31, processing for issuing various keys and certificates to the manufacturer of the camera 3 (particularly, the manufacturer of the image sensor IS to be described below), the AI model developer, and the software developer for performing secure communication between the camera 3, the AI model developer terminal 2C, the software developer terminal 7, and the cloud server 1 is performed, and processing for updating or stopping the validity of certification is also performed. Furthermore, in the license authorization function F31, when user registration (registration of account information accompanied by issuance of a user ID) is performed by the account service function F32 to be described below, processing associating the camera 3 (device ID mentioned above) purchased by a user with the user ID is also performed.

The account service function F32 is a function of generating and managing account information of a user. In the account service function F32, an input of user information is received, and account information is generated on the basis of the input user information (account information including at least a user ID and password information is generated). Further, in the account service function F32, registration processing (registration of account information) for an AI model developer and an AI application developers (hereinafter may be simply referred to as a "software developer") is also performed.

The device monitoring function F33 is a function of performing processing for monitoring the use state of the camera 3. For example, monitoring is performed on information such as the usage rate of the CPU and the memory described above as various elements related to the use state of the camera 3 such as the location where the camera 3 is used, the output frequency of output data of the AI image processing, and the free capacity of the CPU and the memory used for the AI image processing.

The marketplace function F34 is a function for selling AI models and AI applications. For example, users can purchase AI applications and AI models used by the AI applications via a sales website (sales site) provided by the marketplace function F34. Software developers can also purchase AI models for creating AI applications via the sales site.

The camera service function F35 is a function for providing services related to the use of the camera 3 to users.

One example of the camera service function F35 is the above-mentioned report function or dashboard function. That is, it is a function for generating analysis information on a subject on the basis of processing result information of image processing in the camera 3 and causing the user to view the analysis information view via the user terminal 2.

In addition, the camera service function F35 includes an imaging setting search function. Specifically, the imaging setting search function is a function of acquiring recognition result information of AI image processing from the camera 3 and searching for imaging setting information of the camera 3 using AI on the basis of the acquired recognition result information. Here, the imaging setting information broadly means setting information related to imaging operations for obtaining images. Specifically, it broadly includes optical settings such as a focus and an aperture, settings related to a readout operation of a captured image signal such as a frame rate, an exposure time, and a gain, and further settings related to image signal processing of the readout captured image signal such as gamma correction processing, noise reduction processing, and super-resolution processing. When the imaging setting search function is appropriately performed, the imaging settings of the camera 3 are optimized in accordance with the purpose set by the user, and satisfactory inference results can be obtained.

The camera service function F35 also includes an AI model search function. This AI model search function acquires the recognition result information of the AI image processing from the camera 3, and on the basis of the acquired recognition result information, searches for the optimal AI model to be used for the AI image processing in the camera 3 using AI. The AI model search here refers to the process of optimizing various processing parameters such as weight coefficients and setting information related to the neural network structure (including, for example, kernel size information) when the AI image processing is realized by a CNN (Convolutional Neural Network) that includes convolution operations.

The camera service function F35 may include a function of determining a processing load. In the processing load determination function, when an AI application is deployed in an edge-side information processing device, processing of determining a deployment destination device in units of SW components. Some SW components may be determined to be executed in a cloud-side device, and in this case, deployment processing may not be performed because the application has already been deployed in the cloud-side device.

By having the imaging setting search function and AI model search function as described above, it is possible to perform imaging settings that produce satisfactory results of AI image processing and to perform AI image processing by using an appropriate AI model according to the actual usage environment.

In addition, by having the processing load determination function, it is possible to execute AI image processing and analysis processing thereof in an appropriate device.

The camera service function F35 has an application setting function before deploying each SW component. The application setting function is a function of setting an appropriate AI application in accordance with the user's purpose.

For example, an appropriate AI application is selected depending on a purpose selected by the user. Thereby, SW components that constitute the AI application are automatically determined. There may be a plurality of types of combinations of SW components for achieving the user's purpose by using the AI application, and in this case, one combination is selected in response to information on the edge-side information processing device and the user's request.

For example, when the user aims to monitor a store, a combination of SW components may be different depending on whether the user's request places importance on privacy or speed.

In the application setting function, processing for receiving the user's selection of the purpose (application) on the user terminal 2 (corresponding to the application user terminal 2B in Fig. 40), processing for selecting an appropriate AI application in accordance with the selected application, and the like are performed.

Here, a configuration in which the license authorization function F31, the account service function F32, the device monitoring function F33, the marketplace function F34, and the camera service function F35 are realized by a single cloud server 1 has been exemplified in the above, but it is also possible to adopt a configuration in which these functions are realized by being divided by a plurality of information processing devices. For example, it is conceivable that each of the above functions is performed by one information processing device. Alternatively, it is also possible to perform a single function among the above-described functions by a plurality of information processing devices (for example, the cloud server 1).

Various configurations for the image sensor IS are conceivable. Here, an example in which the image sensor IS has a two-layered structure is described.

The image sensor IS is configured as a one-chip semiconductor device in which two dies are laminated, as shown in Fig. 45.

The image sensor IS is configured such that a die D1 and a die D2 are laminated on each other, the die D1 having a function of the imaging unit 41 shown in Figs. 3, 25, and 27, and a die D2 including an image signal processing unit 42, an sensor internal control unit 43, an AI image processing unit 44, a memory unit 45, and a communication I/F 46 are laminated on each other.

The die D1 and the die D2 are electrically connected to each other by, for example, Cu-Cu bonding.

### <12. Deployment of AI model and AI application>

Various methods of deploying an AI model and an AI application in the camera 3 are conceivable. As an example, an example using container technology will be described.

In the camera 3, an operation system 51 is installed on various hardware 50 such as a CPU, a graphics processing unit (GPU), a ROM, and a RAM, which serve as the control unit 33 shown in Fig. 3 and the like (see Fig. 46).

The operation system 51 is basic software that performs the overall control of the camera 3 to realize various functions in the camera 3.

General-purpose middleware 52 is installed on the operation system 51.

The general-purpose middleware 52 is software for realizing basic operations such as a communication function using the communication unit 35 as the hardware 50 and a display function using a display unit (monitor or the like) as the hardware 50.

In addition to the general-purpose middleware 52, an orchestration tool 53 and a container engine 54 are also installed on the operation system 51.

The orchestration tool 53 and the container engine 54 deploy and execute the container 55 by constructing a cluster 56 as the operating environment of the container 55.

The edge runtime shown in Fig. 43 corresponds to the orchestration tool 53 and the container engine 54 shown in Fig. 46.

The orchestration tool 53 has a function of appropriately allocating resources of the above-described hardware 50 and operation system 51 to the container engine 54. The orchestration tool 53 groups the containers 55 into a predetermined unit (pod to be described later), and the pods are deployed in a worker node (to be described later) that is a logically different region.

The container engine 54 is one of the middleware installed in the operation system 51, and is an engine that operates the container 55. Specifically, the container engine 54 has a function of allocating the resources (memory, computing power, and the like) of the hardware 50 and the operation system 51 to the container 55 on the basis of a setting file and the like of the middleware in the container 55.

Further, in this embodiment, the resources to be allocated include not only the resources of the control unit 33 of the camera 3 but also the resources of the sensor internal control unit 43, the memory unit 45, and the communication I/F 46 of the image sensor IS.

The container 55 is configured to include middleware such as an application and a library for realizing a predetermined function.

The container 55 operates to realize a predetermined function using the resources of the hardware 50 and the operation system 51 which are allocated by the container engine 54.

In this embodiment, the AI application and AI model shown in Fig. 43 correspond to one of the containers 55. That is, one of the various containers 55 deployed in the camera 3 realizes a predetermined AI image processing function using an AI application and an AI model.

A specific example of the configuration of the cluster 56 constructed by the container engine 54 and the orchestration tool 53 will be described with reference to Fig. 47. The cluster 56 may be constructed across a plurality of devices so that functions are realized using not only the hardware 50 of one camera 3 but also resources of other hardware of other devices.

The orchestration tool 53 manages the execution environment of the container 55 in units of the worker nodes 57. The orchestration tool 53 also constructs a master node 58 that manages the entire worker node 57.

A plurality of pods 59 are deployed in the worker node 57. The pod 59 is configured to include one or a plurality of containers 55 and realizes a predetermined function. The pod 59 is treated as a management unit for managing the container 55 by the orchestration tool 53.

The operation of the pod 59 in the worker node 57 is controlled by a pod management library 60.

The pod management library 60 is configured to include a container runtime for allowing the pods 59 to use resources of the logically allocated hardware 50, an agent that is controlled by the master node 58, a network proxy that communicates with the pod 59 and communicates with the master node 58, and the like.

That is, the pods 59 can realize a predetermined function using each resource by the pod management library 60.

The master node 58 is configured to include an application server 61 that deploys the pods 59, a manager 62 that manages the deployment status of the container 55 by the application server 61, a scheduler 63 that determines the worker node 57 on which the container 55 is disposed, and a data sharing unit 64 that shares data.

By using the configurations shown in Figs. 46 and 47, it is possible to deploy the AI application and AI model described above in the image sensor IS of the camera 3 using container technology.

As described above, the AI model may be stored in the memory unit 45 in the image sensor IS via the communication I/F 46 in Fig. 3 and the like, and AI image processing may be executed in the image sensor IS, or the configuration shown in Fig. 46 and Fig. 47 may be deployed in the memory unit 45 and sensor control unit 43 in the image sensor IS, and the AI application and AI model described above may be executed in the image sensor IS using container technology.

In addition, as described below, container technology can be used also when an AI application and/or an AI model is deployed in the fog server 4 or the cloud-side information processing device.

In this case, information on the AI application or the AI model is deployed in a memory such as the non-volatile memory unit 74, the storage unit 79, or the RAM 73 in Fig. 4 as a container or the like, and then executed.

### <13. Other>

As described above, reference will be made to Fig. 48 to describe a flow of processing in which, after SW components of an AI application and an AI model are deployed, retraining of the AI model and updating of the AI model (hereinafter referred to as an "edge-side AI model") deployed in the cameras 3 and the like and the AI application are performed using an operation of a service provider or a user as a trigger. Fig. 48 is shown by focusing on one camera 3 among the plurality of cameras 3. In addition, the edge-side AI model to be updated in the following description is one deployed in the image sensor IS of the camera 3 as an example, but the edge-side AI model may be naturally deployed outside of the image sensor IS in the camera 3.

First, in processing step PS1, a service provider or a user gives an instruction to relearn an AI model. This instruction is given using an API function of an application programming interface (API) module included in a cloud-side information processing device. The instruction also designates the amount of images (for example, the number of images) to be used for training. Hereinafter, the amount of images to be used for training will also be referred to as a "predetermined number of images".

The API module receives the instruction, and transmits a request for retraining and information on the amount of images to a Hub (similar to that shown in Fig. 43) in processing step PS2.

In processing step PS3, the Hub transmits an update notification and the information on the amount of images to the camera 3 which is an edge-side information processing device.

In processing step PS4, the camera 3 transmits captured image data obtained by performing imaging to an image database (DB) of a storage group. This imaging processing and transmission processing are performed until a predetermined number of images required for retraining is reached.

When the camera 3 obtains an inference result by performing inference processing on the captured image data, the inference result may be stored in the image DB as metadata for the captured image data in processing step PS4.

The inference result in the camera 3 is stored in the image DB as metadata, and thus it is possible to carefully select data necessary for retraining of the AI model executed on the cloud side. Specifically, retraining can be performed using only image data where the inference result in the camera 3 differ from a result of inference executed on the cloud-side information processing device using abundant computer resources. Thus, it is possible to shorten the time required for retraining.

After a predetermined number of images are captured and transmitted, the camera 3 notifies the Hub in processing step PS5 that the transmission of the predetermined number of pieces of captured image data has been completed.

Upon receiving this notification, the Hub notifies the orchestration tool 53 in processing step PS6 that the preparation of the data for retraining has been completed.

In processing step PS7, the orchestration tool 53 transmits an instruction to execute labeling processing to a labeling module.

The labeling module acquires image data to be subjected to labeling processing from the image DB (processing step PS8) and performs the labeling processing.

The labeling processing mentioned here may be processing for performing class identification described above, may be processing for estimating the gender and age of a subject of an image and assigning a label, may be processing for estimating the pose of a subject and assigning a label, or may be processing for estimating the action of a subject and assigning a label.

The labeling processing may be performed manually or automatically. The labeling processing may be completed by an information processing device on the cloud side, or may be realized by using a service provided by another server device.

After completing the labeling processing, the labeling module stores labeling result information in a data set DB in processing step PS9. Here, the information stored in the data set DB may be a combination of label information and image data, or may be image ID information for specifying image data instead of the image data itself.

A storage management unit that has detected that the labeling result information has been stored notifies the orchestration tool 53 in processing step PS10.

The orchestration tool 53 that has received the notification confirms that the labeling processing for the predetermined number of pieces of image data has been completed, and transmits a retraining instruction to the retraining module in processing step PS11.

The retraining module that has received the retraining instruction acquires a data set to be used for training from the data set DB in processing step PS12, and acquires an AI model to be updated from the trained AI model DB in processing step PS13.

The retraining module relearns the AI model using the acquired data set and AI model. The updated AI model obtained in this manner is stored in a relearned AI model DB in processing step PS14.

When the storage management unit that has detected that the updated AI model has been stored notifies the orchestration tool 53 in processing step PS15.

In processing step PS16, the orchestration tool 53 receives the notification and transmits an instruction to convert the AI model to a conversion module.

The conversion module that has received the conversion instruction acquires the updated AI model from the trained AI model DB in processing step PS17 and performs conversion processing for the AI model.

In the conversion processing, conversion process is performed in accordance with specification information of camera 3, which is a device at deployment destination. In this processing, downsizing is performed to minimize the loss of performance of the AI model, and conversion in a file format, and the like are performed so that the AI model can operate on the camera 3.

The AI model converted by the conversion module is an edge-side AI model described above. The converted AI model is stored in a converted AI model DB in processing step PS18.

When the storage management unit that has detected that the converted AI model has been stored, the storage management unit notifies the orchestration tool 53 in processing step PS19.

The orchestration tool 53 that has received the notification transmits a notification for updating the AI model to the Hub in processing step PS20. This notification includes information for specifying the location where the AI model to be used for the updating is stored.

The Hub that has received the notification transmits an instruction to update the AI model to the camera 3. The update instruction also includes information for specifying the location where the AI model is stored.

In processing step PS22, the camera 3 performs processing for acquiring a target converted AI model from the converted AI model DB and deploying it. Thereby, the AI model used in the image sensor IS of the camera 3 is updated.

The camera 3 that has ended the updating of the AI model by deploying expanding it transmits an update completion notification to the Hub in processing step PS23.

In processing step PS24, the Hub that has received the notification notifies the orchestration tool 53 that the AI model update processing for the camera 3 has been completed.

Here, a description has been given of an example in which the AI model is deployed and used within the image sensor IS of the camera 3 (for example, the memory unit 45 shown in Fig. 3), but the AI model can be updated in the same manner even when the AI model is deployed and used in a storage unit outside of the image sensor in the camera 3 (for example, the memory unit 34 in Fig. 3) or in a storage unit within the fog server 4.

In this case, when the AI model is deployed, the device (location) in which the AI model is deployed is stored in the storage management unit or the like on the cloud side, and the Hub reads out the device (location) in which the AI model is deployed from the storage management unit and transmits an update instruction for the AI model to the device in which the AI model is deployed.

In processing step PS22, the device that has received the update instruction acquires a target converted AI model from the converted AI model DB and deploys it. Thereby, the AI model of the device that has received the update instruction is updated.

When the AI model is only updated, the processing is completed up to this point.

When an AI application that uses the AI model is updated in addition to the AI model, processing to be described below is executed.

Specifically, in processing step PS25, the orchestration tool 53 transmits a download instruction for the AI application, such as updated firmware, to a deployment control module.

The deployment control module transmits an instruction to deploy the AI application to the Hub in processing step PS26. This instruction includes information for specifying the location where the updated AI application is stored.

In processing step PS27, the Hub transmits the deployment instruction to the camera 3.

In processing step PS28, the camera 3 downloads the updated AI application from a container DB of the deployment control module and deploys it.

In the above description, a description has been given of an example in which the updating of the AI model operating on the image sensor IS of the camera 3 and the updating of the AI application operating outside of the image sensor IS of the camera 3 are performed sequentially.

Here, for simplicity of description, the AI application has been described, but as described above, the AI application is defined by a plurality of SW components such as SW components B1, B2, B3, ..., and Bn. When the AI application is deployed, a cloud-side storage management unit stores where each SW component is deployed. The Hub reads out the device (location) where each SW component is deployed from the storage management unit when performing processing step PS27, and a deployment instruction is transmitted to the device in which SW component is deployed. In processing step PS28, the device that has received the deployment instruction downloads the updated SW component from the container DB of the deployment control module and deploys it.

The AI application mentioned here is an SW component other than the AI model.

In addition, when both the AI model and the AI application are supposed to operate on one device, both the AI model and the AI application may be updated together as one container. In this case, the updating of the AI model and the updating of the AI application may be performed simultaneously, not sequentially. This can be achieved by executing the processing steps PS25, PS26, PS27, and PS28.

For example, when it is possible to deploy containers for both the AI model and the AI application in the image sensor IS of the camera 3, the AI model and the AI application can be updated by executing the processing steps PS25, PS26, PS27, and PS28 as described above.

By performing the above-described processing, the AI model is relearned using captured image data captured in the user's usage environment. Thus, it is possible to generate an edge-side AI model that can output highly accurate recognition results in the user's usage environment.

In addition, even when the imaging environment of the camera 3 changes, such as when a vehicle equipped with the 3 as an in-vehicle camera is traveling in an area different from before, or when the amount of light incident on an imaging device changes due to changes in weather or time, the AI model can be relearned appropriately each time, making it possible to maintain the recognition accuracy of the AI model without deterioration.

The above-described processing may be executed not only when retraining the AI model, but also when operating the system for the first time under the user's usage environment.

### <14. Example of screen for marketplace>

An example of a screen for a marketplace presented to a user will be described with reference to the drawings.

Fig. 49 shows an example of a login screen G11.

In the login screen G11, an ID input field 91 for inputting a user ID, and a password input field 92 for inputting a password are provided.

A login button 93 for performing login and a cancel button 94 for canceling login are disposed below the password input field 92.

Further, an operator for transitioning to a page for users who have forgotten their passwords, an operator for transitioning to a page for new user registration, and the like are appropriately disposed below the buttons.

When the login button 93 is pressed after inputting an appropriate user ID and password, processing for transitioning to a page specific to a user is executed on each of the cloud server 1 and the user terminal 2.

Fig. 50 shows an example of a screen presented to, for example, an AI application developer using the application developer terminal 2A, or an AI model developer using the AI model developer terminal 2C.

The developers can purchase training data sets, AI models, and AI applications for development through the marketplace. In addition, the developers can register their own developed AI applications and AI models on the marketplace.

In a developer screen G12 shown in Fig. 50, purchasable training data sets, AI models, AI applications, and the like (hereafter collectively referred to as "data") are displayed on the left side.

Although not shown in the drawing, when the training data sets are purchased, training can be prepared by displaying the images of the training data sets on the display, surrounding only a desired part of the image by a frame using an input device such as a mouse, and only inputting the name.

For example, when AI training is desired to be performed with an image of a cat, an image to which a cat annotation is added can be prepared for AI training by surrounding only a part of a cat on the image with a frame and inputting "cat" as a text input.

In addition, to make it easier to find desired data, it may be possible to select a purpose such as "traffic monitoring," "line-of-flow analysis," or "customer count". In other words, display processing in which only data that matches the selected purpose is displayed is executed in each of the cloud server 1 and the user terminal 2.

In the developer screen G12, the purchase price of each piece of data may be displayed.

In addition, on the right side of the developer screen G12, an input field 95 for registering training data sets collected or created by the developers, and AI models and AI applications developed by the developers are provided.

For each piece of data, the input field 95 for inputting a name and a storage location of the data is provided. In addition, for the AI model, a check box 96 for setting whether retraining is required is provided.

A price setting field (shown as the input field 95 in the drawing) for setting a price required to purchase data to be registered, and the like may be provided.

In addition, a user name, the last login date, and the like may be displayed as a part of user information in the upper part of the developer screen G12. In addition, the amount of currency and the number of points that the user can use when purchasing data may also be displayed.

Fig. 51 shows an example of a user screen G13 that is presented to a user (the application user described above) who performs various analyses by deploying an AI application or an AI model in the camera 3 which is an edge-side information processing device that the user manages.

A user can purchase a camera 3 to be disposed in a space to be monitored via the marketplace. Thus, a radio button 97 that allows a user to select the type and performance of the image sensor IS to be installed in the camera 3 and the performance of the camera 3 is disposed on the left side of the user screen G13.

A user can also purchase an information processing device as the fog server 4 via the marketplace. Thus, a radio button 97 that allows users to select each performance of the fog server 4 is disposed on the left side of the user screen G13.

In addition, a user who already has the fog server 4 can register the performance of the fog server 4 by inputting the performance information of the fog server 4 here.

A user can achieve a desired function by installing a purchased camera 3 (or a camera 3 purchased without going through the marketplace) in any place such as a store he or she manages. In the marketplace, the user can register information on the location where the camera 3 is installed in order to maximize the functionality of each camera 3.

A radio button 98 that allows a user to select environmental information on the environment in which the camera 3 is installed is disposed on the right side of the user screen G13. The user can set the above-described optimal imaging settings for the target camera 3 by appropriately selecting environmental information on the environment in which the camera 3 is installed.

When a camera 3 is purchased and the location where a camera 3 to be purchased has already been determined, it is possible to purchase a camera 3 for which optimal imaging settings have already been set in accordance with a planned installation location by selecting each item on the left side and each item on the right side of the user screen G13.

In the user screen G13, an execution button 99 is provided. By pressing the execution button 99, the screen transitions to a confirmation screen for confirming the purchase and a confirmation screen for confirming the setting of the environmental information. Thereby, the user can purchase a desired camera 3 and fog server 4 and set environmental information for the camera 3.

In the marketplace, it is possible to change the environmental information for each camera 3 in case the installation location of the camera 3 is changed. By inputting the environmental information for the installation location of the camera 3 again in a change screen (not shown), it is possible to set optimal imaging settings for the camera 3 again.

### <15. Conclusion>

As described above in each of the examples, a transmission device (camera 3 or fog server 4) includes an image acquisition unit F1 that acquires an image a first shelf image (reference shelf image) of a product shelf on which a product is displayed at a first time (for example, predetermined time before a store opens) and a second shelf image (processing target shelf image) of a product shelf at a second time (for example, predetermined time after the store opens) that is after the first time, a region specification unit F3 that specifies a difference region between the first shelf image and the second shelf image, a cut-out processing unit F4 that cuts out a partial image from the second shelf image so that the difference region is included, and a transmission processing unit F5 that transmits the first shelf image and the partial image to a reception device (cloud server 1).

In order to issue various alerts in accordance with the state of the product displayed on the product shelf, the transmission device (camera 3 or the like) transmits images of the product shelf to the reception device (cloud server 1). The reception device then performs image recognition processing using the received images to recognize an out-of-stock state, an inappropriate display position state, or the like of products. At this time, transmitted data is reduced by transmitting only the difference region between the first and second shelf images.

Thus, it is possible to reduce the amount of communication and power consumption related to communication.

As described above with reference to Fig. 5 and the like, the region specification unit F3 of the camera 3, which is a transmission device, may specify location information of the difference region in the second shelf image (processing target shelf image), and the transmission processing unit F5 may transmit the location information.

Thereby, it is possible to specify a region in the first shelf image (reference shelf image) to be compared with the partial image. Thus, the state of the product can be appropriately grasped.

As described above with reference to Fig. 6 and the like, in the camera 3 which is a transmission device, the above-described location information may be coordinate information in the second shelf image (processing target shelf image).

The coordinate information may be, for example, X and Y coordinates of an image. Thereby, it is possible to specify a region in the first shelf image (reference shelf image) to be compared with the partial image.

As described above with reference to Fig. 7 and the like, in the camera 3 which is a transmission device, the above-described location information may be information (display space ID) for specifying the location where the product included in the difference region is displayed.

For example, a unique shelf ID such as a shelf T1, T2, ... is assigned to each stage of the shelf from the upper stage. In addition, when a plurality of types of products are displayed on one stage, a unique display space ID such as a display space Sp1, a display space Sp2, ... is assigned to each display space.

Then, the region specification unit F3 specifies a shelf ID and a display space ID where the products included in the difference region are displayed. The transmission processing unit F5 transmits the shelf ID and the display space ID together with the partial image to the reception device (cloud server 1). Thereby, in the reception device, it is possible to specify an image region to be compared with the partial image in the first shelf image (reference shelf image).

As described above with reference to Fig. 5 and the like, the transmission processing unit F5 of the camera 3, which is a transmission device, may compress the first shelf image (reference shelf image) and the partial image and transmit them to the reception device (cloud server 1).

Thereby, it is possible to further reduce transmission data and further reduce the amount of communication and power consumption.

As described above with reference to Fig. 5 and the like, the image acquisition unit F1 of the camera 3, which is a transmission device, may acquire the first shelf image again when it is determined that the occlusion of products displayed on the product shelf has occurred in the first shelf image (reference shelf image).

Thereby, it is possible to appropriately compare the partial image with a specific region of the first shelf image and to reliably grasp the state of products.

As described above with reference to Fig. 3 and the like, the camera 3, which is a transmission device, may include an imaging unit 41 that captures the first shelf image (reference shelf image) and the second shelf image (processing target shelf image), and the imaging unit 41 may capture the second shelf image at predetermined time intervals.

The transmission device also functions as an imaging device. Then, the transmission device captures the second shelf image at predetermined time intervals such as every two hours. Thereby, it is possible to grasp the number of products on display during business hours of the store and to curb loss of sales opportunities due to an out-of-stock state of products on the product shelf.

As described above with reference to Figs. 3 and 5 and the like, the camera 3, which is a transmission device, includes a battery (power supply unit 38) that supplies a power supply voltage, and the imaging unit 41 may change a predetermined period of time in accordance with the remaining battery charge of the battery.

In a transmission device which is a battery-powered imaging device (camera 3), it is desirable to optimize an imaging interval in accordance with the remaining battery charge of the battery. Thereby, it is possible to lengthen the cycle of imaging and avoid a situation in which the second shelf image (processing target shelf image) cannot be captured due to battery exhaustion.

As described above in each of the examples, the cloud server 1, which is a reception device, includes a reception processing unit F11 that receives a partial image of a second shelf image that is cut out to include a difference region between a first shelf image (reference shelf image) captured at a first time (for example, predetermined time before a store opens) for a product shelf on which a product is displayed and the second shelf image (processing target shelf image) captured at a second time after the first time (for example, predetermined time after the store opens), an image recognition processing unit F13 that performs image recognition processing of the partial region to recognize the state of the product, and a notification processing unit F14 that executes notification processing according to the state of the product.

The reception device receives the partial image of the second shelf image, and thus it is possible to reduce received data compared to receiving the entire second shelf image. It is possible to perform appropriate notification processing such as an alert by appropriately specify changed parts in the first shelf image and recognizing the state of the product by using the partial image of the second shelf image. Thus, it is possible to optimize the display state of the product and increase sales opportunities to obtain profits.

As described above with reference to Figs. 11, 12, and 13 and the like, the state of the product recognized by the cloud server 1, which is a reception device, may be a state related to the number of products.

The state related to the number of products is, for example, an "out-of-stock state" where there are no products on display, a "short supply state" where the number of products is less than a predetermined number, or the like. By appropriately recognizing these product states, it is possible to rapidly replenish products on the product shelf and to avoid loss of sales opportunities.

As described above with reference to Figs. 11 and 14 and the like, the state of the product recognized by the cloud server 1, which is a reception device, may be a state regarding the posture of the displayed product.

The state regarding the posture of the product may be, for example, a state where the product is lying down or a state where the back side of the product is facing forward. A notification is given when such a state is recognized, and thus it is possible for an employee or the like to arrange the posture of the product on the product shelf, thereby maintaining the display state with a good appearance and making it possible to stimulate the purchasing desire of customers and increase sales opportunities.

As described above with reference to Figs. 11 and 15, the state of the product recognized by the cloud server 1, which is a reception device, may be a state regarding a display position. The state regarding the display position of the product is, for example, a state where the product is displayed in a different display space. Such a state occurs, for example, when a customer returns a product he or she picked up to a display space different from the one in which it was originally displayed when returning it to the product shelf. A notification regarding such a product state is given, and thus it is possible to move the product to an appropriate display space and to eliminate the possibility of misunderstanding that the product state is an out-of-stock state. Thus, it is possible to prevent loss of product sales opportunities.

As described above with reference to Figs. 11 and 16 and the like, the state of the product recognized by the cloud server 1, which is a reception device, may be a state regarding a price tag of a product.

In a display space where products are displayed, for example, a plate (price tag) with a product name and price of a product may be installed. When the plate is installed incorrectly or when a different product is returned to a display space where products are out of stock, a combination of a product and a price displayed on the plate may become inappropriate.

In such a case, processing for giving a notification that the price tag of the product is inappropriate is executed, and thus work for returning the product to an appropriate position or plate correction work are performed, thereby making it possible to prevent loss of product sales opportunities. In particular, when a plate with a price higher than the original price is installed, the product price is perceived as fairly high, reducing purchasing desire. Such a situation can be avoided by performing the above-mentioned work.

As described above with reference to Figs. 9 and 18 and the like, the second shelf image (processing target shelf image) is captured at predetermined time intervals, and for the cloud server 1 which is a reception device, the notification processing unit F14 performs notification processing for each product and for each type of notification content, and there may be provided a counting processing unit F15 that counts the number of times notification processing has been performed for each product and for each type of notification content, and an instruction processing unit F16 that gives an instruction to change a predetermined period of time for the second shelf image in accordance with the number of times of counting.

For example, when the second shelf image is captured and the associated image recognition processing is performed four times during business hours and notification processing regarding an out-of-stock state is performed all four times, it is appropriate to capture images and performs image recognition more frequently in order to appropriately replenish products.

With this configuration, it is possible to acquire the number of times of imaging and the number of times of notification processing and to change the number of times of imaging and the number of times of image recognition accordingly. Thus, this leads to an appropriate grasp of the product state, and it is possible to avoid loss of sales opportunities.

As described above with reference to Figs. 35, 36, 37, and 38 and the like, the cloud server 1, which is a reception device, may include a display information generation unit F21 that generates display information in which the notification content of the notification processing and the second shelf image (processing target shelf image) are displayed, and a transmission processing unit F22 that transmits the display information.

For example, a manager of the store having a product shelf installed therein can receive, on a management terminal, web page information as the display information in which the second shelf image and the notification content are displayed. Then, by confirming the web page information on the management terminal (user terminal 2, application user terminal 2B), it is possible to grasp products required to be replenished or products whose display state needs to be arranged. Thus, it is possible to normalize the product state and increase product sales opportunities. In addition, it is possible to grasp not only what products are likely to be sold well, but also what products are likely to be returned to a product shelf after being picked up, and the like on the basis of the notification content. By utilizing such information in sales strategies for products, it is possible to utilize it for preferable product placement, a preferable display state, and the like.

As described above with reference to Fig. 36 and the like, the display information transmitted by the cloud server 1, which is a reception device, may be information in which information on the number of displayed products is superimposed on each display region (each display space) of each product in the second shelf image (processing target shelf image).

Thereby, it is possible to recognize which product is in what state separately and to take prompt action.

As described above with reference to Fig. 35 and Fig. 36, when the same product is displayed in different display sections (display spaces) on the product shelf, the display information transmitted by the cloud server 1, which is a reception device, may include information for identifying group information that groups display sections in which the same products are displayed.

Thereby, it is possible to correctly grasp the number of products displayed for each product. Thus, when there is the same product in another display space even when there is an empty space on the product shelf being in an out-of-stock state, it is possible to prevent products from being replenished randomly and to suppress unnecessary work.

As described above with reference to Figs. 35 and 36, the display information transmitted by the cloud server 1, which is a reception device, may include history information on the number of products displayed.

Thereby, it is possible to grasp product sales in time series, which can be used for sales strategies at each time.

An information processing method in the present technology causes a computer device, which is a camera 3, to execute processing for acquiring a first shelf image captured at a first time for a product shelf on which a product is displayed and a second shelf image captured for the product shelf at a second time after the first time, processing for specifying a difference region between the first shelf image and the second shelf image, processing for cutting out a partial image from the second shelf image so that the difference region is included, and processing for transmitting the first shelf image and the partial image to a reception device.

In addition, an information processing method in the present technology causes a computer device, which is a cloud server 1, to execute processing for receiving a first shelf image captured at a first time for a product shelf on which a product is displayed and a partial image of a second shelf image which is cut out to include a difference region between the first shelf image and the second shelf image captured at a second time after the first time, processing for performing image recognition processing on the partial image to recognize the state of products, and notification processing according to the state of products.

A program to be executed by the above-described information processing device (camera 3, cloud server 1) can be recorded in advance on a hard disk drive (HDD) as a recording medium built into a device such as a computer device, or on a ROM in a microcomputer including a CPU. Alternatively, the program can be temporarily or permanently stored (recorded) on removable recording media such as a flexible disk, a compact disk read only memory (CD-ROM), a magneto optical (MO) disc, a digital versatile disc (DVD), a flexible disk (Blu-ray Disc (registered trademark)), a magnetic disk, a semiconductor memory, or a memory card. Such removable recording media can be provided as so-called packaged software.

In addition, such a program can be installed in a personal computer or the like from a removable recording medium, or can also be downloaded from a download site via a network such as a local area network (LAN) or the Internet.

The effects described in this specification are merely examples and are not limiting, and other effects may also be obtained.

Furthermore, the above-described examples may be combined in any manner, and even when various combinations are used, the various operational effects described above can be obtained.

### <16. This technology>

This technology can adopt the following configurations.
(1) A transmission device including:
   an image acquisition unit that acquires a first shelf image captured at a first time for a product shelf on which a product is displayed, and a second shelf image captured for the product shelf at a second time after the first time;
   a region specification unit that specifies a difference region between the first shelf image and the second shelf image;
   a cut-out processing unit that cuts out a partial image from the second shelf image so that the difference region is included; and
   a transmission processing unit that transmits the first shelf image and the partial image to a reception device.
(2) The transmission device according to (1), wherein
   the region specification unit specifies location information on the difference region in the second shelf image, and
   the transmission processing unit transmits the location information.
(2) The transmission device according to (2), wherein the location information is coordinate information in the second shelf image.
(4) The transmission device according to (2), wherein the location information is information for specifying a location where the product included in the difference region is displayed.
(5) The transmission device according to any of (1) to (4), wherein the transmission processing unit compresses the first shelf image and the partial image and transmits them to the reception device.
(6) The transmission device according to any of (1) to (5), wherein the image acquisition unit acquires the first shelf image again when it is determined that occlusion of the product displayed on the product shelf has occurred in the first shelf image.
(7) The transmission device according to any one of (1) to (6), further including:
   an imaging unit that captures the first shelf image and the second shelf image,
   wherein the imaging unit captures the second shelf image per predetermined time.
(8) The transmission device according to (7), further including:
   a battery that supplies a power supply voltage,
   wherein the imaging unit changes the predetermined time in accordance with a remaining battery charge of the battery.
(9) A reception device including:
   a reception processing unit that receives a partial image of a second shelf image that is cut out to include a difference region between a first shelf image, which is captured at a first time for a product shelf on which a product is displayed, and the second shelf image captured at a second time after the first time;
   an image recognition processing unit that performs image recognition processing on the partial image to recognize a state of the product; and
   a notification processing unit that executes notification processing according to the state of the product.
(10) The reception device according to (9), wherein the state of the product is a state related to the number of products.
(11) The reception device according to (9), wherein the state of the product is a state related to a posture of the product displayed.
(12) The reception device according to (9), wherein the state of the product is a state related to a display position.
(13) The reception device according to (9), wherein the state of the product is a state related to a price tag of the product.
(14) The reception device according to any one of (9) to (13), wherein
   the second shelf image is captured per predetermined time,
   the notification processing unit performs the notification processing for each the product and for each type of notification content, and
   the reception device further includes a counting processing unit that counts the number of times the notification processing has been performed for each the product and for each type of the notification content, and
   an instruction processing unit that gives an instruction to change the predetermined time in accordance with the number of times counted.
(15) The reception device according to any one of (9) to (14), further including:
   a display information generation unit that generates display information in which the notification content of the notification processing and the second shelf image are displayed; and
   a transmission processing unit that transmits the display information.
(16) The reception device according to (15), wherein the display information is information in which information on the number of displayed products is superimposed on each display region of each product in the second shelf image.
(17) The reception device according to (15) or (16), wherein the display information includes information for identifying group information that groups display sections in which the same product is displayed when the same product is displayed in different display sections in the product shelf.
(18) The reception device according to any one of (15) to (17), wherein the display information includes history information on the number of displayed products.
(19) An information processing method for causing a computer device to execute:
   processing for acquiring a first shelf image captured at a first time for a product shelf on which a product is displayed, and a second shelf image captured for the product shelf at a second time after the first time;
   processing for specifying a difference region between the first shelf image and the second shelf image;
   processing for cutting out a partial image from the second shelf image so that the difference region is included; and
   processing for transmitting the first shelf image and the partial image to a reception device.
(20) An information processing method for causing a computer device to execute:
   processing for receiving a partial image of a second shelf image that is cut out to include a difference region between a first shelf image, which is captured at a first time for a product shelf on which a product is displayed, and the second shelf image captured at a second time after the first time;
   processing for performing image recognition processing on the partial image to recognize a state of the product; and
   notification processing according to the state of the product.

### [Reference Signs List]

1 Cloud server
3, 3A, 3B Camera
38 Power supply unit (battery)
41 Imaging unit
F1 Image acquisition unit
F3 Region specification unit
F4 Cut-out processing unit
F5 Transmission processing unit
F11 Reception processing unit
F13 Image recognition processing unit
F14 Notification processing unit
F15 Counting processing unit
F16 Instruction processing unit
F21 Display information generation unit
F22 Transmission processing unit

## Claims

1. A transmission device comprising:
an image acquisition unit that acquires a first shelf image captured at a first time for a product shelf on which a product is displayed, and a second shelf image captured for the product shelf at a second time after the first time;
a region specification unit that specifies a difference region between the first shelf image and the second shelf image;
a cut-out processing unit that cuts out a partial image from the second shelf image so that the difference region is included; and
a transmission processing unit that transmits the first shelf image and the partial image to a reception device.

2. The transmission device according to claim 1, wherein
the region specification unit specifies location information on the difference region in the second shelf image, and
the transmission processing unit transmits the location information.

3. The transmission device according to claim 2, wherein the location information is coordinate information in the second shelf image.

4. The transmission device according to claim 2, wherein the location information is information for specifying a location where the product included in the difference region is displayed.

5. The transmission device according to claim 1, wherein the transmission processing unit compresses the first shelf image and the partial image and transmits them to the reception device.

6. The transmission device according to claim 1, wherein the image acquisition unit acquires the first shelf image again when it is determined that occlusion of the product displayed on the product shelf has occurred in the first shelf image.

7. The transmission device according to claim 1, further comprising:
an imaging unit that captures the first shelf image and the second shelf image,
wherein the imaging unit captures the second shelf image per predetermined time.

8. The transmission device according to claim 7, further comprising:
a battery that supplies a power supply voltage,
wherein the imaging unit changes the predetermined time in accordance with a remaining battery charge of the battery.

9. A reception device comprising:
a reception processing unit that receives a partial image of a second shelf image that is cut out to include a difference region between a first shelf image, which is captured at a first time for a product shelf on which a product is displayed, and the second shelf image captured at a second time after the first time;
an image recognition processing unit that performs image recognition processing on the partial image to recognize a state of the product; and
a notification processing unit that executes notification processing according to the state of the product.

10. The reception device according to claim 9, wherein the state of the product is a state related to the number of products.

11. The reception device according to claim 9, wherein the state of the product is a state related to a posture of the product displayed.

12. The reception device according to claim 9, wherein the state of the product is a state related to a display position.

13. The reception device according to claim 9, wherein the state of the product is a state related to a price tag of the product.

14. The reception device according to claim 9, wherein
the second shelf image is captured per predetermined time,
the notification processing unit performs the notification processing for each the product and for each type of notification content, and
the reception device further comprises a counting processing unit that counts the number of times the notification processing has been performed for each the product and for each type of the notification content, and
an instruction processing unit that gives an instruction to change the predetermined time in accordance with the number of times counted.

15. The reception device according to claim 9, further comprising:
a display information generation unit that generates display information in which the notification content of the notification processing and the second shelf image are displayed; and
a transmission processing unit that transmits the display information.

16. The reception device according to claim 15, wherein the display information is information in which information on the number of displayed products is superimposed on each display region of each product in the second shelf image.

17. The reception device according to claim 15, wherein the display information includes information for identifying group information that groups display sections in which the same product is displayed when the same product is displayed in different display sections in the product shelf.

18. The reception device according to claim 15, wherein the display information includes history information on the number of displayed products.

19. An information processing method for causing a computer device to execute:
processing for acquiring a first shelf image captured at a first time for a product shelf on which a product is displayed, and a second shelf image captured for the product shelf at a second time after the first time;
processing for specifying a difference region between the first shelf image and the second shelf image;
processing for cutting out a partial image from the second shelf image so that the difference region is included; and
processing for transmitting the first shelf image and the partial image to a reception device.

20. An information processing method for causing a computer device to execute:
processing for receiving a partial image of a second shelf image that is cut out to include a difference region between a first shelf image, which is captured at a first time for a product shelf on which a product is displayed, and the second shelf image captured at a second time after the first time;
processing for performing image recognition processing on the partial image to recognize a state of the product; and
notification processing according to the state of the product.
